(19) Europäisches Patentamt / European Patent Office / Office européen des brevets

(11) **EP 4 651 579 A1**

(12) **EUROPEAN PATENT APPLICATION**
published in accordance with Art. 153(4) EPC

(43) Date of publication:
**19.11.2025 Bulletin 2025/47**

(21) Application number: 24767432.8

(22) Date of filing: 07.03.2024

(51) International Patent Classification (IPC):
**H04W 52/02** (2009.01)     **H04W 72/11** (2023.01)
**H04W 72/12** (2023.01)     **H04W 72/232** (2023.01)
**H04W 76/28** (2018.01)     **H04B 7/06** (2006.01)
**H04B 7/08** (2006.01)

(52) Cooperative Patent Classification (CPC):
**H04B 7/06; H04B 7/08; H04W 52/02; H04W 72/11;
H04W 72/12; H04W 72/232; H04W 76/28**

(86) International application number:
**PCT/KR2024/002951**

(87) International publication number:
**WO 2024/186144 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 07.03.2023  KR 20230030208

(71) Applicant: Samsung Electronics Co., Ltd.
**Suwon-si, Gyeonggi-do 16677 (KR)**

(72) Inventors:
• **PARK, Sungjin**
  **Suwon-si Gyeonggi-do 16677 (KR)**
• **RYU, Hyunseok**
  **Suwon-si Gyeonggi-do 16677 (KR)**
• **LEE, Jaewon**
  **Suwon-si Gyeonggi-do 16677 (KR)**
• **CHOI, Seunghoon**
  **Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **BASE STATION POWER SAVING METHOD AND DEVICE IN WIRELESS COMMUNICATION SYSTEM**

(57)    The present disclosure relates to a 5G or 6G communication system for supporting higher data transmission rates. Specifically, the present disclosure relates to a method performed by a user equipment (UE) in a wireless communication system, the method comprising the steps of: receiving, from a base station, first configuration information associated with a semi-persistent scheduling (SPS) physical downlink shared channel (PDSCH) and second configuration information associated with cell discontinuous transmission (DTX), wherein the second configuration information includes information on an active duration in which the UE receives the SPS PDSCH; and receiving at least one SPS PDSCH from the base station, except for an SPS PDSCH which overlaps with a non-active duration based on the second configuration information, among one or more SPS PDSCHs based on the first configuration information.

| Base station | | UE |
|---|---|---|

Obtain downlink synchronization and system information (18-10)

Configure uplink synchronization and RRC connection (18-15)

Receive RRC parameter (18-20)

Receive path attenuation estimation signal (18-25)

Estimate downlink path attenuation value and configure uplink transmission power value (18-30)

Perform power headroom reporting (18-35)

Optimize system operation based on reported power headroom (18-40)

Receive TPC command (18-45)

Update transmission power based on TPC command (18-50)

Perform uplink transmission (18-55)

FIG.18

**Description**

[Technical Field]

The disclosure relates to a wireless communication system (or mobile communication system). Specifically, the disclosure relates to a method and a apparatus for power saving of a base station in a wireless communication system (or mobile communication system).

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure of Invention]

[Technical Problem]

Embodiments set forth herein are to provide a device and a method capable of effectively providing services in a mobile communication system.

[Solution to Problem]

An embodiment of the disclosure provides a method performed by a user equipment (UE) in a wireless communication system, the method including an operation of receiving, from a base station, first configuration information associated with a semi-persistent scheduling (SPS) physical downlink shared channel (PDSCH) and second configuration information associated with cell discontinuous transmission (DTX), wherein the second configuration information includes information on an active duration in which the UE receives the SPS PDSCH, and an operation of receiving, from the base station, at least one SPS PDSCH excluding an SPS PDSCH overlapping a non-active duration based on the second configuration information among one or more SPS PDSCHs based on the first configuration information.

An embodiment of the disclosure provides a method performed by a base station in a wireless communication system, the method including an operation of transmitting, to a UE, first configuration information associated with a semi-persistent scheduling (SPS) physical downlink shared channel (PDSCH) and second configuration information associated with cell discontinuous transmission (DTX), wherein the second configuration information includes information on an active duration in which the base station transmits the SPS PDSCH, and an operation of transmitting, to the UE, at least one SPS PDSCH excluding an SPS PDSCH overlapping a non-active duration based on the second configuration information among one or more SPS PDSCHs based on the first configuration information.

An embodiment of the disclosure provides a user equipment (UE) in a wireless communication system, the UE including a transceiver and a controller connected to the transceiver, wherein the controller may be configured to receive, from a base station, first configuration information associated with a semi-persistent scheduling (SPS) physical downlink shared channel (PDSCH) and second configuration information associated with cell discontinuous transmission (DTX), wherein the second configuration information includes information on an active duration in which the UE receives the SPS PDSCH, and receive. from the base station, at least one SPS PDSCH excluding an SPS PDSCH overlapping a non-active duration based on the second configuration information among one or more SPS PDSCHs based on the first configuration information.

An embodiment of the disclosure provides a base station in a wireless communication system, the base station including a transceiver and a controller connected to the transceiver, wherein the controller may be configured to transmit, to a UE, first configuration information associated with a semi-persistent scheduling (SPS) physical downlink shared channel (PDSCH) and second configuration information associated with cell discontinuous transmission (DTX), wherein the second configuration information includes information on an active duration in which the base station transmits the SPS PDSCH, and transmit, to the UE, at least one SPS PDSCH excluding an SPS PDSCH overlapping a non-active duration based on the second configuration information among one or more SPS PDSCHs based on the first configuration information.

[Advantageous Effects of Invention]

Embodiments set forth herein provide a device and a method capable of effectively providing services in a mobile communication system.

[Brief Description of Drawings]

FIG. 1 illustrates a basic structure of a time-frequency domain in a wireless communication system according to an embodiment of the disclosure.
FIG. 2 illustrates a structure of a frame, a subframe, and a slot in a wireless communication system according to an embodiment of the disclosure.
FIG. 3 illustrates an example of a bandwidth part configuration in a wireless communication system according to an embodiment of the disclosure.

FIG. 4 illustrates an example of a control resource set configuration of a downlink control channel in a wireless communication system according to an embodiment of the disclosure.

FIG. 5 illustrates a structure of a downlink control channel in a wireless communication system according to an embodiment of the disclosure.

FIG. 6 illustrates, in terms of spans, a case in which a UE may have multiple PDCCH monitoring occasions within a slot in a wireless communication system according to an embodiment of the disclosure.

FIG. 7 illustrates an example of base station beam allocation according to transmission configuration indicator (TCI) state configurations in a wireless communication system according to an embodiment of the disclosure.

FIG. 8 illustrates an example of a method for allocating a TCI state to a PDCCH in a wireless communication system according to an embodiment of the disclosure.

FIG. 9 illustrates a TCI indication medium access control (MAC) control element (CE) signaling structure for a PDCCH demodulation reference signal (DMRS) in a wireless communication system according to an embodiment of the disclosure.

FIG. 10 illustrates an example of a beam configuration with regard to a control resource set and a search space in a wireless communication system according to an embodiment of the disclosure.

FIG. 11 illustrates a method in which a base station and a UE transmit/receive data in consideration of a downlink data channel and a rate matching resource in a wireless communication system according to an embodiment of the disclosure.

FIG. 12 illustrates a method in which, upon receiving a downlink control channel, a UE selects a receivable control resource set in consideration of priority in a wireless communication system according to an embodiment of the disclosure.

FIG. 13 illustrates an example of an aperiodic channel state information (CSI) reporting method according to an embodiment of the disclosure.

FIG. 14 illustrates an example of physical uplink shared channel (PUSCH) repetition type B transmission in a wireless communication system according to an embodiment of the disclosure.

FIG. 15 illustrates radio protocol structures of a base station and a UE in single cell, carrier aggregation, and dual connectivity situations according to an embodiment of the disclosure.

FIG. 16 illustrates an example of an antenna port configuration and resource allocation for cooperative communication in a wireless communication system according to an embodiment of the disclosure.

FIG. 17 illustrates an example of a downlink control information (DCI) configuration for cooperative communication in a wireless communication system according to an embodiment of the disclosure.

FIG. 18 illustrates a procedure in which a base station controls transmission power of a UE in a cellular system according to an embodiment of the disclosure.

FIG. 19 is a view illustrating cell DTX and a period and duration of the cell DRX in a wireless communication system according to an embodiment of the disclosure.

FIG. 20 is a view illustrating a method for selecting a DL SPS to be received by a UE in a wireless communication system according to an embodiment of the disclosure.

FIG. 21 is a view illustrating an example of transmitting HARQ-ACK feedback in a situation where DL SPS resources are periodically allocated for each slot in a wireless communication system according to one embodiment of the present disclosure.

FIG. 22 is a view illustrating another example of transmitting HARQ-ACK feedback in a situation where DL SPS resources are periodically allocated for each slot in a wireless communication system according to one embodiment of the present disclosure.

FIG. 23 is a view illustrating still another example of transmitting HARQ-ACK feedback in a situation where DL SPS resources are periodically allocated for each slot in a wireless communication system according to one embodiment of the present disclosure.

FIG. 24 is a view illustrating an indication that a UE receives DCI information in a PDCCH resource in one slot, the DCI indicates HARQ-ACK information, and the DCI indicates that a PUCCH resource in which the HARQ-ACK information is to be retransmitted is in another slot in a wireless communication system according to one embodiment of the disclosure.

FIG. 25 illustrates a structure of a UE in a wireless communication system according to an embodiment of the disclosure.

FIG. 26 illustrates a structure of a base station in a wireless communication system according to an embodiment of the disclosure.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10$^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR time-frequency resources]

Hereinafter, a frame structure of a 5G system will be described in more detail with reference to the accompanying drawings.

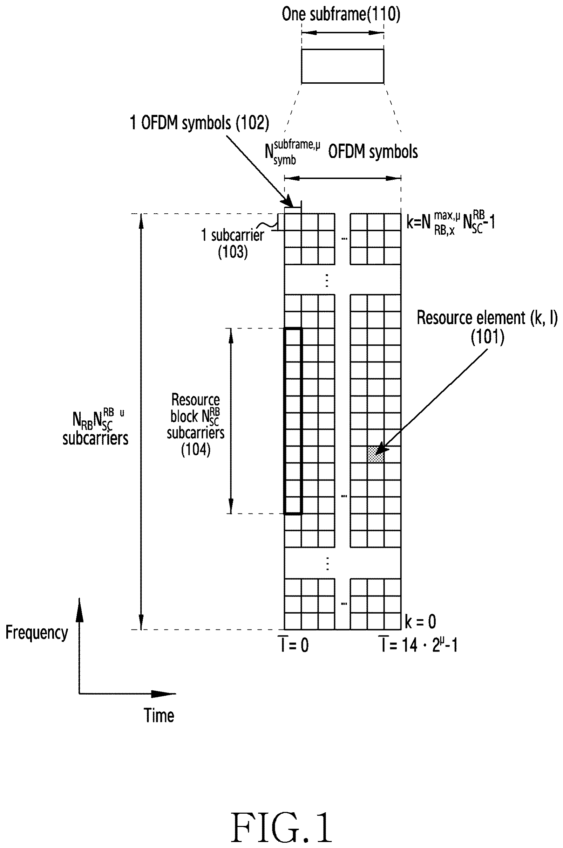

FIG. 1 illustrates a basic structure of a time-frequency domain in a wireless communication system according to an embodiment of the disclosure.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104.

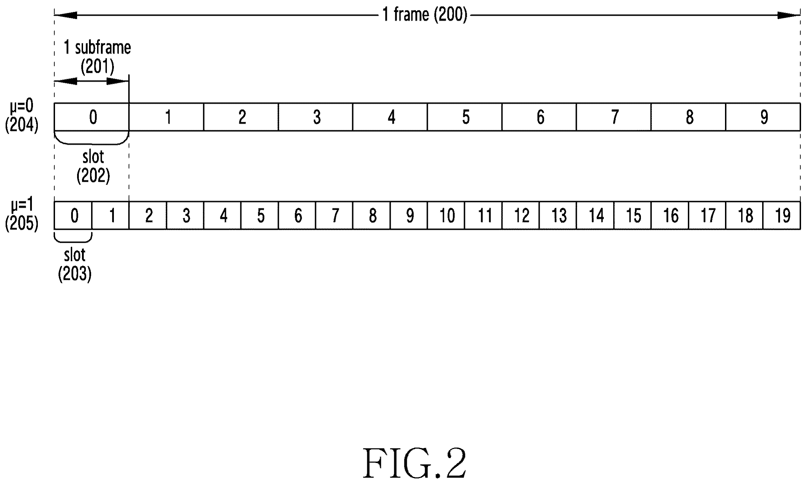

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu=0$ (204), and a case in which $\mu=1$ (205). In the case of $\mu=0$ (204), one subframe 201 may include one slot 202, and in the case of $\mu=1$ (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, a bandwidth part (BWP) configuration in a 5G communication system will be described in detail with reference to the accompanying drawings.

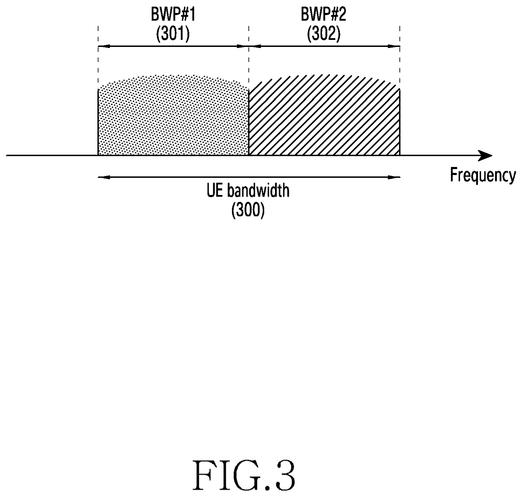

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given below.

[Table 2]

```
BWP ::=                      SEQUENCE {

    bwp-Id                   BWP-Id,
     (bandwidth part identifier)
    locationAndBandwidth     INTEGER (1..65536),
    (bandwidth part location)
    subcarrierSpacing        ENUMERATED {n0, n1, n2, n3, n4, n5},
    (subcarrier spacing)
    cyclicPrefix             ENUMERATED { extended }
    (cyclic prefix)

    }
```

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource set #0 through the MIB. In addition, the base station may notify the UE of configuration information regarding the monitoring periodicity and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

[Bandwidth part (BWP) change]

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be

## EP 4 651 579 A1

defined as given below, for example.

[Table 3]

| $\mu$ | NR Slot length (ms) | BWP switch delay $T_{BWP}$ (slots) | |
| --- | --- | --- | --- |
| | | Type 1 Note1 | Type 2 Note 1 |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. Note 2: If the BWP switch involves changing of SCS, the BWP switch delay is determined by the larger one between the SCS before BWP switch and the SCS after BWP switch. | | | |

The requirements for the bandwidth part change delay time may support type 1 or type 2, depending on the capability of the UE. The UE may report the supportable bandwidth part change delay time type to the base station. If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot $n+T_{BWP}$, and may transmit/receive a data channel scheduled by the corresponding DCI in the newly changed bandwidth part. According to an embodiment, if the base station wants to schedule a data channel by using the new bandwidth part, the base station may determine time domain resource allocation regarding the data channel, based on the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[SS/PBCH block]

Next, synchronization signal (SS)/PBCH blocks in 5G will be described.

An SS/PBCH block may refer to a physical layer channel block including a primary synchronization signal (PSS), a secondary synchronization signal (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5ms, and each transmitted SS/PBCH block may be distinguished by an index.

The UE may detect the PSS and the SSS in the initial access stage, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

[PDCCH: regarding DCI]

Next, downlink control information (DCI) in a 5G system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information, for example.

[Table 4]

| |
|---|
| - Identifier for DCI formats - [1] bit<br>- Frequency domain resource assignment-<br><br>$[ \left\lceil \log_2(N_{RB}^{UL,BWP}(N_{RB}^{UL,BWP}+1)/2) \right\rceil ]$ bits<br><br>- Time domain resource assignment - X bits<br>- Frequency hopping flag - 1 bit.<br>- Modulation and coding scheme - 5 bits<br>- New data indicator - 1 bit<br>- Redundancy version - 2 bits<br>- HARQ process number - 4 bits<br>- Transmit power control (TPC) command for scheduled PUSCH - [2] bits<br>- Uplink/ supplementary uplink (UL/SUL) indicator - 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information, for example.

[Table 5]

| |
|---|
| - Carrier indicator - 0 or 3 bits<br> - UL/SUL indicator - 0 or 1 bit |

(continued)

- Identifier for DCI formats - [1] bits
- Bandwidth part indicator - 0, 1 or 2 bits
- Frequency domain resource assignment

$$* \text{ For resource allocation type 0, } \left\lceil N_{\text{RB}}^{\text{UL,BWP}} / P \right\rceil \text{ bits}$$

$$* \text{ For resource allocation type 1, } \left\lceil \log_2 \left( N_{\text{RB}}^{\text{UL,BWP}} \left( N_{\text{RB}}^{\text{UL,BWP}} + 1 \right) / 2 \right) \right\rceil \text{ bits}$$

- Time domain resource assignment -1, 2, 3, or 4 bits
- Virtual resource block (VRB)-to-physical resource block (PRB) mapping - 0 or 1 bit, only for resource allocation type 1.
  * 0 bit if only resource allocation type 0 is configured;
  * 1 bit otherwise.
- Frequency hopping flag - 0 or 1 bit, only for resource allocation type 1.
  * 0 bit if only resource allocation type 0 is configured;
- beta_offset indicator - 0 or 2 bits
- DMRS sequence initialization - 0 or 1 bit
  * 1 bit otherwise.
- Modulation and coding scheme - 5 bits
- New data indicator - 1 bit
- Redundancy version - 2 bits
- HARQ process number - 4 bits
- 1st downlink assignment index- 1 or 2 bits

---

  * 1 bit for semi-static HARQ-ACK codebook;
  * 2 bits for dynamic HARQ-ACK codebook with single HARQ-ACK codebook.
- 2nd downlink assignment index - 0 or 2 bits
  * 2 bits for dynamic HARQ-ACK codebook with two HARQ-ACK sub-codebooks;
  * 0 bit otherwise.
- TPC command for scheduled PUSCH - 2 bits

$$- \text{ SRS resource indicator - } \left\lceil \log_2 \left( \sum_{k=1}^{L_{\text{max}}} \binom{N_{\text{SRS}}}{k} \right) \right\rceil \text{ or } \left\lceil \log_2 \left( N_{\text{SRS}} \right) \right\rceil \text{ bits}$$

$$* \left\lceil \log_2 \left( \sum_{k=1}^{L_{\text{max}}} \binom{N_{\text{SRS}}}{k} \right) \right\rceil \text{ bits for non-codebook based PUSCH transmission;}$$

$$* \left\lceil \log_2 \left( N_{\text{SRS}} \right) \right\rceil \text{ bits for codebook based PUSCH transmission.}$$

- Precoding information and number of layers - up to 6 bits
- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DDMRS) association - 0 or 2 bits.
- beta_offset indicator - 0 or 2 bits
- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information, for example.

[Table 6]

- Identifier for DCI formats - [1] bit

- Frequency domain resource assignment - $\left[\left\lceil \log_2(N_{\text{RB}}^{\text{DL,BWP}}(N_{\text{RB}}^{\text{DL,BWP}}+1)/2)\right\rceil\right]$ bits

- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information, for example.

[Table 7]

- Carrier indicator - 0 or 3 bits
- Identifier for DCI formats - [1] bits
- Bandwidth part indicator - 0, 1 or 2 bits
- Frequency domain resource assignment

    * For resource allocation type 0, $\left\lceil N_{\text{RB}}^{\text{DL,BWP}}/P \right\rceil$ bits

    * For resource allocation type 1, $\left\lceil \log_2(N_{\text{RB}}^{\text{DL,BWP}}(N_{\text{RB}}^{\text{DL,BWP}}+1)/2)\right\rceil$ bits

- Time domain resource assignment -1, 2, 3, or 4 bits
- VRB-to-PRB mapping - 0 or 1 bit, only for resource allocation type 1.
    * 0 bit if only resource allocation type 0 is configured;
    * 1 bit otherwise.
- Physical resource block (PRB) bundling size indicator - 0 or 1 bit
- Rate matching indicator - 0, 1, or 2 bits
- Zero power (ZP) channel state information (CSI)-reference signal (RS) trigger 0, 1, or 2 bits
For transport block 1:
- Modulation and coding scheme - 5 bits
- New data indicator - 1 bit

- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits
- CBG transmission information - 0, 2, 4, 6, or 8 bits
- CBG flushing out information - 0 or 1 bit
- DMRS sequence initialization - 1 bit

[PDCCH: CORESET, REG, CCE, and Search Space]

Hereinafter, a downlink control channel in a 5G communication system will be described in more detail with reference to the accompanying drawings.

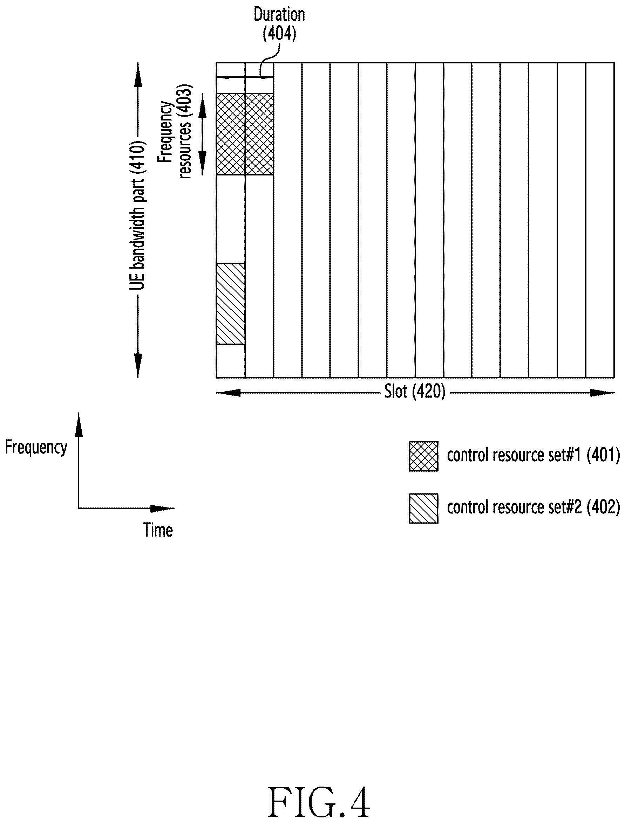

FIG. 4 illustrates an example of control resource set configuration of a downlink control channel in a wireless communication system according to an embodiment of the disclosure. FIG. 4 illustrates an example in which a UE bandwidth part 410 is configured along the frequency axis, and two control resource sets (control resource set #1 420 and control resource set #2 401) are configured within one slot 402 along the time axis. The control resource sets 401 and 402 may be configured in a specific frequency resource 410 within the entire UE bandwidth part 403 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through upper layer signaling (for example, system information, master information block (MIB), radio resource control (RRC)signaling). The description that a control resource set is configured for a UE means that information such as a control resource set identity, the control resource set's frequency location, and the control resource set's symbol duration is provided. For example, the following pieces of information may be included.

[Table 8]

```
ControlResourceSet ::=                    SEQUENCE {
    -- Corresponds to L1 parameter 'CORESET-ID'


    controlResourceSetId              ControlResourceSetId,
    (control resource set identity))
    frequencyDomainResources          BIT STRING (SIZE (45)),
    (frequency domain resource assignment information)
    duration                          INTEGER (1..maxCoReSetDuration),
    (time domain resource assignment information )
    cce-REG-MappingType                       CHOICE {
    (CCE-to-REG mapping scheme)
        interleaved                       SEQUENCE {


            reg-BundleSize                    ENUMERATED {n2, n3, n6},
        (REG bundle size)
```

```
                    precoderGranularity                    ENUMERATED
        {sameAsREG-bundle, allContiguousRBs},
```

```
                    interleaverSize                        ENUMERATED
        {n2, n3, n6}
                    (interleaver size)


                    shiftIndex
        INTEGER(0..maxNrofPhysicalResourceBlocks-1)    OPTIONAL
                    (interleaver shift)
            },
        nonInterleaved                                 NULL
        },
        tci-StatesPDCCH                                SEQUENCE(SIZE
    (1..maxNrofTCI-StatesPDCCH)) OF TCI-StateId
        OPTIONAL,
            (QCL configuration information)
        tci-PresentInDCI                               ENUMERATED {enabled}
            OPTIONAL,       -- Need S
        }
```

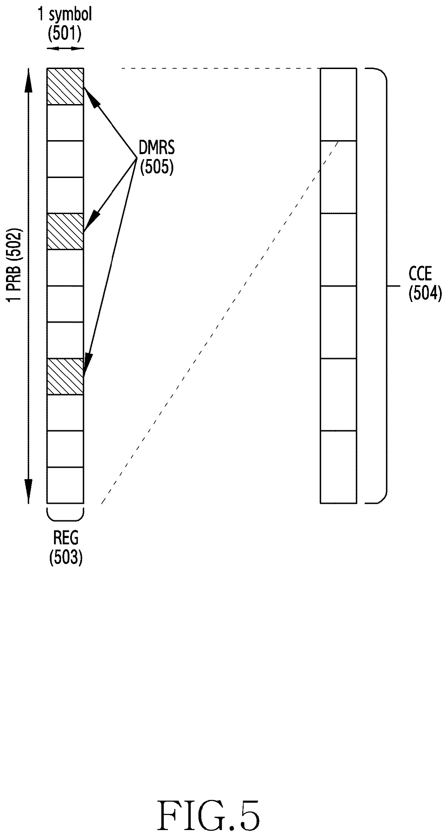

In Table 8, tci-StatesPDCCH(simply referred to as transmission configuration indication (TCI) state) configuration information may include information of one or multiple SS/PBCH block indexes or channel state information reference signal (CSI-RS) indexes, which are quasi-co-located (QCLed) with a DMRS transmitted in a corresponding control resource set. FIG. 5 illustrates a structure of a downlink control channel in a wireless communication system according to an embodiment of the disclosure. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the following pieces of information may be included.

[Table 9]

| SearchSpace ::= SEQUENCE { |
| --- |
| -- Identity of the search space. SearchSpaceId = 0 identifies the SearchSpace configured via PBCH (MIB) or ServingCellConfigCommon. |

```
    searchSpaceId                              SearchSpaceId,
    (search space identity)
    controlResourceSetId                       ControlResourceSetId,
    (control resource set identity)
    monitoringSlotPeriodicityAndOffset         CHOICE {
    (monitoring slot level periodicity)
        sl1                                        NULL,
        sl2                                        INTEGER (0..1),
        sl4                                        INTEGER (0..3),
        sl5                                    INTEGER (0..4),
        sl8                                        INTEGER (0..7),
        sl10                                       INTEGER (0..9),
        sl16                                       INTEGER (0..15),
```

```
        sl20                                   INTEGER (0..19)
        }
    OPTIONAL,
        duration(monitoring duration)          INTEGER (2..2559)
        monitoringSymbolsWithinSlot            BIT STRING (SIZE (14))
    OPTIONAL,
        (monitoring symbols within slot)
        nrofCandidates                         SEQUENCE {
    (number of PDCCH candidates for each aggregation level)
            aggregationLevel1                      ENUMERATED {n0, n1, n2, n3, n4, n5,
n6, n8},
            aggregationLevel2                      ENUMERATED {n0, n1, n2, n3, n4, n5,
n6, n8},
            aggregationLevel4                      ENUMERATED {n0, n1, n2, n3, n4, n5,
n6, n8},
            aggregationLevel8                      ENUMERATED {n0, n1, n2, n3, n4, n5,
n6, n8},
            aggregationLevel16                     ENUMERATED {n0, n1, n2, n3, n4,
n5, n6, n8}
        },
```

```
    searchSpaceType                        CHOICE {
    (search space type)
        -- Configures this search space as common search space (CSS) and DCI
formats to monitor.
```

```
                    common                          SEQUENCE {

              (common search space)

                       }

                  ue-Specific                       SEQUENCE {

              (UE-specific search space)

                        -- Indicates whether the UE monitors in this USS for DCI formats

         0-0 and 1-0 or for formats 0-1 and 1-1.

                    formats                          ENUMERATED

         {formats0-0-And-1-0, formats0-1-And-1-1},

                        ...

                       }
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2. According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS
The DCI formats enumerated above may follow the definitions given below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM sy mbol(s) where UE may assume no transmission is inten ded for the UE |
| 2_2 | Transmission of TPC commands for PUCCH and PUSC H |
| 2_3 | Transmission of a group of TPC commands for SRS tra nsmissions by one or more UEs |

In 5G, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- *L*: aggregation level
- $n_{CI}$: carrier index
- $N_{CCE,p}$: total number of CCEs existing in control resource set *p*
- $n_{s,f}^{\mu}$ : slot index
- $M_{s,max}^{(L)}$ : number of PDCCH candidates at aggregation level L
- $m_{s,n_{CI}} = 0, ..., M_{s,max}^{(L)} - 1$ : PDCCH candidate index at aggregation level L
- *i* = 0, ..., *L* -1
- $Y_{p,n_{s,f}^{\mu}} = \left( A_p \cdot Y_{p,n_{s,f}^{\mu}-1} \right) mod D$ , $Y_{p,-1} = n_{RNTI} \neq 0$, $A_p = 39827$ *for pmod*3 = 0, $A_p = 39829$ *for pmod*3 = 1, $A_p = 39839$ *for pmod*3 = 2, *D* = 65537
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 10), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

[PDCCH: span]

The UE may perform UE capability reporting at each subcarrier spacing with regard to a case in which the same has multiple PDCCH monitoring occasions inside a slot, and the concept "span" may be used in this regard. A span refers to consecutive symbols configured such that the UE can monitor the PDCCH inside the slot, and each PDCCH monitoring occasion is inside one span. A span may be expressed by (X,Y) wherein X refers to the minimum number of symbols by which the first symbols of two consecutive spans are spaced apart from each other, and Y refers to the number of consecutive symbols in which a PDCCH can be monitored within one span. Here, a UE may monitor a PDCCH in a range of Y symbols from the first symbol of the span within the span.

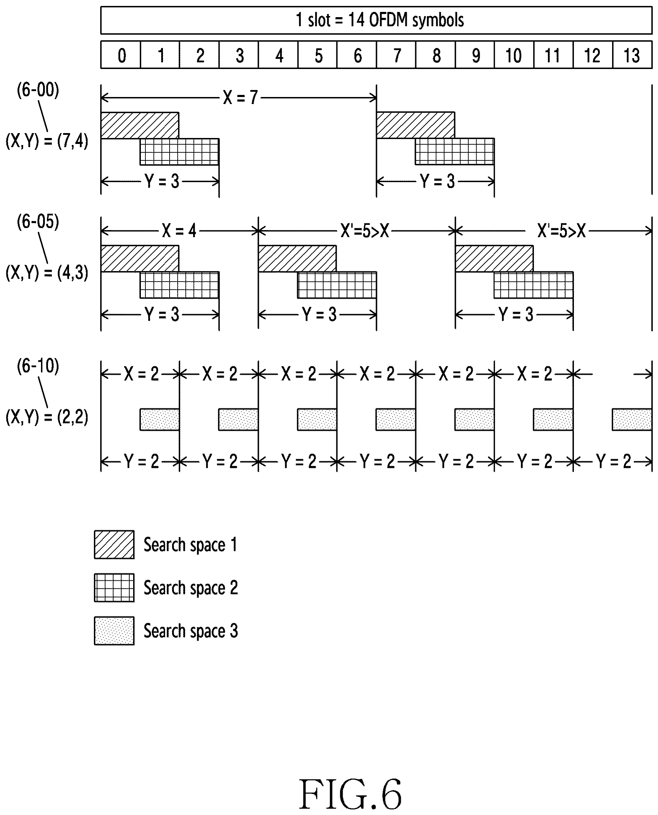

FIG. 5B illustrates, in terms of spans, a case in which a UE may have multiple physical downlink control channel (PDCCH) monitoring occasions inside a slot in a wireless communication system according to an embodiment of the disclosure. Possible spans are (X,Y) = (7,3), (4,3), (2,2), and the three cases may be indicated by "6-00", "6-05", and "6-10" in FIG. 6, respectively. As an example, "6-00" may describe a case in which there are two spans described by (7,4) inside a slot. The spacing between the first symbols of two spans is described as X=7, a PDCCH monitoring occasion may exist inside a total of Y=3 symbols from the first symbol of each span, and search spaces 1 and 2 may exist inside Y=3 symbols, respectively. As another example, "6-05" may describe a case in which there are a total of three spans described by (4,3) inside a slot, and the second and third spans are spaced apart by X'=5 symbols which are larger than X=4.

[PDCCH: UE capability report]

The slot location at which the above-described common search space and the UE-specific search space are positioned is indicated by parameter "monitoringSymbolsWitninSlot" in Table 13-1, and the symbol location inside the slot is indicated as a bitmap through parameter "monitoringSymbolsWithinSlot" in Table 9. Meanwhile, the symbol location inside a slot at which the UE can monitor search spaces may be reported to the base station through the following UE capabilities.

[0079] - UE capability 1(hereinafter referred to as FG 3-1). This UE capability may have the following meaning: if there is one monitoring occasion (MO) regarding type 1and type 3 common search spaces or UE-specific search spaces inside a slot, asin Table 11 below, the UE can monitor the corresponding MO when the corresponding MO is located inside the first three symbols inside the slot. This UE capability is a mandatory capability which is to be supported by all UEs that support NR, and whether or not this UE capability is supported is not explicitly reported to the base station.

[Table 11]

| Index | Feature group | Components | Field name in TS 38.331 [2] |
|---|---|---|---|
| 3-1 | Basic DL control channel | 1) One configured CORESET per BWP per cell in addition to CORESET0<br>- CORESET resource allocation of 6RB bit-map and duration of 1 - 3 OFDM sym-bols for FR1<br>- For type 1 CSS without dedicated RRC configuration and for type 0, 0A, and 2 CSSs, CORESET resource allocation of 6RB bit-map and duration 1-3 OFDM sym-bols for FR2<br>- For type 1 CSS with dedicated RRC configuration and for type 3 CSS, UE specific SS, CORESET resource allocation of 6RB bit-map and duration 1-2 OFDM symbols for FR2<br>- REG-bundle sizes of 2/3 RBs or 6 RBs<br>- Interleaved and non-interleaved CCE-to-REG mapping<br>- Precoder-granularity of REG-bundle size<br>- PDCCH DMRS scrambling determination<br>- TCI state(s) for a CORESET configuration<br>2) CSS and UE-SS configurations for unicast PDCCH transmission per BWP per cell<br>- PDCCH aggregation levels 1, 2, 4, 8, 16<br>- UP to 3 search space sets in a slot for a scheduled SCell per BWP<br>This search space limit is before applying all dropping rules.<br>- For type 1 CSS with dedicated RRC configuration, type 3 CSS, and UE-SS, the monitoring occasion is within the first 3 OFDM symbols of a slot | n/a |

(continued)

| Index | Feature group | Components | Field name in TS 38.331 [2] |
|---|---|---|---|
| | | - For type 1 CSS without dedicated RRC configuration and for type 0, 0A, and 2 CSS, the monitoring occasion can be any OFDM symbol(s) of a slot, with the monitoring occasions for any of Type 1- CSS without dedicated RRC configuration, or Types 0, 0A, or 2 CSS configurations within a single span of three consecutive OFDM symbols within a slot<br><br>3) Monitoring DCI formats 0_0, 1_0, 0_1, 1_1<br><br>4) Number of PDCCH blind decodes per slot with a given SCS follows Case 1-1 table<br><br>5) Processing one unicast DCI scheduling DL and one unicast DCI scheduling UL per slot per scheduled CC for FDD<br><br>6) Processing one unicast DCI scheduling DL and 2 unicast DCI scheduling UL per slot per scheduled CC for TDD | |

- UE capability 2(hereinafter referred to as FG 3-2). This UE capability has the following meaning: if there is one monitoring occasion (MO) regarding a common search space or a UE-specific search space inside a slot, as in Table 12 below, the UE can monitor the corresponding MO no matter what of the startsymbo1 location of the corresponding MO may be. This UE capability is optionally supported by the UE, and whether or not this UE capability is supported is explicitly reported to the base station.

[Table 12]

| Index | Feature group | Components | Field name in TS 38.331 [2] |
|---|---|---|---|
| 3-2 | PDCCH monitori ng on any span of up to 3 consecut ive OFDM symbols of a slot | For a given UE, all search space configurations are within the same span of 3 consecutive OFDM symbols in the slot | *pdcchMonitoringSingleOccasion* |

[0080]    - UE capability 3(hereinafter, referred to as FG 3-5, 3-5a, or 3-5b). This UE capability has the following meaning: if there are multiple monitoring occasions (MO) regarding a common search space or a UE-specific search space inside a slot, as in Table 13 below, the pattern of the MO which the UE can monitor is indicated. The above-mentioned pattern includes the spacing X between start symbols of different MOs, and the maximum symbol length Y regarding one MO. The combination of (X,Y) supported by the UE may be one or multiple among {(2,2), (4,3), (7,3)}. This UE capability is optionally supported by the UE, and whether or not this UE capability is supported and the above-mentioned combination of (X,Y) are explicitly reported to the base station.

[Table 13]

| Index | Feature group | Components | Field name in TS 38.331 [2] |
|---|---|---|---|
| 3-5 | For type 1 CSS with dedicated RRC configuration, type 3 CSS, and UE-SS, monitoring occasion can be any OFDM symbol(s) of a slot for Case 2 | For type 1 CSS with dedicated RRC configuration, type 3 CSS, and UE-SS, monitoring occasion can be any OFDM symbol(s) of a slot for Case 2 | *pdcch-MonitoringAnyOccasions { 3-5. withoutDCI-Gap 3-5a. withDCI-Gap }* |
| | | | |
| 3-5a | For type 1 CSS with dedicated RRC configuration, type 3 CSS, and UE-SS, monitoring occasion can be any OFDM symbol(s) of a slot for Case 2 with a DCI gap | For type 1 CSS with dedicated RRC configuration, type 3 CSS and UE-SS, monitoring occasion can be any OFDM symbol(s) of a slot for Case 2, with minimum time separation (including the cross-slot boundary case) between two DL unicast DCIs, between two UL unicast DCIs, or between a DL and an UL unicast DCI in different monitoring occasions where at least one of them is not the monitoring occasions of FG-3-1, for a same UE as<br>- 2OFDM symbols for 15kHz<br>- 4OFDM symbols for 30kHz<br>- 7OFDM symbols for 60kHz with NCP<br>- 110FDM symbols for 120kHz<br>Up to one unicast DL DCI and up to one unicast UL DCI in a monitoring occasion except for the monitoring occasions of FG 3-1. | |
| | | | |
| | | In addition for TDD the minimum separation between the first two UL unicast DCIs within the first 3 OFDM symbols of a slot can be zero OFDM symbols. | |
| | | | |
| 3-5b | All PDCCH monitoring occasion can be any OFDM symbol(s) of a slot for Case 2 with a span gap | PDCCH monitoring occasions of FG-3-1, plus additional PDCCH monitoring occasion(s) can be any OFDM symbol(s) of a slot for Case 2, and for any two PDCCH monitoring occasions belonging to different spans, where at least one of them is not the monitoring occasions of FG-3-1, in same or different search spaces, there is a minimum time separation of X OFDM symbols (including the cross-slot boundary case) between the start of two spans, where each span is of length up to Y consecutive OFDM symbols of a slot. | |
| | | | |

(continued)

| Index | Feature group | Components | Field name in TS 38.331 [2] |
|---|---|---|---|
| | | Spans do not overlap. Every span is contained in a single slot. The same span pattern repeats in every slot. The separation between consecutive spans within and across slots may be unequal but the same (X, Y) limit must be satisfied by all spans. | |
| | | | |
| | | Every monitoring occasion is fully contained in one span. In order to determine a suitable span pattern, first a bitmap b(1), 0<=1<=13 is generated, where b(1)=1 if symbol 1 of any slot is part of a monitoring occasion, b(1)=0 otherwise. The first span in span pattern begins at the smallest 1 for which b(1)=1. The next span in the span pattern begins at the smallest 1 not included in the previous span(s) for which b(1)=1. The span duration is max { maximum value of all CORESET durations, minimum value of Y in the UE reported candidate value} except possibly the last span in a slot which can be of shorter duration. A particular PDCCH monitoring configuration meets the UE capability limitation if the span arrangement satisfies the gap separation for at least one (X, Y) in the UE reported candidate value set in every slot, including cross slot boundary. | |
| | | | |
| | | For the set of monitoring occasions which are within the same span: | |
| | | | |
| | | • Processing one unicast DCI scheduling DL and one unicast DCI scheduling UL per scheduled CC across this set of monitoring occasions for FDD<br>• Processing one unicast DCI scheduling DL and two unicast DCI scheduling UL per scheduled CC across this set of monitoring occasions for TDD | |
| | | | |
| | | • Processing two unicast DCI scheduling DL and one unicast DCI scheduling UL per scheduled CC across this set of monitoring occasions for TDD<br>The number of different start symbol indices of spans for all PDCCH monitoring occasions per slot, including PDCCH monitoring occasions of FG-3-1, is no more than floor(14/X) (X is minimum among values reported by UE). The number of different start symbol indices of PDCCH monitoring occasions per slot including PDCCH monitoring occasions of FG-3-1, is no more than 7. | |
| | | | |
| | | The number of different start symbol indices of PDCCH monitoring occasions per half-slot including PDCCH monitoring occasions of FG-3-1 is no more than 4 in SCell. | |

The UE may report whether the above-described capability 2 and/or capability 3 are supported and relevant parameters to the base station. The base station may allocate time-domain resources to the common search space and the UE-specific search space, based on the UE capability report. During the resource allocation, the base station may ensure that the MO is not positioned not at a location at which the UE cannot monitor the same.

[QCL, TCI state]

In a wireless communication system, one or more different antenna ports (which may be replaced with one or more channels, signals, and combinations thereof, but in the following description of the disclosure, will be referred to as different antenna ports, as a whole, for the sake of convenience) may be associated with each other by a quasi-co-location (QCL) configuration as in Table 14 below. A TCI state is for announcing the QCL relation between a PDCCH (or a PDCCH DRMS) and another RS or channel, and the description that a reference antenna port A (reference RS #A) and another target antenna port B (target RS #B) are QCLed with each other means that the UE is allowed to apply some or all of large-scale channel parameters estimated in the antenna port A to channel measurement form the antenna port B. The QCL needs to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relations are supported in NR as in Table 3 below.

[Table 14]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

The QCL relations may be configured for the UE through RRC parameter TCI-state and QCL-info as in Table 15 below. Referring to Table 15, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) included in each TCI state includes the serving cell index and the BWP index of the reference RS indicated by the corresponding QCL information, the type and ID of the reference RS, and a QCL type as in Table 14 above.

[Table 15]

```
TCI-State ::=                    SEQUENCE {
    tci-StateId                      TCI-StateId,
    (ID of corresponding TCI state)
    qcl-Type1                        QCL-Info,
    (QCL information of first refernece RS of RS (target RS) referring to corresponding
TCI state ID)
    qcl-Type2              QCL-Info              OPTIONAL,     -
- Need R
    (QCL information of second refernece RS of RS (target RS) referring to corresponding
TCI state ID)
    ...
}

QCL-Info ::=                    SEQUENCE {
    cell                   ServCellIndex              OPTIONAL,     --
Need R
    (serving cell index of reference RS indicated by corresponding QCL information)
    bwp-Id                           BWP-Id              OPTIONAL, --
Cond CSI-RS-Indicated
    (BWP index of reference RS indicated by corresponding QCL information)
    referenceSignal            CHOICE {
        csi-rs                          NZP-CSI-RS-ResourceId,
```

```
        ssb                             SSB-Index
        (one of CSI-RS ID or SSB ID indicated by corresponding QCL information)
    },
    qcl-Type                      ENUMERATED {typeA, typeB, typeC,
typeD},
    ...
}
```

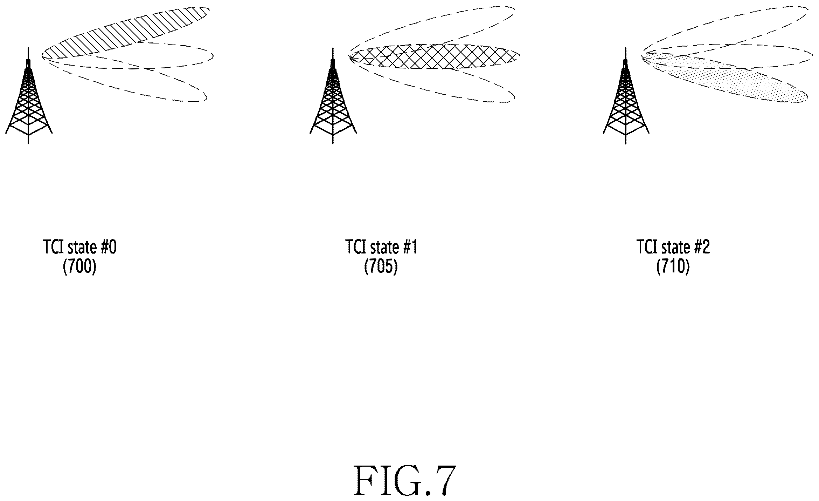

FIG. 7 illustrates an example of base station beam allocation according to transmission configuration indicator (TCI) state configurations in a wireless communication system according to an embodiment of the disclosure. Referring to FIG. 7, the base station may transfer information regarding N different beams to the UE through N different TCI states. For example, in the case of N=3 as in FIG. 7, the base station may configure qcl-Type2 parameters included in three TCI states 700, 705, and 710 in QCL type D while being associated with CSI-RSs or SSBs corresponding to different beams, thereby notifying that antenna ports referring to the different TCI states 700, 705, and 710 are associated with different spatial Rx parameters, that is, different beams. Tables 16 to 20 below enumerate valid TCI state configurations according to the target antenna port type.

Table 16 enumerates valid TCI state configurations when the target antenna port is a CSI-RS for tracking (TRS). The TRS refers to an NZP CSI-RS which has no repetition parameter configured therefor, and trs-Info of which is configured as "true", among CRI-RSs. In Table 16, configuration no. 3 may be used for an aperiodic TRS.

[Table 16] Valid TCI state configurations when the target antenna port is a CSI-RS for tracking (TRS)

| [Table 16] | | | | |
|---|---|---|---|---|
| **Valid TCI state Configuration** | **DL RS 1** | **qcl-Type1** | **DL RS 2 (If configured)** | **qcl-Type2 (If configured)** |
| 1 | SSB | QCL-TypeC | SSB | QCL-TypeD |
| 2 | SSB | QCL-TypeC | CSI-RS (BM) | QCL-TypeD |

(continued)

| [Table 16] | | | | |
|---|---|---|---|---|
| Valid TCI state Configuration | DL RS 1 | qcl-Type1 | DL RS 2 (If configured) | qcl-Type2 (If configured) |
| 3 | TRS (periodic) | QCL-TypeA | TRS (same as DL RS 1) | QCL-TypeD |

Table 17 enumerates valid TCI state configurations when the target antenna port is a CSI-RS for CSI. The CSI-RS for CSI refers to an NZP CSI-RS which has no parameter indicating repetition (for example, repetition parameter) configured therefor, and trs-Info of which is not configured as "true", among CRI-RSs.

[Table 17] Valid TCI state configurations when the target antenna port is a CSI-RS for CSI

| [Table 17] | | | | |
|---|---|---|---|---|
| Valid TCI state Configuration | DL RS 1 | qcl-Type1 | DL RS 2 (If configured) | qcl-Type2 (If configured) |
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 18 enumerates valid TCI state configurations when the target antenna port is a CSI-RS for beam management (BM) (which has the same meaning as CSI-RS for L1 RSRP reporting). The CSI-RS for BM refers to an NZP CSI-RS which has a repetition parameter configured to have a value of "on" or "off", and trs-Info of which is not configured as "true", among CRI-RSs.

[Table 18] Valid TCI state configurations when the target antenna port is a CSI-RS for BM (for L1 RSRP reporting)

| [Table 18] | | | | |
|---|---|---|---|---|
| Valid TCI state Configuration | DL RS 1 | qcl-Type1 | DL RS 2 (If configured) | qcl-Type2 (If configured) |
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 19 enumerates valid TCI state configurations when the target antenna port is a PDCCH DMRS.

[Table 19] Valid TCI state configurations when the target antenna port is a PDCCH DMRS

| [Table 19] | | | | |
|---|---|---|---|---|
| Valid TCI state Configuration | DL RS 1 | qcl-Type1 | DL RS 2 (If configured) | qcl-Type2 (If configured) |
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 20 enumerates valid TCI state configurations when the target antenna port is a PDSCH DMRS.

[Table 20] Valid TCI state configurations when the target antenna port is a PDSCH DMRS

[Table 20]

| Valid TCI state Configuration | DL RS 1 | qcl-Typel | DL RS 2 (If configured) | qcl-Type2 (If configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

According to a representative QCL configuration method based on Tables 16 to 20 above, the target antenna port and reference antenna port for each step are configured and operated such as "SSB" -> "TRS" -> "CSI-RS for CSI, or CSI-RS for BM, or PDCCH DMRS, or PDSCH DMRS". Accordingly, it is possible to help the UE's receiving operation by associating statistical characteristics that can be measured from the SSB and TRS with respective antenna ports.

[PDCCH: regarding TCI state]

Specific TCI state combinations applicable to a PDCCH DMRS antenna port may be given in Table 21 below. The fourth row in Table 21 corresponds to a combination assumed by the UE before RRC configuration, and no configuration is possible after the RRC.

[Table 21]

| Valid TCI state Configuration | DL RS 1 | qcl-Typel | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

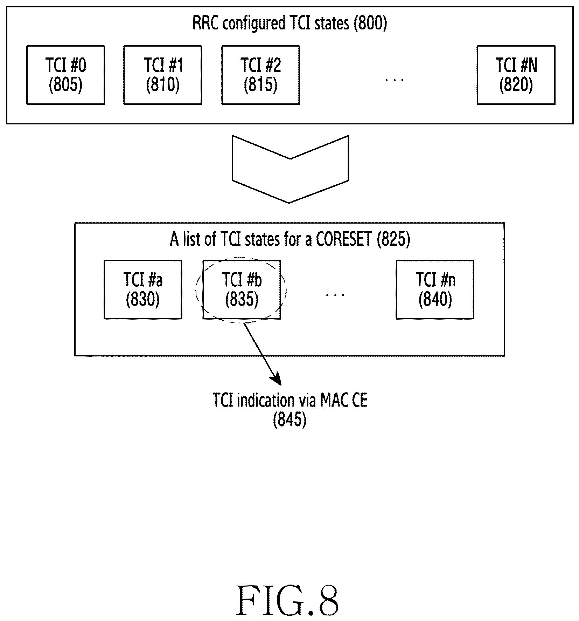

FIG. 8 illustrates an example of a method for allocating a TCI state to a PDCCH in a wireless communication system according to an embodiment of the disclosure. In NR, a hierarchical signaling method as illustrated in FIG. 8 is supported for dynamic allocation regarding a PDCCH beam. Referring to FIG. 8, the base station may configure N TCI states 805, 810, ..., 820 for the UE through RRC signaling 800, and may configure some of the states as TCI states for a CORESET (825). The base station may then indicate one of the TCI states 830, 835, and 840 for the CORESET to the UE through medium access control (MAC) control element (CE) signaling (845). The UE may then receive a PDCCH, based on beam information included in the TCI state indicated by the MAC CE signaling.

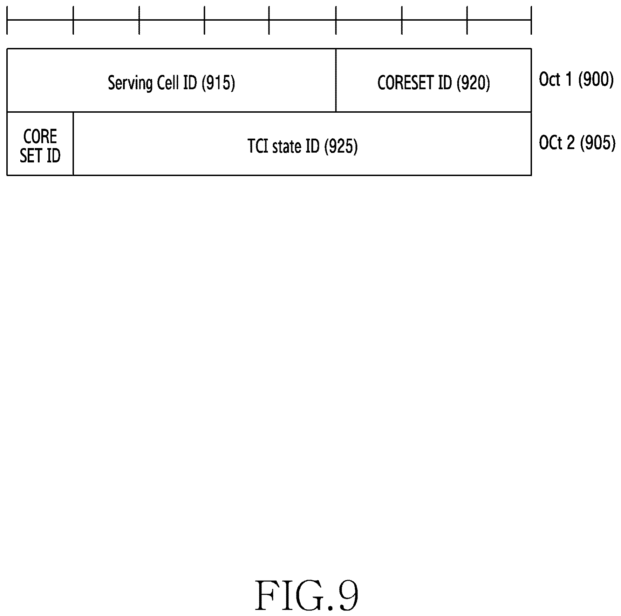

FIG. 9 illustrates a TCI indication medium access control (MAC) control element (CE) signaling structure for a PDCCH demodulation reference signal (DMRS) in a wireless communication system according to an embodiment of the disclosure.

Referring to FIG. 9, the TCI indication MAC CE signaling for the PDCCH DMRS may be configured by 2 bytes (16bits), and include a 5-bit serving cell ID 915, a 4-bit CORESET ID 920, and a 7-bit TCI state ID 925.

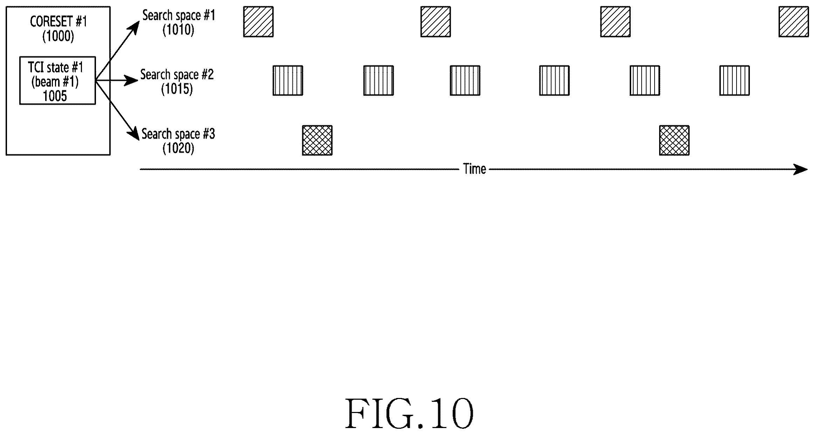

FIG. 10 illustrates an example of a beam configuration with regard to a control resource set and a search space in a wireless communication system according to an embodiment of the disclosure. Referring to FIG. 10, the base station may indicate one of TCI state lists included in CORESET 1000 configuration through MAC CE signaling (1005). Until a different TCI state is indicated for the corresponding CORESET through different MAC CE signaling, the UE may consider that identical QCL information (beam #1) 1005 is all applied to one or more search spaces 1010, 1015, and 1020 connected to the CORESET. The above-described PDCCH beam allocation method has a problem in that it is difficult to indicate a beam change faster than MAC CE signaling delay, and the same beam is unilaterally applied to each CORESET regardless of search space characteristics, thereby making flexible PDCCH beam operation difficult. Following embodiments of the disclosure provide more flexible PDCCH beam configuration and operation methods. Although multiple distinctive examples will be provided for convenience of description of embodiments of the disclosure, they are not mutually exclusive, and can be combined and applied appropriately for each situation.

The base station may configure one or multiple TCI states for the UE with regard to a specific control resource set, and may activate one of the configured TCI states through a MAC CE activation command. For example, if {TCI state#0, TCI state#1, TCI state#2} are configured as TCI states for control resource set #1, the base station may transmit an activation command to the UE through a MAC CE such that TCI state#0 is assumed as the TCI state regarding control resource set #1. Based on the activation command regarding the TCI state received through the MAC CE, the UE may correctly receive the DMRS of the corresponding CORESET, based on QCL information in the activated TCI state.

With regard to a control resource set having a configured index of 0 (control resource set #0), if the UE has failed to receive a MAC CE activation command regarding the TCI state of control resource set #0, the UE may assume that the DMRS transmitted in CORESET #0has been QCL-ed with a SS/PBCH block identified in the initial access process, or in a non-contention-based random access process not triggered by a PDCCH command.

With regard to a control resource set having a configured index value other than 0 (CORESET #X), if the UE has no TCI state configured regarding CORESET #X, or if the UE has one or more TCI states configured therefor but has failed to receive a MAC CE activation command for activating one thereof, the UE may assume that the DMRS transmitted in CORESET #X has been QCL-ed with a SS/PBCH block identified in the initial access process.

[PDCCH: regarding QCL prioritization rule]

Hereinafter, operations for determining QCL priority regarding a PDCCH will be described in detail.

If multiple control resource sets which operate according to carrier aggregation inside a single cell or band and which exist inside a single or multiple in-cell activated bandwidth parts overlap temporally while having identical or different QCL-TypeD characteristics in a specific PDCCH monitoring occasion, the UE may select a specific control resource set according to a QCL priority determining operation and may monitor control resource sets having the same QCL-TypeD characteristics as the corresponding control resource set. That is, if multiple control resource sets overlap temporally, only one QCL-TypeD characteristic can be received. The QCL priority may be determined by the following criteria.

- Criterion 1. A control resource set connected to a common search space having the lowest index inside a cell corresponding to the lowest index among cells including a common search space
- Criterion 2. A control resource set connected to a UE-specific search space having the lowest index inside a cell corresponding to the lowest index among cells including a UE-specific search space

As described above, if one criterion among the criteria is not satisfied, the next criterion may be applied. For example, if control resource sets overlap temporally in a specific PDCCH monitoring occasion, and if all control resource sets are not connected to a common search space but connected to a UE-specific search space (for example, if criterion 1 is not satisfied), the UE may omit application of criterion 1 and apply criterion 2.

If selecting control resource set according to the above-mentioned criteria, the UE may additionally consider the two aspects with regard to QCL information configured for the control resource set. Firstly, if control resource set 1 has CSI-RS 1 as a reference signal having a relation of QCL-TypeD, if this CSI-RS 1 has a relation of QCL-TypeD with reference signal SSB 1, and if another control resource set 2 has a relation of QCL-TypeD with reference signal SSB 1, the UE may consider that the two control resource sets 1 and 2 have different QCL-TypeD characteristics. Secondly, if control resource set 1 has CSI-RS 1 configured for cell 1 as a reference signal having a relation of QCL-TypeD, if this CSI-RS 1 has a relation of QCL-TypeD with reference signal SSB 1, if control resource set 2 has a relation of QCL-TypeD with reference signal CSI-RS 2 configured for cell 2, and if this CSI-RS 2 has a relation of QCL-TypeD with the same reference signal SSB 1, the UE may consider that the two control resource sets have the same QCL-TypeD characteristics.

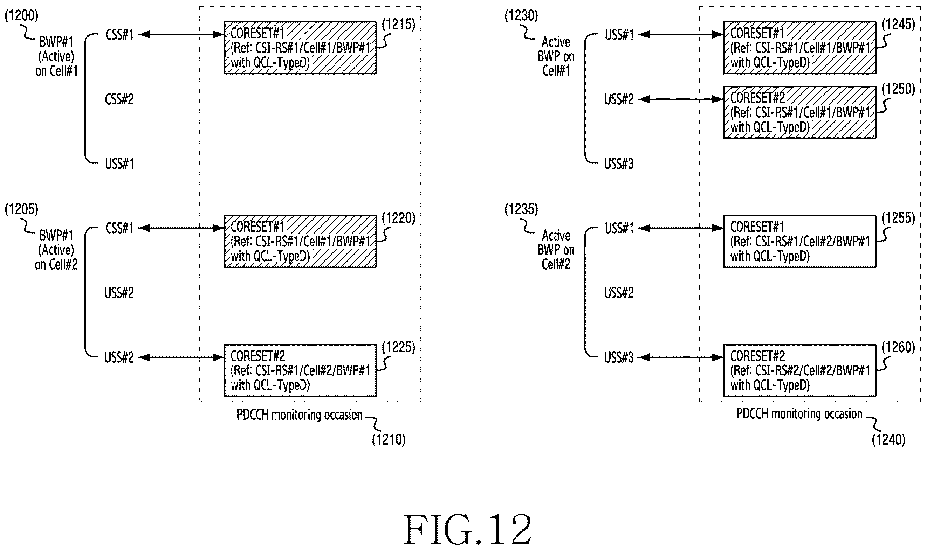

FIG. 12 illustrates a method in which, upon receiving a downlink control channel, a UE selects a receivable control resource set in consideration of priority in a wireless communication system according to an embodiment of the disclosure. As an example, the UE may be configured to receive multiple control resource sets overlapping temporally in a specific PDCCH monitoring occasion 1210, and such multiple control resource sets may be connected to a common search space or a UE-specific search space with regard to multiple cells. In the corresponding PDCCH monitoring occasion, control resource set no. 1 1200 connected to common search space no. 1 may exist in bandwidth part no. 1 1215 of cell no. 1, and control resource set no. 1 1205 connected to common search space no. 1 and control resource set no. 2 1220 connected to UE-specific search space no. 2 may exist in bandwidth part no. 1 1225 of cell no. 2. The control resource sets 1215 and 1220 may have a relation of QCL-TypeD with CSI-RS resource no. 1 configured in bandwidth part no. 1 of cell no. 1, and the control resource set 1225 may have a relation of QCL-TypeD with CSI-RS resource no. 1 configured in bandwidth part no. 1 of cell no. 2. If criterion 1 is applied to the corresponding PDCCH monitoring occasion 1210, all other control resource sets having the same reference signal of QCL-TypeD as control resource set no. 1 1215 may be received. Therefore, the UE may receive the control resource sets 1210 and 1215 in the corresponding PDCCH monitoring occasion 1220. As another example, the UE may be configured to receive multiple control resource sets overlapping temporally in a specific PDCCH monitoring occasion 1240, and such multiple control resource sets may be connected to a common search space or a UE-specific search space with regard to multiple cells. In the corresponding PDCCH monitoring occasion, control resource set no. 1 1230 connected to UE-specific search space no. 1 and control resource set no. 2 1245 connected to UE-specific search space no. 2 may exist in bandwidth part no. 1 1250 of cell no. 1, and control resource set no. 1 1235 connected to UE-specific search space no. 1 and control resource set no. 2 1255 connected to UE-specific search space no. 3 may exist in bandwidth part no. 1 1260 of cell no. 2. The control resource sets 1245 and 1250 may have a relation of QCL-TypeD with CSI-RS resource no. 1 configured in bandwidth part no. 1 of cell no. 1, the control resource set 1255 may have a relation of QCL-TypeD with CSI-RS resource no. 1 configured in bandwidth part no. 1 of cell no. 2, and the control resource set 1260 may have a relation of QCL-TypeD with CSI-RS resource no. 2 configured in bandwidth part no. 1 of cell no. 2. If criterion 1 is applied to the corresponding PDCCH monitoring occasion 1240, there is no common search space, and the next criterion, that is, criterion 2, may thus be applied. If criterion 2 is applied to the corresponding PDCCH monitoring occasion 1240, all other control resource sets having the same reference signal of QCL-TypeD as control resource set no. 1 1245 may be received. Therefore, the UE may receive the control resource sets 1240 and 1245 in the corresponding PDCCH monitoring occasion 1250.

[Regarding rate matching/puncturing]

Hereinafter, a rate matching operation and a puncturing operation will be described in detail.

If time and frequency resource A to transmit symbol sequence A overlaps time and frequency resource B, a rate matching or puncturing operation may be considered as an operation of transmitting/receiving channel A in consideration of resource C (region in which resource A and resource B overlap). Specific operations may follow the following description.

Rate matching operation

- The base station may transmit channel A after mapping the same only to remaining resource domains other than resource C (area overlapping resource B) among the entire resource A which is to be used to transmit symbol sequence A to the UE. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the base station may transmit symbol sequence {symbol#1, symbol#2, symbol#3} after mapping the same to {resource#1, resource#2, resource#4}, respectively.

The UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped and transmitted in the remaining area other than resource C among the entire resource A. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the UE may perform a series of following receiving operations based on an assumption that symbol sequence {symbol#1, symbol#2, symbol#3} has been transmitted after being mapped to {resource#1, resource#2, resource#4}, respectively.

Puncturing operation

If there is resource C (region overlapping resource B) among the entire resource A which is to be used to transmit symbol sequence A to the UE, the base station may map symbol sequence A to the entire resource A, but may not perform transmission in the resource area corresponding to resource C, and may perform transmission with regard to only the remaining resource area other than resource C among resource A. For example, if symbol sequence A is configured as {symbol#1, symbol#2, symbol#3, symbol#4}, resource A is {resource#1, resource#2, resource#3, resource#4}, and resource B is {resource#3, resource#5}, the base station may map symbol sequence {symbol#1, symbol#2, symbol#3, symbol#4} to resource A {resource#1, resource#2, resource#3, resource#4}, respectively, may transmit only symbol sequence {symbol#1, symbol#2, symbol#4} corresponding to remaining resources {resource#1, resource#2, resource#4} other than {resource#3} (corresponding to resource C) among resource A, and may not transmit {symbol#3} mapped to {resource#3} (corresponding to resource C). Consequently, the base station may transmit symbol sequence {symbol#1, symbol#2, symbol#4} after mapping the same to {resource#1, resource#2, resource#4}, respectively.

The UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped to the entire resource A but transmitted only in the remaining region other than resource C among the resource region A. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may assume that symbol sequence A {symbol#1, symbol#2, symbol#3, symbol#4} is mapped to resource A {resource#1, resource#2, resource#3, resource#4}, respectively, but {symbol#3} mapped to {resource#3} (corresponding to resource C) is not transmitted, and based on the assumption that symbol sequence {symbol#1, symbol#2, symbol#4} corresponding to remaining resources {resource#1, resource#2, resource#4} other than {resource#3} (corresponding to resource C) among resource A has been mapped and transmitted, the UE may receive the same. Consequently, the UE may perform a series of following receiving operations based on an assumption that symbol sequence {symbol#1, symbol#2, symbol#4} has been transmitted after being mapped to {resource#1, resource#2, resource#4}, respectively.

Hereinafter, a method for configuring a rate matching resource for the purpose of rate matching in a 5G communication system will be described. Rate matching refers to adjusting the size of a signal in consideration of the amount of resources that can be used to transmit the signal. For example, data channel rate matching may mean that a data channel is not mapped and transmitted with regard to specific time and frequency resource domains, and the size of data is adjusted accordingly.

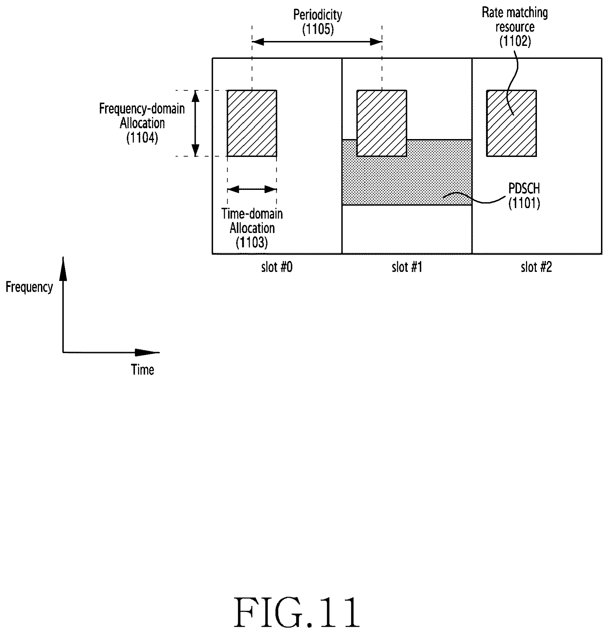

FIG. 11 illustrates a method in which a base station and a UE transmit/receive data in consideration of a downlink data channel and a rate matching resource in a wireless communication system according to an embodiment of the disclosure.

FIG. 11 illustrates a downlink data channel (PDSCH) 1101 and a rate matching resource 1102. The base station may configure one or multiple rate matching resources 1102 for the UE through upper layer signaling (for example, RRC signaling). Rate matching resource 1102 configuration information may include time-domain resource allocation information 1103, frequency-domain resource allocation information 1104, and periodicity information 1105. A bitmap corresponding to the frequency-domain resource allocation information 1104 will hereinafter be referred to as "first bitmap", a bitmap corresponding to the time-domain resource allocation information 1103 will be referred to as "second bitmap", and a bitmap corresponding to the periodicity information 1105 will be referred to as "third bitmap". If all or some of time and frequency resources of the scheduled PDSCH 1101 overlap a configured rate matching resource 1102, the base station may rate-match and transmit the PDSCH 1101 in a rate matching resource 1102 part, and the UE may perform reception and decoding after assuming that the PDSCH 1101 has been rate-matched in a rate matching resource 1102 part.

The base station may dynamically notify the UE, through DCI, of whether the PDSCH will be rate-matched in the configured rate matching resource part through an additional configuration (for example, corresponding to "rate matching indicator" inside DCI format described above). Specifically, the base station may select some from the configured rate matching resources and group them into a rate matching resource group, and may indicate, to the UE, whether the PDSCH is rate-matched with regard to each rate matching resource group through DCI by using a bitmap type. For example, if four rate matching resources RMR#1, RMR#2, RMR#3, and RMR#4 are configured, the base station may configure a rate matching groups RMG#1={RMR#1, RMR#2}, RMG#2={RMR#3, RMR#4}, and may indicate, to the UE, whether rate matching occurs in RMG#1 and RMG#2, respectively, through a bitmap by using two bits inside the DCI field. For example, in a case where rate matching is to be conducted, the base station may indicate this case by "1", and in a case where rate matching is not to be conducted, the base station may indicate this case by "0".

5G supports granularity of "RB symbol level" and "RE level" as a method for configuring the above-described rate matching resources for a UE. More specifically, the following configuration method may be followed.

RB symbol level

The UE may have a maximum of four RateMatchPatterns configured per each bandwidth part through upper layer signaling, and one RateMatchPattern may include the following contents.

- may include, in connection with a reserved resource inside a bandwidth part, a resource having time and frequency resource domains of the corresponding reserved resource configured as a combination of an RB-level bitmap and a symbol-level bitmap in the frequency domain. The reserved resource may span one or two slots. A time domain pattern (periodicityAndPattern) may be additionally configured wherein time and frequency domains including respective RB-level and symbol-level bitmap pairs are repeated.
- may include a resource area corresponding to a time domain pattern configured by time and frequency domain resource areas configured by a CORESET inside a bandwidth part and a search space configuration in which corresponding resource areas are repeated.

RE level

The UE may have the following contents configured through upper layer signaling.

- configuration information (lte-CRS-ToMatchAround) regarding a RE corresponding to a LTE CRS (Cell-specific Reference Signal or common reference signal) pattern, which may include LTE CRS's port number (nrofCRS-Ports) and LTE-CRS-vshift(s) value (v-shift), location information (carrierFreqDL) of a center subcarrier of a LTE carrier from a reference frequency point (for example, reference point A), the LTE carrier's bandwidth size (carrierBandwidthDL) information, subframe configuration information (mbsfn-SubframConfigList) corresponding to a multicast-broadcast single-frequency network (MBSFN), and the like. The UE may determine the position of the CRS inside the NR slot corresponding to the LTE subframe, based on the above-mentioned pieces of information.
- may include configuration information regarding a resource set corresponding to one or multiple zero power (ZP) CSI-RSs inside a bandwidth part.

[Regarding LTE CRS rate match]

Next, a rate matching process regarding the above-mentioned LTE CRS will be described in detail. In NR, for coexistence between long term evolution (LTE) and new RAT (NR) (LTE-NR coexistence), the pattern of cell-specific reference signal (CRS) of LTE may be configured for an NR UE. More specifically, the CRS pattern may be provided by RRC signaling including at least one parameter inside ServingCellConfig IE (information element) or ServingCellConfigCommon IE. Examples of the parameter may include lte-CRS-ToMatchAround, lte-CRS-PatternList1-r16, lte-CRS-PatternList2-r16, crs-RateMatch-PerCORESETPoolIndex-r16, and the like.

Rel-15 NR provides a function by which one CRS pattern can be configured per serving cell through parameter lte-CRS-ToMatchAround. In Rel-16 NR, the above function has been expanded such that multiple CRS patterns can be configured per serving cell. More specifically, a UE having a single-TRP (transmission and reception point) configuration may now have one CRS pattern configured per one LTE carrier, and a UE having a multi-TRP configuration may now have two CRS patterns configured per one LTE carrier. For example, the UE having a single-TRP configuration may have a maximum of three CRS patterns configured per serving cell through parameter lte-CRS-PatternList1-r16. As another example, the UE having a multi-TRP configuration may have a CRS configured for each TRP. That is, the CRS pattern regarding TRP1 may be configured through parameter lte-CRS-PatternList1-r16, and the CRS pattern regarding TRP2 may be configured through parameter lte-CRS- PatternList2-r16. If two TRPs are configured as above, whether the CRS patterns of TRP1 and TRP2 are both to be applied to a specific physical downlink shared channel (PDSCH) or only the CRS pattern regarding one TRP is to be applied is determined through parameter crs-RateMatch-PerCORESETPoolIndex-r16, wherein if parameter crs-RateMatch-PerCORESETPoolIndex-r16 is configured "enabled", only the CRS pattern of one TRP is applied, and both CRS patterns of the two TRPs are applied in other cases.

Table 22 shows a ServingCellConfig IE including the CRS patterns, and Table 23 shows a RateMatchPatternLTE-CRS IE including at least one parameter regarding CRS patterns.

[Table 22]

```
ServingCellConfig ::=                    SEQUENCE {
        tdd-UL-DL-ConfigurationDedicated      TDD-UL-DL-ConfigDedicated
OPTIONAL,      -- Cond TDD
        initialDownlinkBWP                    BWP-DownlinkDedicated
OPTIONAL,      -- Need M
        downlinkBWP-ToReleaseList             SEQUENCE (SIZE (1..maxNrofBWPs)) OF BWP-Id
OPTIONAL,      -- Need N
        downlinkBWP-ToAddModList              SEQUENCE (SIZE (1..maxNrofBWPs)) OF BWP-
Downlink                          OPTIONAL,      -- Need N
        firstActiveDownlinkBWP-Id             BWP-Id
OPTIONAL,      -- Cond SyncAndCellAdd
```

```
    bwp-InactivityTimer                      ENUMERATED {ms2, ms3, ms4, ms5, ms6, ms8,
ms10, ms20, ms30,

ms40,ms50, ms60, ms80,ms100, ms200,ms300, ms500,

ms750, ms1280, ms1920, ms2560, spare10, spare9, spare8,

spare7, spare6, spare5, spare4, spare3, spare2, spare1 }      OPTIONAL,      --Need R
```

```
    defaultDownlinkBWP-Id                    BWP-Id
OPTIONAL,      -- Need S
        uplinkConfig                                  UplinkConfig
OPTIONAL,      -- Need M
        supplementaryUplink                       UplinkConfig
OPTIONAL,      -- Need M
        pdcch-ServingCellConfig                    SetupRelease { PDCCH-
ServingCellConfig }                      OPTIONAL,      -- Need M
        pdsch-ServingCellConfig                    SetupRelease { PDSCH-
ServingCellConfig }                      OPTIONAL,      -- Need M
        csi-MeasConfig                                SetupRelease { CSI-MeasConfig }
OPTIONAL,      -- Need M
```

```
    sCellDeactivationTimer                   ENUMERATED {ms20, ms40, ms80, ms160,
ms200, ms240,
                                                                           ms320, ms400,
ms480, ms520, ms640, ms720,
```

```
                                                                              ms840,
ms1280, spare2,spare1}              OPTIONAL,       -- Cond ServingCellWithoutPUCCH
        crossCarrierSchedulingConfig                CrossCarrierSchedulingConfig
OPTIONAL,       -- Need M
```

```
    tag-Id                                           TAG-Id,
        dummy                                        ENUMERATED {enabled}
OPTIONAL,       -- Need R
        pathlossReferenceLinking                     ENUMERATED {spCell, sCell}
OPTIONAL,       -- Cond SCellOnly
        servingCellMO                                MeasObjectId
OPTIONAL,       -- Cond MeasObject
        ...,
        [[
        lte-CRS-ToMatchAround                        SetupRelease { RateMatchPatternLTE-
CRS }                           OPTIONAL,       -- Need M
```

```
    rateMatchPatternToAddModList                 SEQUENCE (SIZE (1..maxNrofRateMatchPatterns))
OF RateMatchPattern             OPTIONAL,       -- Need N
        rateMatchPatternToReleaseList                SEQUENCE (SIZE
(1..maxNrofRateMatchPatterns)) OF RateMatchPatternId        OPTIONAL,       -- Need N
        downlinkChannelBW-PerSCS-List            SEQUENCE (SIZE (1..maxSCSs)) OF SCS-
SpecificCarrier                 OPTIONAL        -- Need S
```

```
        ]],
        [[
        supplementaryUplinkRelease                   ENUMERATED {true}
OPTIONAL,       -- Need N
        tdd-UL-DL-ConfigurationDedicated-IAB-MT-r16    TDD-UL-DL-ConfigDedicated-IAB-MT-r16
OPTIONAL,       -- Cond TDD_IAB
        dormantBWP-Config-r16                        SetupRelease { DormantBWP-Config-r16 }
OPTIONAL,       -- Need M
        ca-SlotOffset-r16                            CHOICE {
```

```
    refSCS15kHz                                      INTEGER (-2..2),
        refSCS30KHz                                  INTEGER (-5..5),
        refSCS60KHz                                  INTEGER (-10..10),
        refSCS120KHz                                 INTEGER (-20..20)
        }
OPTIONAL,       -- Cond AsyncCA
        channelAccessConfig-r16                      SetupRelease { ChannelAccessConfig-
r16 }                           OPTIONAL,       -- Need M
```

```
    intraCellGuardBandsDL-List-r16               SEQUENCE (SIZE (1..maxSCSs)) OF
IntraCellGuardBandsPerSCS-r16                    OPTIONAL,       -- Need S
        intraCellGuardBandsUL-List-r16               SEQUENCE (SIZE (1..maxSCSs)) OF
IntraCellGuardBandsPerSCS-r16                    OPTIONAL,       -- Need S
        csi-RS-ValidationWith-DCI-r16                ENUMERATED {enabled}
OPTIONAL,       -- Need R
        lte-CRS-PatternList1-r16                     SetupRelease { LTE-CRS-PatternList-
r16 }                           OPTIONAL,       -- Need M
        lte-CRS-PatternList2-r16                     SetupRelease { LTE-CRS-PatternList-
r16 }                           OPTIONAL,       -- Need M
        crs-RateMatch-PerCORESETPoolIndex-r16        ENUMERATED {enabled}
OPTIONAL,       -- Need R
```

```
    enableTwoDefaultTCI-States-r16                   ENUMERATED {enabled}
OPTIONAL,       -- Need R
```

| | |
|---|---|
| enableDefaultTCI-StatePerCoresetPoolIndex-r16 OPTIONAL,    -- Need R | ENUMERATED {enabled} |
| enableBeamSwitchTiming-r16 OPTIONAL,    -- Need R | ENUMERATED {true} |
| cbg-TxDiffTBsProcessingType1-r16 OPTIONAL,    -- Need R | ENUMERATED {enabled} |

| | |
|---|---|
| cbg-TxDiffTBsProcessingType2-r16 OPTIONAL    -- Need R<br>        ]]<br>    } | ENUMERATED {enabled} |

[Table 23]

---

    -    `RateMatchPatternLTE-CRS`

The IE *RateMatchPatternLTE-CRS* is used to configure a pattern to rate match around LTE CRS. See TS 38.214 [19], clause 5.1.4.2.

---

**RateMatchPatternLTE-CRS information element**

-- ASN1START
-- TAG-RATEMATCHPATTERNLTE-CRS-START

RateMatchPatternLTE-CRS ::=          SEQUENCE {
    carrierFreqDL                        INTEGER (0..16383),
    carrierBandwidthDL                   ENUMERATED {n6, n15, n25, n50, n75, n100, spare2, spare1},
    mbsfn-SubframeConfigList             EUTRA-MBSFN-SubframeConfigList
OPTIONAL,    -- Need M

---

    nrofCRS-Ports                        ENUMERATED {n1, n2, n4},
        v-Shift                              ENUMERATED {n0, n1, n2, n3, n4, n5}
    }

    LTE-CRS-PatternList-r16 ::=          SEQUENCE (SIZE (1..maxLTE-CRS-Patterns-r16))
OF RateMatchPatternLTE-CRS

    -- TAG-RATEMATCHPATTERNLTE-CRS-STOP
    -- ASN1STOP

---

| **RateMatchPatternLTE-CRS field descriptions** |
|---|
| ***carrierBandwidthDL***<br>BW of the LTE carrier in number of PRBs (see TS 38.214 [19], clause 5.1.4.2). |
| ***carrierFreqDL***<br>Center of the LTE carrier (see TS 38.214 [19], clause 5.1.4.2). |
| ***mbsfn-SubframeConfigList***<br>LTE MBSFN subframe configuration (see TS 38.214 [19], clause 5.1.4.2). |
| ***nrofCRS-Ports***<br>Number of LTE CRS antenna port to rate-match around (see TS 38.214 [19], clause 5.1.4.2). |

(continued)

| **RateMatchPatternLTE-CRS** field descriptions |
|---|
| **v-Shift** |
| Shifting value v-shift in LTE to rate match around LTE CRS (see TS 38.214 [19], clause 5.1.4.2). |

[PDSCH: processing time]

Next, a PDSCH processing time (PDSCH processing procedure time) will be described. If the base station schedules the UE to transmit a PDSCH by using DCI format 1_0, 1_1 or 1_2, the UE may need a PDSCH processing time for receiving a PDSCH by applying a transmission method (modulation/demodulation and coding indication index (MCS), demodulation reference signal-related information, time and frequency resource allocation information, and the like) indicated through DCI. The PUSCH preparation procedure time is defined in NR in consideration thereof. The PUSCH processing time of the UE may follow Equation 2 given below.

[Equation 2]

$$T_{proc,1} = ( N_1 + d_{1,1} + d_2 )( 2048 + 144 ) \; \kappa 2^{-\mu} \, T_c + T_{ext}$$

Each parameter in $T_{proc,1}$ described above in Equation 3 may have the following meaning.

$N_1$: the number of symbols determined according to UE processing capability 1 or 2 based on the UE's capability and numerology $\mu$. $N_1$ may have a value in Table 24 if UE processing capability 1 is reported according to the UE's capability report, and may have a value in Table 25 if UE processing capability 2 is reported, and if availability of UE processing capability 2 is configured through higher layer signaling. The numerology $\mu$ may correspond to the minimum value among $\mu_{PDCCH}$, $\mu_{PDSCH}$, $\mu_{UL}$ so as to maximize $T_{proc,1}$, and $\mu_{PDCCH}$, $\mu_{PDSCH}$, $\mu_{UL}$ may refer to the numerology of a PDCCH that scheduled a PDSCH, the numerology of the scheduled PDSCH, and numerology of an uplink channel in which a HARQ-ACK is to be transmitted.

[Table 24] PDSCH processing time in the case of PDSCH processing capability 1

| [Table 24] | | |
|---|---|---|
| $\mu$ | PDSCH decoding time $N_1$ [symbols] | |
| | If PDSCH mapping type A and B both correspond to dmrs-AdditionalPosition = pos0 inside DMRS-DownlinkConfig which is higher layer signaling | If PDSCH mapping type A and B both do not correspond to dmrs-AdditionalPosition = pos0 inside DMRS-DownlinkConfig which is higher layer signaling, or if no higher layer parameter is configured |
| 0 | 8 | $N_{1,0}$ |
| 1 | 10 | 13 |
| 2 | 17 | 20 |
| 3 | 20 | 24 |

[Table 25] PDSCH processing time in the case of PDSCH processing capability 2

| [Table 25] | |
|---|---|
| $\mu$ | PDSCH decoding time $N_1$ [symbols] |
| | If PDSCH mapping type A and B both correspond to dmrs-AdditionalPosition = pos0 inside DMRS-DownlinkConfig which is higher layer signaling |
| 0 | 3 |
| 1 | 4.5 |
| 2 | 9 for frequency range 1 |

- $\kappa$: 64

- $T_{ext}$: if the UE uses a shared spectrum channel access scheme, the UE may calculate $T_{ext}$ and apply the same to the PDSCH processing time. Otherwise, $T_{ext}$ is assumed to be 0.
- If $l_1$ which represents the PDSCH DMRS location value is 12, $N_{1,0}$ in [table 22] above has the value of 14, and otherwise has the value of 13.
- With regard to PDSCH mapping type A, if the last symbol of the PDSCH is the $i^{th}$ symbol in the slot in which the PDSCH is transmitted, and if i<7, $d_{1,1}$ is then 7-i, and $d_{1,1}$ is otherwise 0.
- $d_2$: if a PUCCH having a high priority index temporally overlaps another PUCCH or a PUSCH having a low priority index, $d_2$ of the PUCCH having a high priority index may be configured as a value reported from the UE. Otherwise, $d_2$ is 0.
- If PDSCH mapping type B is used with regard to UE processing capability 1, the $d_{1,1}$ value may be determined by the number (L) of symbols of a scheduled PDSCH and the number of overlapping symbols between the PDCCH that schedules the PDSCH and the scheduled PDSCH, as follows.
- If $L \geq 7$, then $d_{1,1} = 0$.
- If $- L \geq 4$ and $L \leq 6$, then $d_{1,1} = 7 - L$.
- If L = 3, then $d_{1,1} = \min(d, 1)$.
- If L=2, then $d_{1,1} = 3 + d$.
- If PDSCH mapping type B is used with regard to UE processing capability 2, the $d_{1,1}$ value may be determined by the number (L) of symbols of a scheduled PDSCH and the number of overlapping symbols between the PDCCH that schedules the PDSCH and the scheduled PDSCH, as follows.
- If $L \geq 7$, then $d_{1,1} = 0$.
- If $- L \geq 4$ and $L \leq 6$, then $d_{1,1} = 7 - L$.
- If L=2,
- If the scheduling PDCCH exists inside a CORESET including three symbols, and if the CORESET and the scheduled PDSCH have the same start symbol, then $d_{1,1} = 3$.
- Otherwise, $d_{1,1} = d$.
- In the case of a UE supporting capability 2 inside a given serving cell, the PDSCH processing time based on UE processing capability 2 may be applied by the UE if processingType2Enabled (upper layer signaling) is configured as "enable" with regard to the corresponding cell.

If the location of the first uplink transmission symbol of a PUCCH including HARQ-ACK information (in connection with the corresponding location, $K_1$ defined as the HARQ-ACK transmission timepoint, a PUCCH resource used to transmit the HARQ-ACK, and the timing advance effect may be considered) does not start earlier than the first uplink transmission symbol that comes after the last symbol of the PDSCH over a time of $T_{proc,1}$, the UE needs to transmit a valid HARQ-ACK message. That is, the UE needs to transmit a PUCCH including a HARQ-ACK only if the PDSCH processing time is sufficient. The UE cannot otherwise provide the base station with valid HARQ-ACK information corresponding to the scheduled PDSCH. The aforementioned $T_{proc,1}$ may be used in the case of both a normal and an extended CP. In the case of a PDSCH having two PDSCH transmission locations configured inside one slot, $d_{1,1}$ is calculated with reference to the first PDSCH transmission location inside the corresponding slot.

[PDSCH: reception preparation time during cross-carrier scheduling]

Next, in the case of cross-carrier scheduling in which the numerology ($\mu_{PDCCH}$) by which a scheduling PDCCH is transmitted and the numerology ($\mu_{PDSCH}$) by which a PDSCH scheduled by the corresponding PDCCH is transmitted are different from each other, the PDSCH reception reparation time ($N_{pdsch}$) of the UE defined with regard to the time interval between the PDCCH and PDSCH will be described.

If $\mu_{PDCCH} < \mu_{PDSCH}$, the scheduled PDSCH cannot be transmitted before the first symbol of the slot coming after $N_{pdsch}$ symbols from the last symbol of the PDCCH that scheduled the corresponding PDSCH. The transmission symbol of the corresponding PDSCH may include a DM-RS.

If $\mu_{PDCCH} > \mu_{PDSCH}$, the scheduled PDSCH may be transmitted after $N_{pdsch}$ symbols from the last symbol of the PDCCH that scheduled the corresponding PDSCH. The transmission symbol of the corresponding PDSCH may include a DM-RS.

[Table 26] $N_{pdsch}$ according to scheduled PDCCH subcarrier spacing

| [Table 26 ] | |
| --- | --- |
| $\mu_{PDCCH}$ | $N_{pdsch}$ [symbols] |
| 0 | 4 |

(continued)

| [Table 26 ] | |
|---|---|
| $\mu_{PDCCH}$ | $N_{pdsch}$ [symbols] |
| 1 | 5 |
| 2 | 10 |
| 3 | 14 |

[Regarding SRS]

Next, an uplink channel estimation method using sounding reference signal (SRS) transmission of a UE will be described. The base station may configure at least one SRS configuration with regard to each uplink BWP in order to transfer configuration information for SRS transmission to the UE, and may also configure as least one SRS resource set with regard to each SRS configuration. As an example, the base station and the UE may exchange upper signaling information as follows, in order to transfer information regarding the SRS resource set.

- srs-ResourceSetId: an SRS resource set index
- srs-ResourceIdList: a set of SRS resource indices referred to by SRS resource sets
- resourceType: time domain transmission configuration of SRS resources referred to by SRS resource sets, and may be configured as one of "periodic", "semi-persistent", and "aperiodic". If configured as "periodic" or "semi-persistent", associated CSI-RS information may be provided according to the place of use of SRS resource sets. If configured as "aperiodic", an aperiodic SRS resource trigger list/slot offset information may be provided, and associated CSI-RS information may be provided according to the place of use of SRS resource sets.
- usage: a configuration regarding the place of use of SRS resources referred to by SRS resource sets, and may be configured as one of "beamManagement", "codebook", "nonCodebook", and "antennaSwitching".
- alpha, p0, pathlossReferenceRS, srs-PowerControlAdjustmentStates: provides a parameter configuration for adjusting the transmission power of SRS resources referred to by SRS resource sets.

The UE may understand that an SRS resource included in a set of SRS resource indices referred to by an SRS resource set follows the information configured for the SRS resource set.

In addition, the base station and the UE may transmit/receive upper layer signaling information in order to transfer individual configuration information regarding SRS resources. As an example, the individual configuration information regarding SRS resources may include time-frequency domain mapping information inside slots of the SRS resources, and this may include information regarding intra-slot or inter-slot frequency hopping of the SRS resources. In addition, the individual configuration information regarding SRS resources may include time domain transmission configuration of SRS resources, and may be configured as one of "periodic", "semi-persistent", and "aperiodic". The time domain transmission configuration of SRS resources may be limited to have the same time domain transmission configuration as the SRS resource set including the SRS resources. If the time domain transmission configuration of SRS resources is configured as "periodic" or "semi-persistent", the time domain transmission configuration may further include an SRS resource transmission cycle and a slot offset (for example, periodicityAndOffset).

The base station may activate or deactivate SRS transmission for the UE through upper layer signaling including RRC signaling or MAC CE signaling, or L1 signaling (for example, DCI). For example, the base station may activate or deactivate periodic SRS transmission for the UE through upper layer signaling. The base station may indicate activation of an SRS resource set having resourceType configured as "periodic" through upper layer signaling, and the UE may transmit the SRS resource referred to by the activated SRS resource set. Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the periodic SRS resource activated through upper layer signaling.

For example, the base station may activate or deactivate semi-persistent SRS transmission for the UE through upper layer signaling. The base station may indicate activation of an SRS resource set through MAC CE signaling, and the UE may transmit the SRS resource referred to by the activated SRS resource set. The SRS resource set activated through MAC CE signaling may be limited to an SRS resource set having resourceType configured as "semi-persistent". Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. If the SRS resource has spatial relation info configured therefor, the spatial domain transmission filter may be determined, without following the same, by referring to configuration information regarding spatial relation info transferred through MAC CE signaling that activates semi-persistent SRS transmission. The UE may transmit the SRS resource inside the uplink BWP activated with regard to the semi-persistent SRS resource activated through upper layer signaling.

For example, the base station may trigger aperiodic SRS transmission by the UE through DCI. The base station may indicate one of aperiodic SRS triggers (aperiodic SRS-ResourceTrigger) through the SRS request field of DCI. The UE may understand that the SRS resource set including the aperiodic SRS resource trigger indicated through DCI in the aperiodic SRS resource trigger list, among configuration information of the SRS resource set, has been triggered. The UE may transmit the SRS resource referred to by the triggered SRS resource set. Intra-slot time-frequency domain resource mapping of the transmitted SRS resource follows resource mapping information configured for the SRS resource. In addition, slot mapping of the transmitted SRS resource may be determined by the slot offset between the SRS resource and a PDCCH including DCI, and this may refer to value(s) included in the slot offset set configured for the SRS resource set. Specifically, as the slot offset between the SRS resource and the PDCCH including DCI, a value indicated in the time domain resource assignment field of DCI, among offset value(s) included in the slot offset set configured for the SRS resource set, may be applied. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the aperiodic SRS resource triggered through DCI. If the base station triggers aperiodic SRS transmission by the UE through DCI, a minimum time interval may be necessary between the transmitted SRS and the PDCCH including the DCI that triggers aperiodic SRS transmission, in order for the UE to transmit the SRS by applying configuration information regarding the SRS resource. The time interval for SRS transmission by the UE may be defined as the number of symbols between the last symbol of the PDCCH including the DCI that triggers aperiodic SRS transmission and the first symbol mapped to the first transmitted SRS resource among transmitted SRS resource(s). The minimum time interval may be determined with reference to the PUSCH preparation procedure time needed by the UE to prepare PUSCH transmission. In addition, the minimum time interval may have a different value depending on the place of use of the SRS resource set including the transmitted SRS resource. For example, the minimum time interval may be determined as N2 symbols defined in consideration of UE processing capability that follows the UE's capability with reference to the UE's PUSCH preparation procedure time. In addition, if the place of use of the SRS resource set is configured as "codebook" or "antennaSwitching" in consideration of the place of use of the SRS resource set including the transmitted SRS resource, the minimum time interval may be determined as N2 symbols, and if the place of use of the SRS resource set is configured as "nonCodebook" or "beamManagement", the minimum time interval may be determined as N2+14 symbols. The UE may transmit an aperiodic SRS if the time interval for aperiodic SRS transmission is larger than or equal to the minimum time interval, and may ignore the DCI that triggers the aperiodic SRS if the time interval for aperiodic SRS transmission is smaller than the minimum time interval.

[Table 27]

| SRS-Resource ::= | SEQUENCE { |
|---|---|
| srs-ResourceId | SRS-ResourceId, |
| nrofSRS-Ports | ENUMERATED {port1, ports2, ports4}, |
| ptrs-PortIndex | ENUMERATED {n0, n1 } |
| OPTIONAL,    -- Need R | |
| transmissionComb | CHOICE { |
| n2 | SEQUENCE { |
| combOffset-n2 | INTEGER (0..1), |
| cyclicShift-n2 | INTEGER (0..7) |
| }, | |
| n4 | SEQUENCE { |

| combOffset-n4 | INTEGER (0..3), |
|---|---|
| cyclicShift-n4 | INTEGER (0..11) |
| } | |
| }, | |
| resourceMapping | SEQUENCE { |
| startPosition | INTEGER (0..5), |
| nrofSymbols | ENUMERATED {n1, n2, n4}, |
| repetitionFactor | ENUMERATED {n1, n2, n4} |
| }, | |

| freqDomainPosition | INTEGER (0..67), |
|---|---|
| freqDomainShift | INTEGER (0..268), |
| freqHopping | SEQUENCE { |
| c-SRS | INTEGER (0..63), |
| b-SRS | INTEGER (0..3), |
| b-hop | INTEGER (0..3) |

```
        },
        groupOrSequenceHopping                    ENUMERATED { neither, groupHopping,
quenceHopping },
```

```
resourceType                          CHOICE {
        aperiodic                              SEQUENCE {
            ...
        },
        semi-persistent                    SEQUENCE {
            periodicityAndOffset-sp                SRS-PeriodicityAndOffset,
```

```
...
        },
        periodic                               SEQUENCE {
            periodicityAndOffset-p                 SRS-PeriodicityAndOffset,
            ...
        }
    },
    sequenceId                         INTEGER (0..1023),
    spatialRelationInfo                SRS-SpatialRelationInfo
OPTIONAL,     -- Need R
        ...
}
```

Configuration information spatialRelationInfo in Table 27 above may be applied, with reference to one reference signal, to a beam used for SRS transmission corresponding to beam information of the corresponding reference signal. For example, configuration of spatialRelationInfo may include information as in Table 28 below.

[Table 28]

```
SRS-SpatialRelationInfo ::=          SEQUENCE {
        servingCellId                         ServCellIndex              OPTIONAL,    --
Need S
        referenceSignal                       CHOICE {
            ssb-Index                             SSB-Index,
            csi-RS-Index                          NZP-CSI-RS-ResourceId,
            srs                                   SEQUENCE {
                resourceId                            SRS-ResourceId,
                uplinkBWP                             BWP-Id
            }
        }
}
```

Referring to the spatialRelationInfo configuration, an SS/PBCH block index, CSI-RS index, or SRS index may be configured as the index of a reference signal to be referred to in order to use beam information of a specific reference signal. Higher signaling referenceSignal corresponds to configuration information indicating which reference signal's beam information is to be referred to for corresponding SRS transmission, ssb-Index refers to the index of an SS/PBCH block, csi-RS-Index refers to the index of a CSI-RS, and srs refers to the index of an SRS. If upper signaling referenceSignal has a configured value of "ssb-Index", the UE may apply the reception beam which was used to receive the SS/PBCH block corresponding to ssb-Index as the transmission beam for the corresponding SRS transmission. If upper signaling referenceSignal has a configured value of "csi-RS-Index", the UE may apply the reception beam which was used to receive the CSI-RS corresponding to csi-RS-Index as the transmission beam for the corresponding SRS transmission. If upper signaling referenceSignal has a configured value of "srs", the UE may apply the reception beam which was used to transmit the SRS corresponding to srs as the transmission beam for the corresponding SRS transmission.

[PUSCH: regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 28 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 28 through upper signaling. If PUSCH transmission is operated by a configured grant, parameters applied to the PUSCH transmission are applied through configuredGrantConfig (upper signaling) in Table 28 except for dataScramblingIdentityPUSCH, txConfig, codebookSubset, maxRank, and scaling of UCI-OnPUSCH, which are provided by pusch-Config (upper signaling) in Table 29. If provided with transformPrecoder inside configuredGrantConfig (upper signaling) in Table 29, the UE applies tp-pi2BPSK inside pusch-Config in Table 30 to PUSCH transmission operated by a configured grant.

[Table 29]

| ConfiguredGrantConfig ::= | SEQUENCE { |
|---|---|
| frequencyHopping | ENUMERATED {intraSlot, interSlot} |
| OPTIONAL,    -- Need S, | |
| cg-DMRS-Configuration | DMRS-UplinkConfig, |
| mcs-Table | ENUMERATED {qam256, qam64LowSE} |
| qam64LowSE} | OPTIONAL,    -- Need S |
| mcs-TableTransformPrecoder | ENUMERATED {qam256, qam64LowSE} |
| OPTIONAL,    -- Need S | |

| uci-OnPUSCH | SetupRelease { CG-UCI- |
|---|---|

| | |
|---|---|
| OnPUSCH } | OPTIONAL, -- Need M |
| resourceAllocation | ENUMERATED { resourceAllocationType0, |
| resourceAllocationType1, dynamicSwitch }, | |
| rbg-Size | ENUMERATED {config2} |
| OPTIONAL, -- Need S | |
| powerControlLoopToUse | ENUMERATED {n0, n1}, |
| p0-PUSCH-Alpha | P0-PUSCH-AlphaSetId, |
| transformPrecoder | ENUMERATED {enabled, disabled} |
| OPTIONAL, -- Need S | |
| nrofHARQ-Processes | INTEGER(1..16), |

| | |
|---|---|
| repK | ENUMERATED {n1, n2, n4, n8}, |
| repK-RV | ENUMERATED {s1-0231, s2-0303, |
| s3-0000} | OPTIONAL, -- Need R |
| periodicity | ENUMERATED { |
| | sym2, sym7, sym1x14, |
| sym2x14, sym4x14, sym5x14, sym8x14, sym10x14, sym16x14, sym20x14, | |
| | sym32x14, |
| sym40x14, sym64x14, sym80x14, sym128x14, sym160x14, sym256x14, sym320x14, sym512x14, | |

| | |
|---|---|
| sym640x14, sym1024x14, sym1280x14, sym2560x14, sym5120x14, | |
| | sym6, sym1x12, |
| sym2x12, sym4x12, sym5x12, sym8x12, sym10x12, sym16x12, sym20x12, sym32x12, | |
| | sym40x12, sym64x12, |
| sym80x12, sym128x12, sym160x12, sym256x12, sym320x12, sym512x12, sym640x12, | |
| | sym1280x12, |
| sym2560x12 | |
| }, | |

| | |
|---|---|
| configuredGrantTimer | INTEGER (1..64) |
| OPTIONAL, -- Need R | |
| rrc-ConfiguredUplinkGrant | SEQUENCE { |
| timeDomainOffset | INTEGER (0..5119), |
| timeDomainAllocation | INTEGER (0..15), |
| frequencyDomainAllocation | BIT STRING (SIZE(18)), |
| antennaPort | INTEGER (0..31), |
| dmrs-SeqInitialization | INTEGER (0..1) |
| OPTIONAL, -- Need R | |

| precodingAndNumberOfLayers | INTEGER (0..63), |
|---|---|

| | |
|---|---|
| srs-ResourceIndicator | INTEGER (0..15) |
| OPTIONAL, -- Need R | |
| mcsAndTBS | |
| INTEGER (0..31), | |
| frequencyHoppingOffset | INTEGER (1.. |
| maxNrofPhysicalResourceBlocks-1) | OPTIONAL, -- Need R |
| pathlossReferenceIndex | INTEGER (0..maxNrofPUSCH- |
| PathlossReferenceRSs-1), | |
| ... | |
| } | |
| OPTIONAL, -- Need R | |
| ... | |
| } | |

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 30, which is upper signaling, is "codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 30, the UE does not expect scheduling through DCI format 0_1.

[Table 30]

| | |
|---|---|
| PUSCH-Config ::= | SEQUENCE { |
| dataScramblingIdentityPUSCH | INTEGER (0..1023) |
| OPTIONAL, -- Need S | |
| txConfig | ENUMERATED |
| {codebook, nonCodebook} | OPTIONAL, -- Need S |
| dmrs-UplinkForPUSCH-MappingTypeA | SetupRelease { DMRS-UplinkConfig } |
| OPTIONAL, -- Need M | |
| dmrs-UplinkForPUSCH-MappingTypeB | SetupRelease { DMRS-UplinkConfig } |
| OPTIONAL, -- Need M | |

```
        pusch-PowerControl                                         PUSCH-PowerControl
OPTIONAL,    -- Need M
```

```
frequencyHopping                                      ENUMERATED {intraSlot,
interSlot}                                     OPTIONAL,    -- Need S
       frequencyHoppingOffsetLists                 SEQUENCE (SIZE (1..4)) OF INTEGER
(1.. maxNrofPhysicalResourceBlocks-1)
OPTIONAL,    -- Need M
       resourceAllocation                          ENUMERATED { resourceAllocationType0,
resourceAllocationType1, dynamicSwitch},
       pusch-TimeDomainAllocationList                     SetupRelease   {   PUSCH-
TimeDomainResourceAllocationList }         OPTIONAL,    -- Need M
       pusch-AggregationFactor                           ENUMERATED { n2, n4, n8 }
OPTIONAL,    -- Need S
```

```
mcs-Table                                             ENUMERATED {qam256,
qam64LowSE}                                       OPTIONAL,    -- Need S
       mcs-TableTransformPrecoder                 ENUMERATED {qam256, qam64LowSE}
OPTIONAL,    -- Need S
       transformPrecoder                                 ENUMERATED {enabled,
disabled}                                         OPTIONAL,    -- Need S
       codebookSubset                                            ENUMERATED
{fullyAndPartialAndNonCoherent, partialAndNonCoherent,nonCoherent}
```

```
OPTIONAL, -- Cond codebookBased
       maxRank                                                    INTEGER (1..4)
OPTIONAL, -- Cond codebookBased
       rbg-Size                                                  ENUMERATED
{ config2}                                        OPTIONAL, -- Need S
       uci-OnPUSCH                                         SetupRelease { UCI-
OnPUSCH}                                          OPTIONAL, -- Need M
       tp-pi2BPSK                                         ENUMERATED {enabled}
OPTIONAL, -- Need S
       ...
}
```

Next, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (upper signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (upper signaling). In connection with codebook-based PUSCH transmission, the UE determines a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "nonCoherent", based on UE capability reported by the UE to the base station. If the UE reported "partialAndNonCoherent'" as UE capability, the UE does not expect that the value of codebookSubset (upper signaling) will be configured as "fullyAndPartialAndNonCoherent". In addition, if the UE reported "nonCoherent" as UE capability, UE does not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical for all SRS resources.

The UE transmits, to the base station, one or multiple SRS resources included in the SRS resource set wherein the value of usage is configured as "codebook" according to upper signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE may apply, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (upper signaling) is "aperiodic", the connected NZP CSI-RS is indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is located in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (higher signaling). With regard to non-codebook-based transmission, the UE does not expect that spatialRelationInfo which is upper signaling regarding the SRS resource and associatedCSI-RS inside SRS-ResourceSet (higher signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (higher signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is"nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

[PUSCH: preparation procedure time]

Next, a PUSCH preparation procedure time will be described. If a base station schedules a UE so as to transmit a PUSCH by using DCI format 0_0, 0_1, or 0_2, the UE may require a PUSCH preparation procedure time such that a PUSCH is transmitted by applying a transmission method (SRS resource transmission precoding method, the number of transmission layers, spatial domain transmission filter) indicated through DCI. The PUSCH preparation procedure time is defined in NR in consideration thereof. The PUSCH preparation procedure time of the UE may follow Equation 3 given below.

[Equation 3]

$$T_{proc,2} = \max((N_2 + d_{2,1} + d_2)(2048 + 144)\,\kappa 2^{-\mu} T_c + T_{ext} + T_{switch},\ d_{2,2})$$

Each parameter in $T_{proc,2}$ described above in Equation 3 may have the following meaning.

$N_2$: the number of symbols determined according to UE processing capability 1 or 2, based on the UE's capability, and numerology $\mu$. $N_2$ may have a value in Table 30 if UE processing capability 1 is reported according to the UE's capability report, and may have a value in Table 31 if UE processing capability 2 is reported, and if availability of UE processing capability 2 is configured through higher layer signaling.

[Table 31]

| $\mu$ | PUSCH preparation time $N_2$ [symbols] |
|---|---|
| 0 | 10 |
| 1 | 12 |
| 2 | 23 |
| 3 | 36 |

[Table 32]

| $\mu$ | PUSCH preparation time $N_2$ [symbols] |
|---|---|
| 0 | 5 |
| 1 | 5.5 |
| 2 | 11 for frequency range 1 |

- $d_{2,1}$: the number of symbols determined to be 0 if all resource elements of the first OFDM symbol of PUSCH transmission include DM-RSs, and to be 1 otherwise.
- $\kappa$: 64
- $\mu$: follows a value, among $\mu_{DL}$ and $\mu_{UL}$, which makes $T_{proc,2}$ larger. $\mu_{DL}$ refers to the numerology of a downlink used to transmit a PDCCH including DCI that schedules a PUSCH, and $\mu_{UL}$ refers to the numerology of an uplink used to transmit a PUSCH.
- $T_c$: has $1/(\Delta f_{max} \cdot N_f)$, $\Delta f_{max} = 480 \cdot 10^3$ *Hz, $N_f$* = 4096..
- $d_{2,2}$: follows a BWP switching time if DCI that schedules a PUSCH indicates BWP switching, and has 0 otherwise.
- $d_2$: if OFDM symbols overlap temporally between a PUSCH having a high priority index and a PUCCH having a low priority index, the $d_2$ value of the PUSCH having a high priority index is used. Otherwise, $d_2$ is 0.
- $T_{ext}$: if the UE uses a shared spectrum channel access scheme, the UE may calculate $T_{ext}$ and apply the same to a PUSCH preparation procedure time. Otherwise, $T_{ext}$ is assumed to be 0.
- $T_{switch}$: if an uplink switching spacing has been triggered, $T_{switch}$ is assumed to be the switching spacing time. Otherwise, $T_{switch}$ is assumed to be 0.

The base station and the UE determine that the PUSCH preparation procedure time is insufficient if the first symbol of a PUSCH starts earlier than the first uplink symbol in which a CP starts after Tproc,2 from the last symbol of a PDCCH including DCI that schedules the PUSCH, in view of the influence of timing advance between the uplink and the downlink and time domain resource mapping information of the PUSCH scheduled through the DCI. Otherwise, the base station and the UE determine that the PUSCH preparation procedure time is sufficient. The UE may transmit the PUSCH only if the PUSCH preparation procedure time is sufficient, and may ignore the DCI that schedules the PUSCH if the PUSCH preparation procedure time is insufficient.

[PUSCH: regarding repetition transmission]

Hereinafter, repetition transmission of an uplink data channel in a 5G system will be described in detail. A 5G system supports two types of uplink data channel repetition transmission methods, PUSCH repetition type A transmission and PUSCH repetition type B transmission. One of PUSCH repetition type A transmission and PUSCH repetition type B transmission may be configured for a UE through upper layer signaling.

## PUSCH repetition type A transmission

- As described above, the symbol length of an uplink data channel and the location of the start symbol may be determined by a time domain resource allocation method in one slot, and a base station may notify a UE of the number of repetition transmissions through upper layer signaling (for example, RRC signaling) or L1 signaling (for example, DCI).
- Based on the number of repetition transmissions received from the base station, the UE may repetitively transmit an uplink data channel having the same length and start symbol as the configured uplink data channel, in consecutive slots. If the base station configured a slot as a downlink for the UE, or if at least one of symbols of the uplink data channel configured for the UE is configured as a downlink, the UE omits uplink data channel transmission, but counts the number of repetition transmissions of the uplink data channel.

## PUSCH repetition type B transmission

As described above, the symbol length of an uplink data channel and the location of the start symbol may be determined by a time domain resource allocation method in one slot, and a base station may notify a UE of the number of repetition transmissions (numberofrepetitions) through upper layer signaling (for example, RRC signaling) or L1 signaling (for example, DCI).

- The nominal repetition of the uplink data channel is determined as follows, based on the previously configured start symbol and length of the uplink data channel. The slot in which the n$^{th}$ nominal repetition starts is given by $K_S + \left\lfloor \frac{S + n \cdot L}{N_{symb}^{slot}} \right\rfloor$, and the symbol starting in that slot is given by $mod\left(S + n \cdot L, N_{symb}^{slot}\right)$. The slot in which the n$^{th}$ nominal repetition ends is given by $K_S + \left\lfloor \frac{S + (n+1) \cdot L - 1}{N_{symb}^{slot}} \right\rfloor$, and the symbol ending in that slot is given by $mod\left(S + (n + 1) \cdot L - 1, N_{symb}^{slot}\right)$. Here, n=0,..., numberofrepetitions-1, S refers to the start symbol of the configured uplink data channel, and L refers to the symbol length of the configured uplink data channel. $K_S$ refers to the slot in which PUSCH transmission starts, and $N_{symb}^{slot}$ refers to the number of symbols per slot.

- The UE determines an invalid symbol for PUSCH repetition type B transmission. A symbol configured as a downlink by tdd-UL-DL-ConfigurationCommon or tdd-UL-DL-ConfigurationDedicated is determined as the invalid symbol for PUSCH repetition type B transmission. Additionally, the invalid symbol may be configured in an upper layer parameter (for example, InvalidSymbolPattern). The upper layer parameter (for example, InvalidSymbolPattern) may provide a symbol level bitmap across one or two slots, thereby configuring the invalid symbol. In the bitmap, 1 represents the invalid symbol. Additionally, the periodicity and pattern of the bitmap may be configured through the upper layer parameter (for example, InvalidSymbolPattern). If an upper layer parameter (for example, InvalidSymbolPattern) is configured, and if parameter InvalidSymbolPatternIndicator-ForDCIFormat0_1 or InvalidSymbolPatternIndicator-ForDCIFormat0_2 indicates 1, the UE applies an invalid symbol pattern, and if the above parameter indicates 0, the UE does not apply the invalid symbol pattern. If an upper layer parameter (for example, InvalidSymbolPattern) is configured, and if parameter InvalidSymbolPatternIndicator-ForDCIFormat0_1 or InvalidSymbolPatternIndicator-ForDCIFormat0_2 is not configured, the UE applies the invalid symbol pattern.

After an invalid symbol is determined, the UE may consider, with regard to each nominal repetition, that symbols other than the invalid symbol are valid symbols. If one or more valid symbols are included in each nominal repetition, the nominal repetition may include one or more actual repetitions. Each actual repetition includes a set of consecutive valid symbols available for PUSCH repeated transmission type B in one slot.

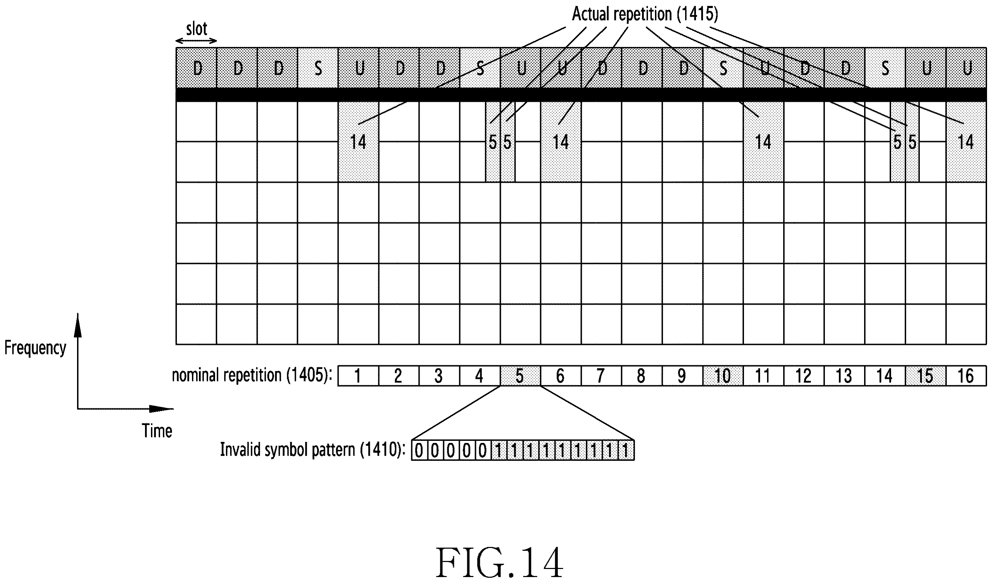

FIG. 14 illustrates an example of PUSCH repetition type B transmission in a wireless communication system according to an embodiment of the disclosure. The UE may receive the following configurations: the start symbol S of an uplink data channel is 0, the length L of the uplink data channel is 14, and the number of repeated transmissions is 16. In this case, nominal repetitions may appear in 16 consecutive slots (1405). Thereafter, the UE may determine that the symbol configured as a downlink symbol in each nominal repetition 1405 is an invalid symbol. The UE determines that symbols configured as 1 in the invalid symbol pattern 1410 are invalid symbols. If valid symbols other than invalid symbols in respective nominal repetitions constitute one or more consecutive symbols in one slot, they are configured and transmitted as actual repetitions (1415).

In addition, with regard to PUSCH repeated transmission, additional methods may be defined in NR Release 16 with regard to UL grant-based PUSCH transmission and configured grant-based PUSCH transmission, across slot boundaries, as follows:

- Method 1 (mini-slot level repetition): through one UL grant, two or more PUSCH repetition transmissions are scheduled inside one slot or across the boundary of consecutive slots. In connection with method 1, time domain resource allocation information inside DCI indicates resources of the first repetition transmission. In addition, time domain resource information of remaining repetition transmissions may be determined according to time domain resource information of the first repetition transmission, and the uplink or downlink direction determined with regard to each symbol of each slot. Each repetition transmission occupies consecutive symbols.

- Method 2 (multi-segment transmission): through one UL grant, two or more PUSCH repetition transmissions are scheduled in consecutive slots. Transmission no. 1 is designated for each slot, and the start point or repetition length differs between respective transmissions. In method 2, time domain resource allocation information inside DCI indicates the start point and repetition length of all repetition transmissions. In the case of performing repetition transmissions inside a single slot through method 2, if there are multiple bundles of consecutive uplink symbols in the corresponding slot, respective repetition transmissions may be performed with regard to respective uplink symbol bundles. If there is a single bundle of consecutive uplink symbols in the corresponding slot, PUSCH repetition transmission is performed once according to the method of NR Release 15.

- Method 3: two or more PUSCH repetition transmissions are scheduled in consecutive slots through two or more UL grants. Transmission no. 1 may be designated with regard to each slot, and the nth UL grant may be received before PUSCH transmission scheduled by the (n-1)th UL grant is over.

- Method 4: through one UL grant or one configured grant, one or multiple PUSCH repetition transmissions inside a single slot, or two or more PUSCH repetition transmissions across the boundary of consecutive slots may be supported. The number of repetitions indicated to the UE by the base station is only a nominal value, and the UE may actually perform a larger number of PUSCH repetition transmissions than the nominal number of repetitions. Time domain resource allocation information inside DCI or configured grant refers to resources of the first repetition transmission indicated by the base station. Time domain resource information of remaining repetition transmissions may be determined with reference to resource information of the first repetition transmission and the uplink or downlink direction of symbols. If time domain resource information of repetition transmission indicated by the base station spans a slot boundary or includes an uplink/downlink switching point, the corresponding repetition transmission may be divided into multiple repeated transmissions. One repetition transmission may be included in one slot with regard to each uplink period.

[PUSCH: frequency hopping process]

Hereinafter, frequency hopping of a physical uplink shared channel (PUSCH) in a 5G system will be described in detail.

5G supports two kinds of PUSCH frequency hopping methods with regard to each PUSCH repeated transmission type. First of all, in PUSCH repeated transmission type A, intra-slot frequency hopping and inter-slot frequency hopping are supported, and in PUSCH repeated transmission type B, inter-repetition frequency hopping and inter-slot frequency hopping are supported.

The intra-slot frequency hopping method supported in PUSCH repetition type A transmission may include a method in which a UE transmits allocated resources in the frequency domain, after changing the same by a configured frequency offset, by two hops in one slot. The start RB of each hop in connection with intra-slot frequency hopping may be expressed by Equation 4 below.

[Equation 4]\

$$RB_{start} = \begin{cases} RB_{start} & i = 0 \\ (RB_{start} + RB_{offset}) mod N_{BWP}^{size} & i = 1 \end{cases}$$

In Equation 4, i=0 and i=1 may denote the first and second hops, respectively, and $RB_{start}$ may denote the start RB in a UL BWP and may be calculated from a frequency resource allocation method. $RB_{offset}$ denotes a frequency offset between two hops through an higher layer parameter. The number of symbols of the first hop may be represented by $\lfloor N_{symb}^{PUSCH,s} / 2 \rfloor$ , and number of symbols of the second hop may be represented by $N_{symb}^{PUSCH,s} - \lfloor N_{symb}^{PUSCH,s} / 2 \rfloor$ . $N_{symb}^{PUSCH,s}$ is the length of PUSCH transmission in one slot and is expressed by the number of OFDM symbols.

Next, the inter-slot frequency hopping method supported in PUSCH repetition type A and type B transmissions is a method in which the UE transmits allocated resources in the frequency domain, after changing the same by a configured frequency offset, in each slot. The start RB during slot $n_s^{\mu}$ in connection with inter-slot frequency hopping may be expressed by Equation 5 below.

[Equation 5]

$$RB_{start}(n_s^{\mu}) = \begin{cases} RB_{start} & n_s^{\mu} mod 2 = 0 \\ (RB_{start} + RB_{offset}) mod N_{BWP}^{size} & n_s^{\mu} mod 2 = 1 \end{cases}$$

In Equation 5, $n_s^{\mu}$ denotes the current slot number during multi-slot PUSCH transmission, and $RB_{start}$ denotes the start RB inside a UL BWP and is calculated from a frequency resource allocation method. $RB_{offset}$ denotes a frequency offset between two hops through an higher layer parameter.

Next, the inter-repetition frequency hopping method supported in PUSCH repetition type B transmission is a method in which resources allocated in the frequency domain regarding one or multiple actual repetitions in each nominal repetition are moved by a configured frequency offset and then transmitted. The index $RB_{start(n)}$ of the start RB in the frequency domain regarding one or multiple actual repetitions in the nth nominal repetition may follow Equation 6 given below.

[Equation 6]

$$RB_{start}(n) = \begin{cases} RB_{start} & n \bmod 2 = 0 \\ (RB_{start} + RB_{offset}) \bmod N_{BWP}^{size} & n \bmod 2 = 1 \end{cases}$$

In Equation 6, n denotes the index of nominal repetition, and $RB_{offset}$ denotes an RB offset between two hops through an higher layer parameter.

[PUSCH: Multiplexing rules during AP/SP CSI reporting]

Hereinafter, a method of measuring and reporting a channel state in the 5G communication system will be described in detail. Channel state information (CSI) may include a channel quality indicator (channel quality information (CQI)), a precoding matrix index (precoding matrix indicator (PMI)), a CSI-RS resource indicator (CRI), an SS/PBCH block resource indicator (SSBRI), a layer indicator (LI), a rank indicator (RI), a reference signal received power (L1-RSRP), and/or the like. A base station may control time and frequency resources for the aforementioned CSI measurement and report of a UE.

For the aforementioned CSI measurement and report, the UE may be configured, via higher-layer signaling, with setting information for N (N≥1) CSI reports (CSI-ReportConfig), setting information for M (M≥1) RS transmission resources (CSI-ResourceConfig), and list information of one or two trigger states (CSI-AperiodicTriggerStateList, CSI-SemiPersistentOnPUSCH-TriggerStateList). The configuration information for CSI measurement and reporting described above may be, more specifically, as described in [Table 33] to [Table 39] below.

[Table 33] CSI-ReportConfig

The IE CSI-ReportConfig is used to configure a periodic or semi-persistent report sent on PUCCH on the cell in which the CSI-ReportConfig is included, or to configure a semi-persistent or aperiodic report sent on PUSCH triggered by DCI received on the cell in which the CSI-ReportConfig is included (in this case, the cell on which the report is sent is determined by the received DCI). See TS 38.214 [19], clause 5.2.1.

***CSI-ReportConfig* information element**

[Table 33]

```
-- ASN1START
-- TAG-CSI-REPORTCONFIG-START

CSI-ReportConfig ::=              SEQUENCE {
        reportConfigId                   CSI-ReportConfigId,
        carrier                          ServCellIndex
OPTIONAL,      -- Need S
        resourcesForChannelMeasurement       CSI-ResourceConfigId,
        csi-IM-ResourcesForInterference      CSI-ResourceConfigId
OPTIONAL,      -- Need R
```

```
        nzp-CSI-RS-ResourcesForInterference    CSI-ResourceConfigId
OPTIONAL,      -- Need R
        reportConfigType                     CHOICE {
            periodic                             SEQUENCE {
                reportSlotConfig                     CSI-
ReportPeriodicityAndOffset,
                pucch-CSI-ResourceList               SEQUENCE (SIZE
(1..maxNrofBWPs)) OF PUCCH-CSI-Resource
            },
            semiPersistentOnPUCCH                SEQUENCE {
                reportSlotConfig                     CSI-
ReportPeriodicityAndOffset,
                pucch-CSI-ResourceList               SEQUENCE (SIZE
(1..maxNrofBWPs)) OF PUCCH-CSI-Resource
```

```
            },
            semiPersistentOnPUSCH                SEQUENCE {
                reportSlotConfig
ENUMERATED {sl5, sl10, sl20, sl40, sl80, sl160, sl320},
                reportSlotOffsetList                 SEQUENCE (SIZE
(1.. maxNrofUL-Allocations)) OF INTEGER(0..32),
```

```
        p0alpha                                    P0-PUSCH-AlphaSetId
            },
            aperiodic                              SEQUENCE {
                reportSlotOffsetList               SEQUENCE (SIZE
(1..maxNrofUL-Allocations)) OF INTEGER(0..32)
            }
        },
        reportQuantity                             CHOICE {
            none                                   NULL,
```

```
        cri-RI-PMI-CQI                             NULL,
            cri-RI-i1                              NULL,
            cri-RI-i1-CQI                          SEQUENCE {
                pdsch-BundleSizeForCSI
ENUMERATED {n2, n4}
OPTIONAL      -- Need S
            },
            cri-RI-CQI                             NULL,
            cri-RSRP                               NULL,
            ssb-Index-RSRP                         NULL,
            cri-RI-LI-PMI-CQI                      NULL
        },
```

```
        reportFreqConfiguration                    SEQUENCE {
            cqi-FormatIndicator                    ENUMERATED
{ widebandCQI, subbandCQI }                        OPTIONAL,    --
Need R
            pmi-FormatIndicator                    ENUMERATED
{ widebandPMI, subbandPMI }                        OPTIONAL,    --
Need R
                csi-ReportingBand                  CHOICE {
                subbands3                          BIT STRING(SIZE(3)),
                subbands4                          BIT STRING(SIZE(4)),
                subbands5                          BIT STRING(SIZE(5)),
```

```
                subbands6                          BIT STRING(SIZE(6)),
                subbands7                          BIT STRING(SIZE(7)),
                subbands8                          BIT STRING(SIZE(8)),
                subbands9                          BIT STRING(SIZE(9)),
                subbands10                         BIT STRING(SIZE(10)),
                subbands11                         BIT STRING(SIZE(11)),
                subbands12                         BIT STRING(SIZE(12)),
                subbands13                         BIT STRING(SIZE(13)),
                subbands14                         BIT STRING(SIZE(14)),
                subbands15                         BIT STRING(SIZE(15)),
                subbands16                         BIT STRING(SIZE(16)),
                subbands17                         BIT STRING(SIZE(17)),
                subbands18                         BIT STRING(SIZE(18)),

                ...,
                subbands19-v1530                   BIT STRING(SIZE(19))
            } OPTIONAL      -- Need S


        }
OPTIONAL,    -- Need R
```

```
            timeRestrictionForChannelMeasurements              ENUMERATED
{configured, notConfigured},
            timeRestrictionForInterferenceMeasurements
ENUMERATED {configured, notConfigured},
            codebookConfig
CodebookConfig
OPTIONAL,     -- Need R
            dummy
ENUMERATED {n1, n2}
OPTIONAL,     -- Need R
            groupBasedBeamReporting                    CHOICE {
                enabled                                    NULL,
                disabled
SEQUENCE {
                nrofReportedRS
ENUMERATED {n1, n2, n3, n4}
```

```
            OPTIONAL     -- Need S
                }
            },
            cqi-Table                    ENUMERATED {table1, table2,
table3, spare1}                              OPTIONAL,    --
Need R
            subbandSize                    ENUMERATED {value1, value2},
            non-PMI-PortIndication         SEQUENCE (SIZE (1..maxNrofNZP-
CSI-RS-ResourcesPerConfig)) OF PortIndexFor8Ranks OPTIONAL,    -- Need R
```

```
            OPTIONAL     -- Need S
                }
            },
            cqi-Table                    ENUMERATED {table1, table2,
table3, spare1}                              OPTIONAL,    --
Need R
            subbandSize                    ENUMERATED {value1, value2},
            non-PMI-PortIndication         SEQUENCE (SIZE (1..maxNrofNZP-
CSI-RS-ResourcesPerConfig)) OF PortIndexFor8Ranks OPTIONAL,    -- Need R
            ...,
            [[
            semiPersistentOnPUSCH-v1530              SEQUENCE {
                reportSlotConfig-v1530                   ENUMERATED {sl4,
sl8, sl16}
                }
OPTIONAL     -- Need R
            ]],
            [[
            semiPersistentOnPUSCH-v1610              SEQUENCE {
                reportSlotOffsetListDCI-0-2-r16          SEQUENCE (SIZE (1..
maxNrofUL-Allocations-r16)) OF INTEGER(0..32)    OPTIONAL,    -- Need
R
                reportSlotOffsetListDCI-0-1-r16          SEQUENCE (SIZE (1..
maxNrofUL-Allocations-r16)) OF INTEGER(0..32)    OPTIONAL    -- Need
R
                }
```

```
OPTIONAL,        -- Need R
            aperiodic-v1610                        SEQUENCE {
                    reportSlotOffsetListDCI-0-2-r16        SEQUENCE (SIZE (1..
maxNrofUL-Allocations-r16)) OF INTEGER(0..32)    OPTIONAL,      -- Need
R
                    reportSlotOffsetListDCI-0-1-r16        SEQUENCE (SIZE (1..
maxNrofUL-Allocations-r16)) OF INTEGER(0..32)    OPTIONAL        -- Need
R
```

```
            }
OPTIONAL,        -- Need R
            reportQuantity-r16                     CHOICE {
                cri-SINR-r16                            NULL,
                ssb-Index-SINR-r16                      NULL
            }
OPTIONAL,      -- Need R
            codebookConfig-r16
CodebookConfig-r16
OPTIONAL        -- Need R
                ]]
            }

        CSI-ReportPeriodicityAndOffset ::=    CHOICE {
            slots4                                  INTEGER(0..3),
            slots5                                  INTEGER(0..4),
            slots8                                  INTEGER(0..7),
            slots10                                 INTEGER(0..9),
            slots16                                 INTEGER(0..15),
            slots20                                 INTEGER(0..19),
            slots40                                 INTEGER(0..39),
```

```
        slots80                                 INTEGER(0..79),
            slots160                                INTEGER(0..159),
            slots320                                INTEGER(0..319)
        }

        PUCCH-CSI-Resource ::=                  SEQUENCE {
            uplinkBandwidthPartId                   BWP-Id,
            pucch-Resource                          PUCCH-ResourceId
        }

        PortIndexFor8Ranks ::=                  CHOICE {
            portIndex8                              SEQUENCE{
                rank1-8                             PortIndex8
OPTIONAL,      -- Need R
                rank2-8                             SEQUENCE(SIZE(2)) OF PortIndex8
OPTIONAL,      -- Need R
                rank3-8                             SEQUENCE(SIZE(3)) OF PortIndex8
OPTIONAL,      -- Need R
                rank4-8                             SEQUENCE(SIZE(4)) OF PortIndex8
OPTIONAL,      -- Need R
```

```
        rank5-8                             SEQUENCE(SIZE(5)) OF PortIndex8
OPTIONAL,      -- Need R
                rank6-8                             SEQUENCE(SIZE(6)) OF PortIndex8
```

55

```
                OPTIONAL,      -- Need R
                        rank7-8                 SEQUENCE(SIZE(7)) OF PortIndex8
                OPTIONAL,      -- Need R
                        rank8-8                 SEQUENCE(SIZE(8)) OF PortIndex8
                OPTIONAL      -- Need R
                        },
                    portIndex4              SEQUENCE{
                        rank1-4               PortIndex4
                OPTIONAL,      -- Need R
                        rank2-4                 SEQUENCE(SIZE(2)) OF PortIndex4
                OPTIONAL,      -- Need R
                        rank3-4                 SEQUENCE(SIZE(3)) OF PortIndex4
                OPTIONAL,      -- Need R
                        rank4-4                 SEQUENCE(SIZE(4)) OF PortIndex4
                OPTIONAL       -- Need R
                        },
                    portIndex2                      SEQUENCE{
```

```
                    rank1-2                        PortIndex2
                OPTIONAL,      -- Need R
                        rank2-2               SEQUENCE(SIZE(2)) OF PortIndex2
                OPTIONAL       -- Need R
                        },
                    portIndex1                     NULL
                }

                PortIndex8::=                    INTEGER (0..7)
                PortIndex4::=                    INTEGER (0..3)
                PortIndex2::=                    INTEGER (0..1)

                -- TAG-CSI-REPORTCONFIG-STOP
                -- ASN1STOP
```

| **[*CSI-ReportConfig* field descriptions** |
|---|
| ***carrier*** |
| Indicates in which serving cell the *CSI-ResourceConfig* indicated below are to be found. If the field is absent, the resources are on the same serving cell as this report configuration. |
| ***codebookConfig*** |
| Codebook configuration for Type-1 or Type-2 including codebook subset restriction. Network does not configure codebookConfig and codebookConfig-r16 simultaneously to a UE |
| ***cqi-FormatIndicator*** |
| Indicates whether the UE shall report a single (wideband) or multiple (subband) CQI. (see TS 38.214 [19], clause 5.2.1.4). |
| ***cqi-Table*** |
| Which CQI table to use for CQI calculation (see TS 38.214 [19], clause 5.2.2.1). |
| ***csi-IM-ResourcesForInterference*** |
| CSI IM resources for interference measurement. *csi-ResourceConfigId* of a *CSI-ResourceConfig* included in the configuration of the serving cell indicated with the field "carrier" above. The *CSI-ResourceConfig* indicated here contains only CSI-IM resources. The *bwp-Id* in that *CSI-ResourceConfig* is the same value as the *bwp-Id* in the *CSI-ResourceConfig* indicated by *resourcesForChannelMeasurement.* |
| ***csi-ReportingBand*** |

(continued)

| **[*CSI-ReportConfig* field descriptions** |
|---|
| Indicates a contiguous or non-contiguous subset of subbands in the bandwidth part which CSI shall be reported for. Each bit in the bit-string represents one subband. The rightmost bit in the bit string represents the lowest subband in the BWP. The choice determines the number of subbands (subbands3 for 3 subbands, subbands4 for 4 subbands, and so on) (see TS 38.214 [19], clause 5.2.1.4). This field is absent if there are less than 24 PRBs (no sub band) and present otherwise, the number of sub bands can be from 3 (24 PRBs, sub band size 8) to 18 (72 PRBs, sub band size 4). |
| *dummy* <br> This field is not used in the specification. If received it shall be ignored by the UE. |
| *groupBasedBeamReporting* <br> Turning on/off group beam based reporting (see TS 38.214 [19], clause 5.2.1.4). |
| *non-PMI-PortIndication* <br> Port indication for RI/CQI calculation. For each CSI-RS resource in the linked ResourceConfig for channel measurement, a port indication for each rank R, indicating which R ports to use. Applicable only for non-PMI feedback (see TS 38.214 [19], clause 5.2.1.4.2). <br> The first entry in *non-PMI-PortIndication* corresponds to the NZP-CSI-RS-Resource indicated by the first entry in *nzp-CSI-RS-Resources* in the *NZP-CSI-RS-ResourceSet* indicated in the first entry of *nzp-CSI-RS-ResourceSet-List* of the *CSI-ResourceConfig* whose *CSI-ResourceConfigId* is indicated in a CSI-MeasId together with the above *CSI-ReportConfigId;* the second entry in *non-PMI-PortIndication* corresponds to the NZP-CSI-RS-Resource indicated by the second entry in *nzp-CSI-RS-Resources* in the *NZP-CSI-RS-ResourceSet* indicated in the first entry of *nzp-CSI-RS-ResourceSetList* of the same *CSI-ResourceConfig,* and so on until the NZP-CSI-RS-Resource indicated by the last entry in *nzp-CSI-RS-Resources* in the in the *NZP-CSI-RS-ResourceSet* indicated in the first entry of *nzp-CSI-RS-ResourceSetList* of the same *CSI-ResourceConfig.* Then the next entry corresponds to the NZP-CSI-RS-Resource indicated by the first entry in *nzp-CSI-RS-Resources* in the *NZP-CSI-RS-ResourceSet* indicated in the second entry of *nzp-CSI-RS-ResourceSetList* of the same *CSI-ResourceConfig* and so on. |
| *nrofReportedRS* <br> The number (N) of measured RS resources to be reported per report setting in a non-group-based report. N <= N_max, where N_max is either 2 or 4 depending on UE capability. (see TS 38.214 [19], clause 5.2.1.4) When the field is absent the UE applies the value 1. |
| *nzp-CSI-RS-ResourcesForInterference* <br> NZP CSI RS resources for interference measurement. *csi-ResourceConfigId* of a *CSI-ResourceConfig* included in the configuration of the serving cell indicated with the field "carrier" above. The *CSI-ResourceConfig* indicated here contains only NZP-CSI-RS resources. The *bwp-Id* in that *CSI-ResourceConfig* is the same value as the *bwp-Id* in the *CSI-ResourceConfig* indicated by *resourcesForChannelMeasurement.* |
| *p0alpha* <br> Index of the p0-alpha set determining the power control for this CSI report transmission (see TS 38.214 [19], clause 6.2.1.2). |
| *pdsch-BundleSizeForCSI* <br> PRB bundling size to assume for CQI calculation when *reportQuantity* is CRI/RI/il/CQI. If the field is absent, the UE assumes that no PRB bundling is applied (see TS 38.214 [19], clause 5.2.1.4.2). |
| *pmi-FormatIndicator* <br> Indicates whether the UE shall report a single (wideband) or multiple (subband) PMI. (see TS 38.214 [19], clause 5.2.1.4). |
| *pucch-CSI-ResourceList* <br> Indicates which PUCCH resource to use for reporting on PUCCH. |
| *reportConfigType* <br> Time domain behavior of reporting configuration. |
| *reportFreqConfiguration* <br> Reporting configuration in the frequency domain. (see TS 38.214 [19], clause 5.2.1.4). |
| *reportQuantity* |

(continued)

| [*CSI-ReportConfig* field descriptions |
|---|
| The CSI related quantities to report. see TS 38.214 [19], clause 5.2.1. If the field *reportOuantity-r16* is present, UE shall ignore *reportOuantity* (without suffix). |
| **reportSlotConfig**<br>Periodicity and slot offset (see TS 38.214 [19], clause 5.2.1.4). If the field *reportSlotConfig-v1530* is present, the UE shall ignore the value provided in *reportSlotConfig* (without suffix). |
| |
| **reportSlotOffsetList, reportSlotOffsetListDCI-0-1, reportSlotOffsetListDCI-0-2**<br>Timing offset Y for semi persistent reporting using PUSCH. This field lists the allowed offset values. This list must have the same number of entries as the *pusch-TimeDomainAllocationList* in *PUSCH-Config.* A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on. The first report is transmitted in slot n+Y, second report in n+Y+P, where P is the configured periodicity.<br>Timing offset Y for aperiodic reporting using PUSCH. This field lists the allowed offset values. This list must have the same number of entries as the *pusch-TimeDomainAllocationList* in *PUSCH-Config.* A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on (see TS 38.214 [19], clause 6.1.2.1). The field *reportSlotOffsetList* applies to DCI format 0_0, the field *reportSlotOffsetListDCI-0-1* applies to DCI format 0_1 and the field *reportSlotOffsetListDCI-0-2* applies to DCI format 0 2 (see TS 38.214 [19], clause 6.1.2.1). |
| |
| **resourcesForChannelMeasurement**<br>Resources for channel measurement. *csi-ResourceConfigId* of a *CSI-ResourceConfig* included in the configuration of the serving cell indicated with the field "carrier" above. The *CSI-ResourceConfig* indicated here contains only NZP-CSI-RS resources and/or SSB resources. This *CSI-ReportConfig* is associated with the DL BWP indicated by *bwp-Id* in that *CSI-ResourceConfig.* |
| **subbandSize**<br>Indicates one out of two possible BWP-dependent values for the subband size as indicated in TS 38.214 [19], table 5.2.1.4-2 . If *csi-ReportingBand* is absent, the UE shall ignore this field. |
| **timeRestrictionForChannelMeasurements**<br>Time domain measurement restriction for the channel (signal) measurements (see TS 38.214 [19], clause 5.2.1.1). |
| **timeRestrictionForInterferenceMeasurements**<br>Time domain measurement restriction for interference measurements (see TS 38.214 [19], clause 5.2.1.1). |

[Table 34] CSI-ReportConfigThe IE CSI-ResourceConfig defines a group of one or more NZP-CSI-RS-ResourceSet, CSI-IM-ResourceSet and/or CSI-SSB-ResourceSet.

*CSI-ResourceConfig* information element

[Table 34]

```
-- ASN1START
-- TAG-CSI-RESOURCECONFIG-START

CSI-ResourceConfig ::=         SEQUENCE {
        csi-ResourceConfigId           CSI-ResourceConfigId,
        csi-RS-ResourceSetList         CHOICE {
            nzp-CSI-RS-SSB                   SEQUENCE {
                nzp-CSI-RS-ResourceSetList    SEQUENCE (SIZE (1..maxNrofNZP-
CSI-RS-ResourceSetsPerConfig)) OF NZP-CSI-RS-ResourceSetId

OPTIONAL, -- Need R
                csi-SSB-ResourceSetList         SEQUENCE (SIZE (1..maxNrofCSI-
SSB-ResourceSetsPerConfig)) OF CSI-SSB-ResourceSetId    OPTIONAL    -- Need R
            },
            csi-IM-ResourceSetList          SEQUENCE (SIZE (1..maxNrofCSI-IM-
ResourceSetsPerConfig)) OF CSI-IM-ResourceSetId
            },
```

```
        bwp-Id                          BWP-Id,
            resourceType                     ENUMERATED { aperiodic,
semiPersistent, periodic },
            ...
        }

-- TAG-CSI-RESOURCECONFIG-STOP
-- ASN1STOP
```

| **CSI-ResourceConfig field descriptions** |
|---|
| **bwp-Id** <br> The DL BWP which the CSI-RS associated with this *CSI-ResourceConfig* are located in (see TS 38.214 [19], clause 5.2.1.2. |
| **csi-IM-ResourceSetList** <br> List of references to CSI-IM resources used for beam measurement and reporting in a CSI-RS resource set. Contains up to *maxNrofCSI-IM-ResourceSetsPerConfig* resource sets if *resourceType* is 'aperiodic' and 1 otherwise (see TS 38.214 [19], clause 5.2.1.2). |
| **csi-ResourceConfigId** <br> Used in *CSI-ReportConfig* to refer to an instance of *CSI-ResourceConfig.* |
| **csi-SSB-ResourceSetList** <br> List of references to SSB resources used for beam measurement and reporting in a CSI-RS resource set (see TS 38.214 [19], clause 5.2.1.2). |
| **nzp-CSI-RS-ResourceSetList** <br> List of references to NZP CSI-RS resources used for beam measurement and reporting in a CSI-RS resource set. Contains up to *maxNrofNZP-CSI-RS-ResourceSetsPerConfig* resource sets if *resourceType* is 'aperiodic' and 1 otherwise (see TS 38.214 [19], clause 5.2.1.2). |
| **resourceType** <br> Time domain behavior of resource configuration (see TS 38.214 [19], clause 5.2.1.2). It does not apply to resources provided in the *csi-SSB-ResourceSetList.* |

[Table 35] NZP-CSI-RS-ResourceSet

The IE NZP-CSI-RS-ResourceSet is a set of Non-Zero-Power (NZP) CSI-RS resources (their IDs) and set-specific parameters.

**NZP-CSI-RS-ResourceSet information element**

[Table 35]

```
-- ASN1START
-- TAG-NZP-CSI-RS-RESOURCESET-START
NZP-CSI-RS-ResourceSet ::=          SEQUENCE {
     nzp-CSI-ResourceSetId               NZP-CSI-RS-ResourceSetId,
     nzp-CSI-RS-Resources                 SEQUENCE (SIZE
(1..maxNrofNZP-CSI-RS-ResourcesPerSet)) OF NZP-CSI-RS-ResourceId,
     repetition                           ENUMERATED { on, off }
OPTIONAL,    -- Need S
```

```
     aperiodicTriggeringOffset           INTEGER(0..6)
OPTIONAL,    -- Need S
     trs-Info                             ENUMERATED {true}
OPTIONAL,    -- Need R

     ...,
     [[
     aperiodicTriggeringOffset-r16        INTEGER(0..31)
OPTIONAL     -- Need S
     ]]
     }


-- TAG-NZP-CSI-RS-RESOURCESET-STOP
-- ASN1STOP
```

| NZP-CSI-RS-ResourceSet field descriptions |
|---|
| **nperiodicTriggerircgOffset, aperiodicTriggeringOffset-r16**<br>Offset X between the slot containing the DCI that triggers a set of aperiodic NZP CSI-RS resources and the slot in which the CSI-RS resource set is transmitted. For *aperiodicTriggeringOffset,* the value 0 corresponds to 0 slots, value 1 corresponds to 1 slot, value 2 corresponds to 2 slots, value 3 corresponds to 3 slots, value 4 corresponds to 4 slots, value 5 corresponds to 16 slots, value 6 corresponds to 24 slots. For *aperiodicTriggeringOffset-r16,* the value indicates the number of slots. The network configures only one of the fields. When neither field is included, the UE applies the value 0. |
| **nzp-CSI-RS-Resources**<br>NZP-CSI-RS-Resources associated with this NZP-CSI-RS resource set (see TS 38.214 [19], clause 5.2). For CSI, there are at most 8 NZP CSI RS resources per resource set. |
| **repetition**<br>Indicates whether repetition is on/off. If the field is set to *off* or if the field is absent, the UE may not assume that the NZP-CSI-RS resources within the resource set are transmitted with the same downlink spatial domain transmission filter (see TS 38.214 [19], clauses 5.2.2.3.1 and 5.1.6.1.2). It can only be configured for CSI-RS resource sets which are associated with *CSI-ReportConfig* with report of L1 RSRP or "no report". |
| **trs-Info**<br>Indicates that the antenna port for all NZP-CSI-RS resources in the CSI-RS resource set is same. If the field is absent or released the UE applies the value *false* (see TS 38.214 [19], clause 5.2.2.3.1). |

[Table 36] CSI-SSB-ResourceSet

The IE CSI-SSB-ResourceSet is used to configure one SS/PBCH block resource set which refers to SS/PBCH as indicated in ServingCellConfigCommon.

***CSI-SSB-ResourceSet* information element**

[Table 36]

```
-- ASN1START
-- TAG-CSI-SSB-RESOURCESET-START

CSI-SSB-ResourceSet ::=                SEQUENCE {
      csi-SSB-ResourceSetId              CSI-SSB-ResourceSetId,
      csi-SSB-ResourceList               SEQUENCE (SIZE(1..maxNrofCSI-
SSB-ResourcePerSet)) OF SSB-Index,
      ...
}

-- TAG-CSI-SSB-RESOURCESET-STOP
-- ASN1STOP
```

[Table 37] CSI-IM-ResourceSet

The IE CSI-IM-ResourceSet is used to configure a set of one or more CSI Interference Management (IM) resources (their IDs) and set-specific parameters.

***CSI-IM-ResourceSet* information element**

[Table 37]

```
-- ASN1START
-- TAG-CSI-IM-RESOURCESET-START

CSI-IM-ResourceSet ::=                SEQUENCE {
      csi-IM-ResourceSetId              CSI-IM-ResourceSetId,
      csi-IM-Resources                  SEQUENCE (SIZE(1..maxNrofCSI-
IM-ResourcesPerSet)) OF CSI-IM-ResourceId,
      ...
}
-- TAG-CSI-IM-RESOURCESET-STOP
-- ASN1STOP
```

| *CSI-IM-ResourceSet field descriptions* |
|---|
| ***csi-IM-Resources***<br>CSI-IM-Resources associated with this CSI-IM-ResourceSet (see TS 38.214 [19], clause 5.2) |

[Table 38] CSI-AperiodicTrrigerStateList

The CSI-AperiodicTriggerStateList IE is used to configure the UE with a list of aperiodic trigger states. Each codepoint of the DCI field "CSI request" is associated with one trigger state. Upon reception of the value associated with a trigger state, the UE will perform measurement of CSI-RS (reference signals) and aperiodic reporting on L1 according to all entries in the associatedReportConfigInfoList for that trigger state.

***CSI-AperiodicTriggerStateList* information element**

[Table 38]

```
-- ASN1START
-- TAG-CSI-APERIODICTRIGGERSTATELIST-START

CSI-AperiodicTriggerStateList ::=     SEQUENCE (SIZE (1..maxNrOfCSI-AperiodicTriggers))
OF CSI-AperiodicTriggerState

CSI-AperiodicTriggerState ::=          SEQUENCE {
        associatedReportConfigInfoList          SEQUENCE
(SIZE(1..maxNrofReportConfigPerAperiodicTrigger)) OF CSI-AssociatedReportConfigInfo,
        ...
```

```
        }

        CSI-AssociatedReportConfigInfo ::=          SEQUENCE {
                reportConfigId                              CSI-ReportConfigId,
                resourcesForChannel                         CHOICE {
                        nzp-CSI-RS                              SEQUENCE {
                                resourceSet                             INTEGER (1..maxNrofNZP-CSI-RS-
ResourceSetsPerConfig),
                                qcl-info                                SEQUENCE (SIZE(1..maxNrofAP-CSI-
RS-ResourcesPerSet)) OF TCI-StateId OPTIONAL -- Cond Aperiodic
                        },
                        csi-SSB-ResourceSet                     INTEGER (1..maxNrofCSI-SSB-
ResourceSetsPerConfig)
                },
                csi-IM-ResourcesForInterference         INTEGER(1..maxNrofCSI-IM-
ResourceSetsPerConfig)           OPTIONAL, -- Cond CSI-IM-ForInterference
                nzp-CSI-RS-ResourcesForInterference INTEGER (1..maxNrofNZP-CSI-RS-
ResourceSetsPerConfig)       OPTIONAL, -- Cond NZP-CSI-RS-ForInterference
                ...
        }
```

[440]

```
        -- TAG-CSI-APERIODICTRIGGERSTATELIST-STOP
        -- ASN1STOP
```

| ***CSI-AssociatedReportConfigInfo* field descriptions** |
|---|
| ***csi-IM-ResourcesForInterference***<br>CSI-IM-ResourceSet for interference measurement. Entry number in csi-IM-ResourceSetList in the CSI-ResourceConfig indicated by csi-IM-ResourcesForInterference in the CSI-ReportConfig indicated by report-ConfigId above (1 corresponds to the first entry, 2 to the second entry, and so on). The indicated CSI-IM-ResourceSet should have exactly the same number of resources like the NZP-CSI-RS-ResourceSet indicated in nzp-CSI-RS-ResourcesforChannel. |
| ***csi-SSB-ResourceSet*** |

(continued)

| **CSI-AssociatedReportConfigInfo field descriptions** |
|---|
| CSI-SSB-ResourceSet for channel measurements. Entry number in csi-SSB-ResourceSetList in the CSI-ResourceConfig indicated by resourcesForChannelMeasurement in the CSI-ReportConfig indicated by reportConfigId above (1 corresponds to the first entry, 2 to the second entry, and so on). |
| **nzp-CSI-RS-ResourcesForInterference**<br>NZP-CSI-RS-ResourceSet for interference measurement. Entry number in nzp-CSI-RS-ResourceSetList in the CSI-ResourceConfig indicated by nzp-CSI-RS-ResourcesForInterference in the CSI-ReportConfig indicated by reportConfigId above (1 corresponds to the first entry, 2 to the second entry, and so on). |
| **qcl-info**<br>List of references to TCI-States for providing the QCL source and QCL type for each NZP-CSI-RS-Resource listed in nzp-CSI-RS-Resources of the NZP-CSI-RS-ResourceSet indicated by nzp-CSI-RS-ResourcesforChannel. Each *TCI-StateId* refers to the TCI-State which has this value for *tci-StateId* and is defined in *tci-StatesToAddModList* in the *PDSCH-Config* included in the *BWP-Downlink* corresponding to the serving cell and to the DL BWP to which the *resourcesForChannelMeasurement* (in the *CSI-ReportConfig* indicated by *reportConfigId* above) belong to. First entry in qcl-info-forChannel corresponds to first entry in nzp-CSI-RS-Resources of that NZP-CSI-RS-ResourceSet, second entry in qcl-info-forChannel corresponds to second entry in nzp-CSI-RS-Resources, and so on (see TS 38.214 [19], clause 5.2.1.5.1) |
| **reportConfigId**<br>The reportConfigId of one of the CSI-ReportConfigToAddMod configured in CSI-MeasConfig |
| **resourceSet**<br>NZP-CSI-RS-ResourceSet for channel measurements. Entry number in nzp-CSI-RS-ResourceSetList in the CSI-ResourceConfig indicated by resourcesForChannelMeasurement in the CSI-ReportConfig indicated by reportConfigId above (1 corresponds to the first entry, 2 to thesecond entry, and so on). |

| **Conditional Presence** | **Explanation** |
|---|---|
| *Aperiodic* | The field is mandatory present if the *NZP-CSI-RS-Resources* in the associated *resourceSet* have the resourceType aperiodic. The field is absent otherwise. |
| *CSI-IM-ForInterference* | This field is optional need M if the *CSI-ReportConfig* identified by *reportConfigId* is configured with *csi-IM-ResourcesForInterference;* otherwise it is absent. |
| *NZP-CSI-RS-ForInterference* | This field is optional need M if the *CSI-ReportConfig* identified by *reportConfigId* is configured with *nzp-CSI-RS-ResourcesForInterference;* otherwise it is absent. |

[Table 39] CSI-SemiPersistentOnPUSCH-TriggerStateList

The CSI-SemiPersistentOnPUSCH-TriggerStateList IE is used to configure the UE with list of trigger states for semi-persistent reporting of channel state information on L1. See also TS 38.214 [19], clause 5.2.

**CSI-SemiPersistentOnPUSCH-TriggerStateList information element**

[Table 39]

```
-- ASN1START
-- TAG-CSI-SEMIPERSISTENTONPUSCHTRIGGERSTATELIST-START

CSI-SemiPersistentOnPUSCH-TriggerStateList ::=   SEQUENCE(SIZE
(1..maxNrOfSemiPersistentPUSCH-Triggers)) OF CSI-SemiPersistentOnPUSCH-
TriggerState

CSI-SemiPersistentOnPUSCH-TriggerState ::=          SEQUENCE {
     associatedReportConfigInfo                          CSI-ReportConfigId,
     ...
}

-- TAG-CSI-SEMIPERSISTENTONPUSCHTRIGGERSTATELIST-STOP
-- ASN1STOP
```

With regard to the aforementioned CSI report settings (CSI-ReportConfig), each report setting CSI-ReportConfig may be associated with one downlink (DL) bandwidth part identified by a higher-layer parameter bandwidth part identifier (bwp-id) given by CSI resource setting CSI-ResourceConfig associated with the corresponding report setting. As time domain reporting for each report setting CSI-ReportConfig, "aperiodic", "semi-persistent", and "periodic" schemes may be supported, and these schemes may be configured for the UE by the base station via a reportConfigType parameter configured from a higher layer. A semi-persistent CSI report method may support a "PUCCH-based semi-persistent (semi-PersistentOnPUCCH)" method and a "PUSCH-based semi-persistent (semi-PersistentOnPUSCH)" method. In the case of the periodic or semi-persistent CSI report method, a PUCCH or PUSCH resource in which CSI is to be transmitted may be configured for the UE by the base station via higher-layer signaling. A periodicity and a slot offset of the PUCCH or PUSCH resource in which CSI is to be transmitted may be given by a numerology of an uplink (UL) bandwidth part configured for CSI report transmission. In the case of the aperiodic CSI report method, a PUSCH resource in which CSI is to be transmitted may be scheduled for the UE by the base station via L1 signaling (aforementioned DCI format 0_1).

With regard to the aforementioned CSI resource settings (CSI-ResourceConfig), each CSI resource setting CSI-ReportConfig may include S($\geq$1) CSI resource sets (e.g., given via a higher-layer parameter of csi-RS-ResourceSetList). A CSI resource set list may include a non-zero power (NZP) CSI-RS resource set and an SS/PBCH block set or may include a CSI-interference measurement (CSI-IM) resource set. Each CSI resource setting may be positioned in a downlink (DL) bandwidth part identified by higher-layer parameter bwp-id and may be connected to CSI report setting in the same downlink bandwidth part. A time domain operation of a CSI-RS resource in CSI resource setting may be configured to be one of "aperiodic", "periodic", or "semi-persistent" from the higher-layer parameter resourceType. With regard to the periodic or semi-persistent CSI resource setting, the number of CSI-RS resource sets may be limited to S (S=1), and the configured periodicity and slot offset may be given based on numerology of the downlink bandwidth part identified by bwp-id. One or more CSI resource settings for channel or interference measurement may be configured for the UE by the base station via higher-layer signaling, and may include, for example, the following CSI resources.

- CSI-IM resource for interference measurement
- NZP CSI-RS resource for interference measurement
- NZP CSI-RS resource for channel measurement

With regard to CSI-RS resource sets associated with a resource setting in which the higher-layer parameter of resourceType is configured to be "aperiodic", "periodic", or "semi-persistent", a trigger state of CSI report setting having reportType configured to be "aperiodic", and a resource setting for channel or interference measurement on one or multiple component cells (CCs) may be configured via the higher-layer parameter of CSI-AperiodicTriggerStateList.

Aperiodic CSI reporting of the UE may be performed using a PUSCH, periodic CSI reporting may be performed using a PUCCH, and semi-persistent CSI reporting may be performed using a PUSCH when triggered or activated via DCI, and may be performed using a PUCCH after activated via a MAC control element (MAC CE). As described above, CSI resource setting may also be configured to be aperiodic, periodic, or semi-persistent. A combination of CSI reporting setting and CSI resource setting may be supported based on Table 40 below.

[Table 40]

| Table 5.2.1.4-1: Triggering/Activation of CSI Reporting for the possible CSI-RS Configurations [Table 40] | | | |
|---|---|---|---|
| **CSI-RS Configuration** | **Periodic CSI Reporting** | **Semi-Persistent CSI Reporting** | **Aperiodic CSI Reporting** |
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command | Triggered by DCI; additionally, activation command [10, TS. |
| | | [10, TS 38.321]; for reporting on PUSCH, the UE receives triggering on DCI | 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

Aperiodic CSI reporting may be triggered by a "CSI request" field in DCI format 0_1 described above, which corresponds to scheduling DCI for a PUSCH. The UE may monitor a PDCCH, may acquire DCI format 0_1, and may acquire scheduling information of a PUSCH and a CSI request indicator. The CSI request indicator may be configured to have NTS (=0, 1, 2, 3, 4, 5, or 6) bits, and may be determined by higher-layer signaling (reportTriggerSize). One trigger state among one or multiple aperiodic CSI report trigger states which may be configured via higher-layer signaling (CSI-AperiodicTriggerStateList) may be triggered by the CSI request indicator.

If all bits in the CSI request field are 0, this may indicate that CSI reporting is not requested.

If the number M of configured CSI trigger states in CSI-AperiodicTriggerStateLite is greater than $2^{NTs}-1$, M CSI trigger states may be mapped to $2^{NTs}-1$ trigger states according to a predefined mapping relation, and one trigger state among the $2^{NTs}-1$ trigger states may be indicated by the CSI request field.

If the number M of configured CSI trigger states in CSI-AperiodicTriggerStateLite is less than or equal to $2^{NTs}-1$, one of the M CSI trigger states may be indicated by the CSI request field.

Table 41 below shows an example of a relationship between a CSI request indicator and a CSI trigger state that may be indicated by a corresponding indicator.

[Table 41]

| CSI request field | CSI trigger state | CSI-ReportConfigId | CSI-ResourceConfigId |
|---|---|---|---|
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

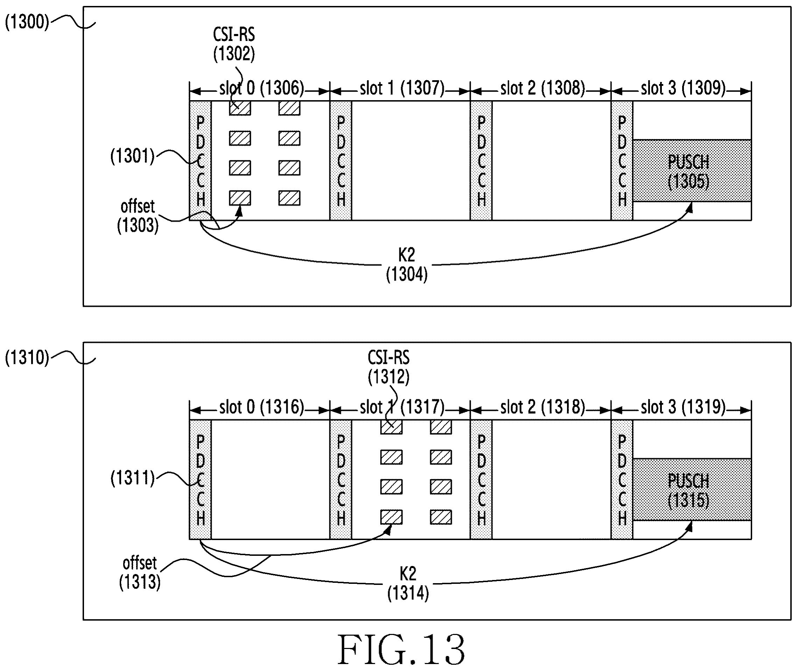

The UE may measure a CSI resource in a CSI trigger state triggered via the CSI request field, and then generate CSI (including, for example, at least one of the CQI, PMI, CRI, SSBRI, LI, RI, or L1-RSRP described above) based on the measurement. The UE may transmit the acquired CSI by using the PUSCH scheduled via corresponding DCI format 0_1. If one bit corresponding to an uplink data indicator (UL-SCH indicator) in DCI format 0_1 indicates "1", the UE may multiplex uplink data (UL-SCH) and the acquired CSI on the PUSCH resource scheduled by DCI format 0_1 so as to transmit the same. If one bit corresponding to the uplink data indicator (UL-SCH indicator) in DCI format 0_1 indicates "0", the UE may map only CSI, without uplink data (UL-SCH), to the PUSCH resource scheduled by DCI format 0_1 so as to transmit the same. FIG. 13 illustrates an example of an aperiodic CSI reporting method according to an embodiment of the disclosure;

In an example 1300 of FIG. 13, a UE may acquire DCI format 0_1 by monitoring a PDCCH 1301, and may acquire scheduling information and CSI request information for a PUSCH 1305 therefrom. The UE may acquire resource information of a CSI-RS 1302 to be measured, from a received CSI request indicator. The UE may determine a time point at which the UE needs to measure a resource of the CSI-RS 1302, based on a time point at which DCI format 0_1 is received, and a parameter for an offset (e.g., aforementioned aperiodicTriggeringOffset) in a CSI resource set configuration (e.g., an NZP CSI-RS resource set configuration (NZP-CSI-RS-ResourceSet)). More specifically, the UE may be configured with an offset value X of the parameter, aperiodicTriggeringOffset, in the NZP-CSI-RS resource set configuration from a base station via higher-layer signaling, and the configured offset value X may refer to an offset between a slot in which DCI triggering aperiodic CSI reporting is received, and a slot in which the CSI-RS resource is transmitted. For example, aperiodicTriggeringOffset parameter values and offset values X may have mapping relationships as shown in Table 42 below.

[Table 42]

| aperiodicTriggeringOffset | Offset X |
|---|---|
| 0 | 0 slot |
| 1 | 1 slot |
| 2 | 2 slots |
| 3 | 3 slots |
| 4 | 4 slots |
| 5 | 16 slots |
| 6 | 24 slots |

An example 1300 of FIG. 13 shows an example in which aforementioned offset value X is configured to be 0 (X=0). In this case, the UE may receive the CSI-RS 1302 in a slot (corresponding to slot 0 1306 of FIG. 13) in which DCI format 0_1 triggering aperiodic CSI reporting is received, and may report CSI information, which is measured based on the received CSI-RS, to the base station via the PUSCH 1305. The UE may acquire, from DCI format 0_1, scheduling information (information corresponding to each field of DCI format 0_1 described above) on the PUSCH 1305 for CSI reporting. For example, in DCI format 0_1, the UE may acquire information on a slot in which the PUSCH 1305 is to be transmitted, from time domain resource allocation information for the PUSCH 1305 described above. In the example 1300 of FIG. 13, the UE acquires 3 as a K2 value corresponding to a slot offset value for PDCCH-to-PUSCH, and accordingly, the PUSCH 1305 may be transmitted in slot 3 1309, which is spaced 3 slots apart from slot 0 1306, i.e., a time point at which the PDCCH 1301 has been received. In an example 1310 of FIG. 13, the UE may acquire DCI format 0_1 by monitoring a PDCCH 1311, and may acquire scheduling information and CSI request information for a PUSCH 1315 therefrom. The UE may acquire resource information of a CSI-RS 1312 to be measured, from a received CSI request indicator. The example 1310 of FIG. 13 shows an example in which the offset value X for CSI-RS described above is configured to be 1 (X=1). In this case, the UE may receive the CSI-RS 1312 in a slot (corresponding to slot 0 1316 of FIG. 13) in which DCI format 0_1 triggering aperiodic CSI reporting is received, and may report CSI information, which is measured based on the received CSI-RS, to the base station via the PUSCH 1315.

The aperiodic CSI report may include at least one of or both CSI part 1 and CSI part 2, and when the aperiodic CSI report is transmitted via the PUSCH, the aperiodic CSI report may be multiplexed on a transport block. After a CRC is inserted into an input bit of aperiodic CSI for multiplexing, encoding and rate matching may be performed, and then transmission may be performed by mapping to resource elements within the PUSCH in a specific pattern. The CRC insertion may be omitted depending on a coding method or a length of the input bit. The number of modulation symbols, which is calculated for rate matching during multiplexing of CSI part 1 or CSI part 2 included in the aperiodic CSI report, may be calculated as shown below in Table 43.

[Table 43]

| |
|---|
| For CSI part 1 transmission on PUSCH not using repetition type B with UL-SCH, the number of coded modulation symbols per layer for CSI part 1 transmission, denoted as $Q'_{\text{CSI-part1}}$, is determined as follows: |

(continued)

$$Q'_{\text{CSI-1}} = \min\left\{\left\lceil\frac{(O_{\text{CSI-1}}+L_{\text{CSI-1}})\cdot\beta_{\text{offset}}^{\text{PUSCH}}\cdot\Sigma_{l=0}^{N_{\text{symb,all}}^{\text{PUSCH}}-1}M_{\text{sc}}^{\text{UCI}}(l)}{\Sigma_{r=0}^{C_{UL-SCH}-1}K_r}\right\rceil,\left\lceil\alpha\cdot\Sigma_{l=0}^{N_{\text{symb,all}}^{\text{PUSCH}}-1}M_{\text{sc}}^{\text{UCI}}(l)\right\rceil - Q'_{ACK/CG-UCI}\right\}$$

...

For CSI part 1 transmission on an actual repetition of a PUSCH with repetition Type B with UL-SCH, the number of coded modulation symbols per layer for CSI part 1 transmission, denoted as $Q'_{\text{CSI-part1}}$, is determined as follows:

$$Q'_{\text{CSI-1}} = \min\left\{\left\lceil\frac{(O_{\text{CSI-1}} + L_{\text{CSI-1}}) \cdot \beta_{\text{offset}}^{\text{PUSCH}} \cdot \Sigma_{l=0}^{N_{\text{symb,nominal}}^{\text{PUSCH}}-1}M_{\text{sc,nominal}}^{\text{UCI}}(l)}{\Sigma_{r=0}^{C_{UL\text{-}SCH}-1}K_r}\right\rceil, \left\lceil\alpha\cdot\sum_{l=0}^{N_{\text{symb,nominal}}^{\text{PUSCH}}-1}M_{\text{sc,nominal}}^{\text{UCI}}(l)\right\rceil\right.$$
$$\left. - Q'_{ACK/CG-UCI}, \sum_{l=0}^{N_{\text{symb,actual}}^{\text{PUSCH}}-1}M_{\text{sc,actual}}^{\text{UCI}}(l) - Q'_{ACK/CG-UCI}\right\}$$

...

For CSI part 1 transmission on PUSCH without UL-SCH, the number of coded modulation symbols per layer for CSI part 1 transmission, denoted as $Q'_{\text{CSI-part1}}$, is determined as follows:

if there is CSI part 2 to be transmitted on the PUSCH,

$$Q'_{\text{CSI-1}} = \min\left\{\left\lceil\frac{\left(O_{\text{CSI-1}} + L_{\text{CSI-1}}\right)\cdot\beta_{\text{offset}}^{\text{PUSCH}}}{R\cdot Q_m}\right\rceil, \sum_{l=0}^{N_{\text{symb,all}}^{\text{PUSCH}}-1}M_{\text{sc}}^{\text{UCI}}\left(l\right) - Q'_{\text{ACK}}\right\}$$

else

$$Q'_{\text{CSI-1}} = \sum_{l=0}^{N_{\text{symb,all}}^{\text{PUSCH}}-1}M_{\text{sc}}^{\text{UCI}}\left(l\right) - Q'_{\text{ACK}}$$

end if

...

For CSI part 2 transmission on PUSCH not using repetition type B with UL-SCH, the number of coded modulation symbols per layer for CSI part 2 transmission, denoted as $Q'_{\text{CSI-part2}}$, is determined as follows:

$$Q'_{\text{CSI-2}} = \min\left\{\left\lceil\frac{(O_{\text{CSI-2}}+L_{\text{CSI-2}})\cdot\beta_{\text{offset}}^{\text{PUSCH}}\cdot\Sigma_{l=0}^{N_{\text{symb,all}}^{\text{PUSCH}}-1}M_{\text{sc}}^{\text{UCI}}(l)}{\Sigma_{r=0}^{C_{UL-SCH}-1}K_r}\right\rceil,\left\lceil\alpha\cdot\Sigma_{l=0}^{N_{\text{symb,all}}^{\text{PUSCH}}-1}M_{\text{sc}}^{\text{UCI}}(l)\right\rceil - Q'_{ACK/CG-UCI} - Q'_{\text{CSI-1}}\right\}$$

For CSI part 2 transmission on an actual repetition of a PUSCH with repetition Type B with UL-SCH, the number of coded modulation symbols per layer for CSI part 2 transmission, denoted as $Q'_{\text{CSI-part2}}$, is determined as follows:

(continued)

$$Q'_{\text{CSI-2}} = \min \left\{ \left\lceil \frac{(O_{\text{CSI-2}} + L_{\text{CSI-2}}) \cdot \beta^{\text{PUSCH}}_{\text{offset}} \cdot \sum_{l=0}^{N^{\text{PUSCH}}_{\text{symb,nominal}}-1} M^{\text{UCI}}_{\text{sc,nominal}}(l)}{\sum_{r=0}^{C_{\text{UL-SCH}}-1} K_r} \right\rceil, \left\lceil \alpha \right. \right.$$

$$\left. \cdot \sum_{l=0}^{N^{\text{PUSCH}}_{\text{symb,nominal}}-1} M^{\text{UCI}}_{\text{sc,nominal}}(l) \right\rceil - Q'_{ACK/CG-UCI} - Q'_{\text{CSI-1}},$$

$$\left. \sum_{l=0}^{N^{\text{PUSCH}}_{\text{symb,actual}}-1} M^{\text{UCI}}_{\text{sc,actual}}(l) - Q'_{ACK/CG-UCI} - Q'_{\text{CSI-1}} \right\}$$

...

For CSI part 2 transmission on PUSCH without UL-SCH, the number of coded modulation symbols per layer for CSI part 2 transmission, denoted as $Q'_{\text{CSI-part2}}$, is determined as follows:

$$Q'_{\text{CSI-2}} = \sum_{l=0}^{N^{\text{PUSCH}}_{\text{symb,all}}-1} M^{\text{UCI}}_{\text{sc}}(l) - Q'_{\text{ACK}} - Q'_{\text{CSI-1}}$$

Specifically, for repeated PUSCH transmission schemes A and B, the UE may multiplex the aperiodic CSI report only on the first repetition transmission among PUSCH repetition transmissions, so as to transmit the same. This is because aperiodic CSI report information to be multiplexed is encoded in a polar code scheme, and at this time, each PUSCH repetition needs to have the same frequency and time resource allocation in order to multiplex the aperiodic CSI report information on multiple PUSCH repetitions. Particularly, in the case of PUSCH repetition type B transmission, since each actual repetition may have different OFDM symbol durations, the aperiodic CSI report may be multiplexed only on the first repetition and then transmitted. In addition, for repeated PUSCH transmission scheme B, when the UE receives DCI for activation of semi-persistent CSI reporting or scheduling of aperiodic CSI reporting without scheduling for a transport block, the UE may assume that a value of nominal repetition is 1 even if the number of repeated PUSCH transmissions, which is configured via higher-layer signaling, is greater than 1. In addition, when the aperiodic or semi-persistent CSI reporting is scheduled or activated without scheduling for a transport block, based on repeated PUSCH transmission scheme B, the UE may expect that a first nominal repetition is identical to a first actual repetition. With regard to the PUSCH transmitted while including semi-persistent CSI, based on repeated PUSCH transmission scheme B, without scheduling for DCI after the semi-persistent CSI reporting has been activated via the DCI, if the first nominal repetition is different from the first actual repetition, transmission for the first nominal repetition may be ignored.

[Regarding UE capability report]

In LTE and NR, a UE may perform a procedure in which, while being connected to a serving base station, the UE may report capability supported by the UE to the corresponding base station. In the following description, the above-described procedure will be referred to as a UE capability report.

The base station may transfer a UE capability enquiry message to the UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE configures UE capability according to band information and RAT type requested by the base station. The method in which the UE configures UE capability in an NR system is summarized below.

1. If the UE receives a list regarding LTE and/or NR bands from the base station at a UE capability request, the UE constructs band combinations (BCs) regarding EN-DC and NR standalone (SA). That is, the UE configures a candidate list of BCs regarding EN-DC and NR SA, based on bands received from the base station at a request through FreqBandList. Bands have priority in the order described in FreqBandList.

2. If the base station sets "eutra-nr-only" flag or "eutra" flag and requests a UE capability report, the UE removes everything related to NR SA BCs from the configured BC candidate list. Such an operation may occur only if an LTE base station (eNB) requests "eutra" capability.

3. The UE then removes fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".

4. The UE selects BCs appropriate for the requested RAT type from the final "candidate BC list" and configures BCs to report. In this step, the UE configures supportedBandCombinationList in a determined order. That is, the UE configures BCs and UE capability to report according to a preconfigured rat-Type order. (nr -> eutra-nr -> eutra). In addition, the UE configures featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of containers of UE-NR-Capabilities and UE-MRDC-Capabilities.

5. If the requested RAT type is eutra-nr and has an influence, featureSetCombinations is included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

[Regarding CA/DC]

FIG. 10 illustrates radio protocol structures of a base station and a UE in single cell, carrier aggregation, and dual connectivity situations in a wireless communication system according to an embodiment of the disclosure.

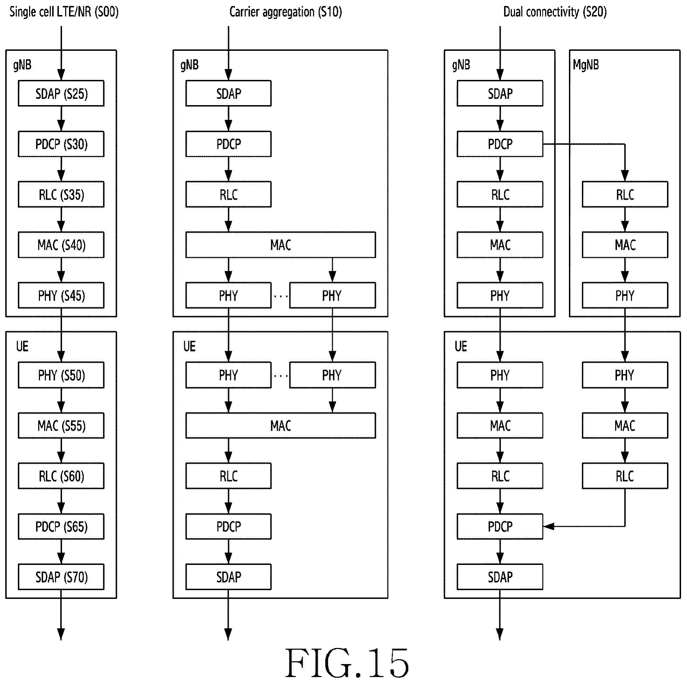

Referring to FIG. 15, a radio protocol of a mobile communication system includes an NR service data adaptation protocol (SDAP) S25 or S70, an NR packet data convergence protocol (PDCP) S30 or S65, an NR radio link control (RLC) S35 or S60, and an NR medium access controls (MAC) S40 or S55, on each of UE and NR base station sides.

The main functions of the NR SDAP S25 or S70 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP S30 or S65 may include some of functions below.

- Header compression and decompression: ROHC only
- Transfer of user data
- In-sequence delivery of upper layer PDUs
- Out-of-sequence delivery of upper layer PDUs

- PDCP PDU reordering for reception
- Duplicate detection of lower layer SDUs
- Retransmission of PDCP SDUs
- Ciphering and deciphering
- Timer-based SDU discard in uplink

The above-mentioned reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC S35 or S60 may include some of functions below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device refers to a function of delivering RLC SDUs, received from the lower layer, to the upper layer in sequence. The in-sequence delivery of the NR RLC device may include a function of reassembling and delivering multiple RLC SDUs received, into which one original RLC SDU has been segmented, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs. The in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all RLC SDUs received until now to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC S40 or S55 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification

- Transport format selection
- Padding

An NR PHY layer S45 or S50 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as S00. On the other hand, in case that the base station transmits data to the UE, based on carrier aggregation (CA) which uses multiple carriers in a single TRP, the base station and the UE may use a protocol structure which has a single structure up to the RLC, but multiplexes the PHY layer through a MAC layer, such as S10. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as S20.

Referring to the above description relating to the PDCCH and beam configuration, PDCCH repetitive transmission is not supported in current Rel-15 and Rel-16 NR, and it may be thus difficult to achieve required reliability in a scenario requiring high reliability, such as URLLC. The disclosure may improve the PDCCH reception reliability of a UE by providing a PDCCH repetitive transmission method through multiple transmission points (TRPs). Specific methods thereof will be described hereinafter through the embodiments below.

Hereinafter, embodiments of the disclosure will be described in detail in conjunction with the accompanying drawings. The contents of the disclosure may be applied to FDD and TDD systems. As used herein, upper signaling (or upper layer signaling) is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

[Regarding NC-JT

According to an embodiment of the disclosure, in order to receive a PDSCH from a plurality of TRPs, the UE may use non-coherent joint transmission (NC-JT).

Unlike the conventional system, the 5G wireless communication system may support not only a service requiring a high transmission rate, but also a service having a very short transmission delay and a service requiring a high connection density. In a wireless communication network including multiple cells, transmission and reception points (TRPs), or beams, cooperative communication (coordinated transmission) between the respective cells, TRPs, or/and beams may satisfy various service requirements by enhancing the strength of a signal received by a UE or efficiently performing interference control between the respective cells, TRPs, or/and beams.

Joint transmission (JT) is a representative transmission technology for the coordinated communication and may increase the strength of a signal received by the UE or throughput by transmitting signals to one UE through different cells, TRPs, and/or beams. Here, a channel between respective cells, TRPs, and/or beam and the UE may have different characteristics, and particularly, non-coherent joint transmission (NC-JT) supporting non-coherent precoding between respective cells, TRPs, and/or beams may need individual precoding, MCS, resource allocation, and TCI indication according to the channel characteristics for each link between respective cells, TRPs, and/or beam and the UE.

The aforementioned NC-JT transmission may be applied to at least one channel among a downlink data channel (physical downlink shared channel (PDSCH)), a downlink control channel (physical downlink control channel (PDCCH)), an uplink data channel (physical uplink shared channel (PUSCH)), and an uplink control channel (physical uplink control channel (PUCCH)). During PDSCH transmission, transmission information, such as precoding, MCS, resource allocation, and TCI, is indicated via DL DCI, and for NC-JT transmission, the transmission information should be independently indicated for each cell, TRP, and/or beam. This is a significant factor that increases payload required for DL DCI transmission, which may have a bad influence on reception performance of a PDCCH for transmitting the DCI. Accordingly, in order to support JT of the PDSCH, carefully designing a tradeoff between an amount of DCI information and reception performance of control information is required.

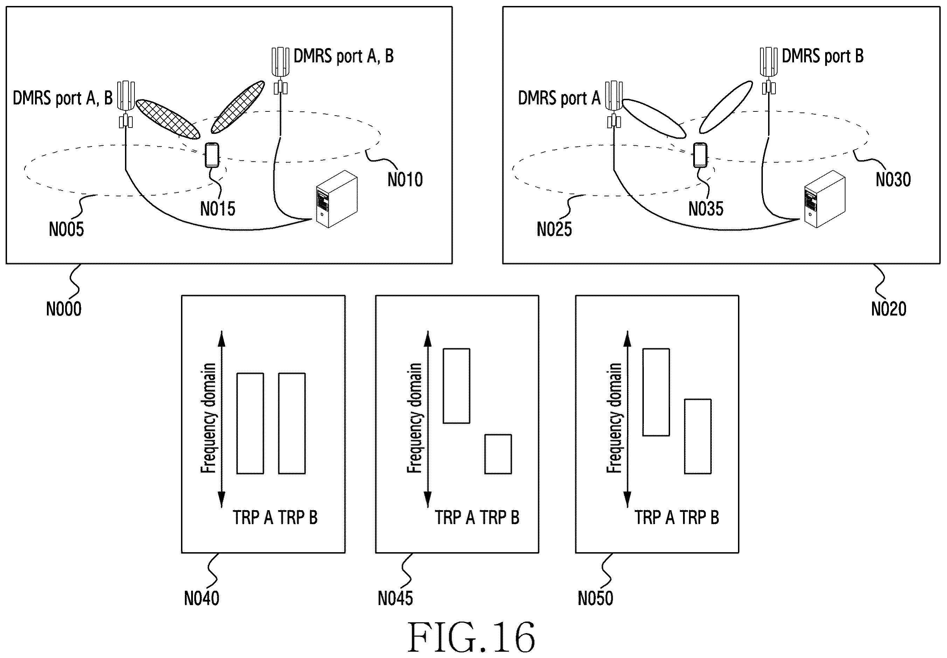

FIG. 16 illustrates an example of an antenna port configuration and resource allocation for cooperative communication in a wireless communication system according to an embodiment of the disclosure. Specifically, FIG. 16 illustrates an example of an antenna port configuration and resource allocation for PDSCH transmission using cooperative communication in the wireless communication system according to an embodiment of the disclosure.

Referring to FIG. 16, an example for PDSCH transmission is described for each joint transmission (JT) scheme, and examples for radio resource allocation for each TRP are illustrated.

Referring to FIG. 16, an example N000 for coherent joint transmission (C-JT) supporting coherent precoding between respective cells, TRPs, or/and beams is illustrated.

For C-JT, TRP A N005 and TRP B N010 transmit a single piece of data (PDSCH) to a UE N015, and joint precoding may be performed in multiple TRPs. This may indicate that DMRSs are transmitted through identical DMRS ports in order for TRP A N005 and TRP B N010 to transmit the same PDSCH. For example, TRP A N005 and TRP B N010 may transmit DRMSs to the UE through DMRS port A and DMRS port B, respectively. In this case, the UE may receive one piece of DCI information for receiving one PDSCH demodulated based on the DMRSs transmitted through the DMRS port A and the DMRS port B.

FIG. 16 shows an example N020 of non-coherent joint transmission (NC-JT) supporting non-coherent precoding between respective cells, TRPs, and/or beams for PDSCH transmission.

In the case of NC-JT, the PDSCH is transmitted to a UE 1035 per cell, per TPR, and/or per beam, and individual precoding may be applied to each PDSCH. Respective cells, TRPs, and/or beams may transmit different PDSCHs or different PDSCH layers to the UE, thereby improving throughput compared to single cell, TRP, and/or beam transmission. Furthermore, the respective cells, TRPs, and/or beams may repeatedly transmit the same PDSCH to the UE, thereby improving reliability as compared to single cell, TRP, and/or beam transmission. For the sake of descriptive convenience, a cell, a TRP, and/or a beam may be collectively referred to as a TRP.

In this case, various radio resource allocations may be considered, such as a case N040 where frequency and time resources used in multiple TRPs for PDSCH transmission are all identical, a case N045 where frequency and time resources used in multiple TRPs do not overlap at all, and a case N050 where some of frequency and time resources used in multiple TRPs overlap.

In order to support NC-JT, DCIs in various forms, structures, and relations may be considered to simultaneously allocate a plurality of PDSCHs to one UE.

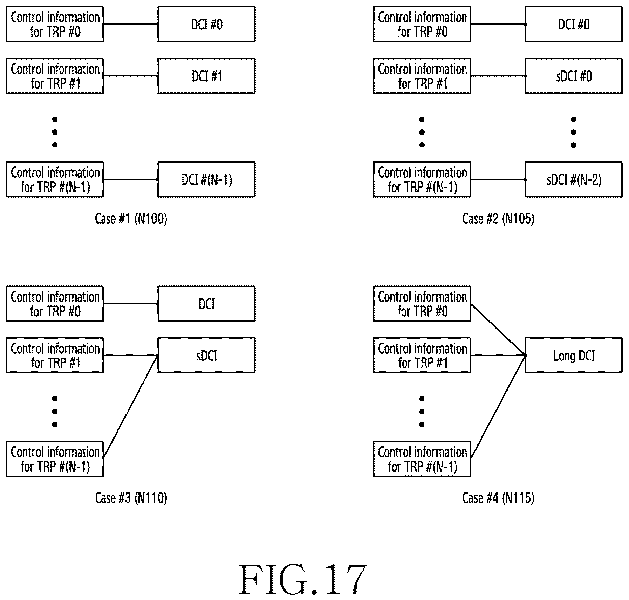

FIG. 17 illustrates an example of a downlink control information (DCI) configuration for cooperative communication in a wireless communication system according to an embodiment of the disclosure. Specifically, FIG. 17 shows diagrams illustrating examples of a configuration of downlink control information (DCI) for NC-JT in which respective TRPs transmit different PDSCHs or different PDSCH layers to a UE in the wireless communication system according to an embodiment of the disclosure.

Referring to FIG. 17, case #1 N100 is an example in which, in a situation where different N-1 PDSCHs are transmitted from N-1 additional TRPs (TRP#1 to TRP#N-1) in addition to a serving TRP (TRP#0) used during single PDSCH transmission, control information for PDSCHs transmitted in the additional N-1 TRPs is transmitted independently of control information for a PDSCH transmitted in the serving TRP. That is, the UE may acquire control information for PDSCHs transmitted from different TRPs (TRP#0 to TRP#N-1) via independent pieces of DCI (DCI#0 to DCI#N-1). Formats between the independent pieces of DCI may be the same or different from each other, and payloads between the pieces of DCI may also be the same or different from each other. In case #1 described above, a degree of freedom of PDSCH control or allocation may be completely guaranteed, but when respective pieces of the DCI are transmitted by different TRPs, a difference between DCI coverages may be generated and reception performance may deteriorate.

Case #2 N105 is an example in which pieces of control information (DCI) for PDSCHs of (N-1) additional TRPs are transmitted and each piece of the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, DCI#0, which is control information for the PDSCH transmitted from the serving TRP (TRP#0), includes all information elements of DCI format 1_0, DCI format 1_1, and DCI format 1_2, but shortened DCI (hereinafter, sDCI) (sDCI#0 to sDCI#N-2), which is control information for the PDSCHs transmitted from the cooperative TRPs (TRP#1 to TRP#N-1), may include only some of the information elements of DCI format 1_0, DCI format 1_1, and DCI format 1_2. Accordingly, in the case of sDCI for transmission of the control information for the PDSCHs transmitted from the cooperative TRPs, a payload is small compared to normal DCI (nDCI) for transmission of the control information related to the PDSCH transmitted from the serving TRP, so that reserved bits may be included in comparison with nDCI.

In case #2 described above, a degree of freedom of each PDSCH control or allocation may be limited according to content of information elements included in the sDCI, but reception capability of the sDCI is better than the nDCI, and thus a probability of the generation of difference between DCI coverages may become lower.

Case #3 N110 is an example in which one piece of control information for PDSCHs of (N-1) additional TRPs is transmitted and the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, in the case of DCI #0 that is control information for the PDSCH transmitted from the serving TRP (TRP#0), all information elements of DCI format 1_0, DCI format 1_1, and DCI format 1_2 may be included, and in the case of control information for PDSCHs transmitted from cooperative TRPs (TRP #1 to TRP #(N-1)), only some of the information elements of DCI format 1_0, DCI format 1_1, and DCI format 1_2 may be gathered in one "secondary" DCI (sDCI) and transmitted. For example, the sDCI may include at least one piece of HARQ-related information, such as frequency domain resource assignment, time domain resource assignment, and MCS of cooperative TRPs. In addition, information that is not included in the sDCI such as a bandwidth part (BWP) indicator and a carrier indicator may follow the DCI (DCI #0, normal DCI, or nDCI) of the serving TRP.

In case #3 N110, each PDSCH control or allocation freedom may be restricted according to content of the information element included in the sDCI, but sDCI reception performance may be adjustable, and complexity of DCI blind decoding of the UE may be reduced compared to case #1 N100 or case #2 N105.

Case #4 N115 is an example in which, in a situation where N-1 different PDSCHs are transmitted from N-1 additional TRPs (TRP#1 to TRP#N-1) in addition to a serving TRP (TRP#0) used during single PDSCH transmission, control information for PDSCHs transmitted from the N-1 additional TRPs is transmitted in the same DCI (long DCI) as that for the control information for the PDSCH transmitted from the serving TRP. That is, the UE may acquire the control information for the PDSCHs transmitted from different TRPs (TRP#0 to TRP#N-1) via a single piece of DCI. In case #4 N115, complexity of DCI blind decoding of the UE may not increase, but a PDSCH control or allocation freedom may be low, such that the number of cooperative TRPs is limited according to long DCI payload restrictions.

In the following description and embodiments, sDCI may refer to various pieces of supplementary DCI such as shortened DCI, secondary DCI, or normal DCI (DCI formats 1_0 and 1_1 described above) including PDSCH control information transmitted in the cooperative TRP, and unless specific restriction is mentioned, the corresponding description may be similarly applied to the various pieces of supplementary DCI.

In the following descriptions and embodiments, aforementioned cases #1 N100, case #2 N105, and case #3 N110, in which one or more pieces of DCI are used for NC-JT support, may be classified as multiple-PDCCH-based NC-JT, and aforementioned case #4 N115, in which a single piece of DCI (PDCCH) is used for NC-JT support, may be classified as single-PDCCH-based NC-JT. In multiple PDCCH-based PDSCH transmission, a CORESET for scheduling the DCI of the serving TRP (TRP #0) is separated from CORESETs for scheduling the DCI of cooperative TRPs (TRP #1 to TRP #(N-1)). A method of distinguishing the CORESETs may include a distinguishing method through a higher-layer indicator for each CORESET and a distinguishing method through a beam configuration for each CORESET. Furthermore, in single PDCCH-based NC-JT, single DCI schedules a single PDSCH having a plurality of layers instead of scheduling a plurality of PDSCHs, and the plurality of layers may be transmitted from a plurality of TRPs. In this case, association between a layer and a TRP transmitting the corresponding layer may be indicated through a transmission configuration indicator (TCI) indication for the layer.

In embodiments of the disclosure, "cooperative TRP" may be replaced with various terms, such as "cooperative panel" or "cooperative beam" when actually applied.

According to embodiments of the disclosure, "the case in which NC-JT is applied" may be variously interpreted as "the case in which the UE simultaneously receives one or more PDSCHs in one BWP", "the case in which the UE simultaneously receives PDSCHs based on two or more transmission configuration indicator (TCI) indications in one BWP", and "the case in which the PDSCHs received by the UE are associated with one or more DMRS port groups" according to circumstances, but is used by one expression for convenience of description.

As used herein, a radio protocol structure for NC-JT may be used in various ways according to a TRP deployment scenario. For example, if there is a small backhaul delay or no backhaul delay between cooperative TRPs, a method (CA-like method) using a structure based on MAC layer multiplexing is possible in a similar manner to reference numeral S10 of FIG. 15. On the other hand, if a backhaul delay between cooperative TRPs is so large that the backhaul delay cannot be ignored (e.g., when a time of 2 ms or longer is required for exchange of information, such as CSI, scheduling, and HARQ-ACK, between the cooperative TRPs), a method (DC-like method) of securing characteristics robust to a delay by using an independent structure for each TRP starting from the RLC layer is possible in a similar manner to reference numeral S20 of FIG. 15.

The UE supporting C-JT/NC-JT may receive a C-JT/NC-JT-related parameter or a setting value from a higher-layer configuration and set an RRC parameter of the UE based on the same. For the higher-layer configuration, the UE may use a UE capability parameter, for example, tci-StatePDSCH. Here, the UE capability parameter, for example, tci-StatePDSCH may define TCI states for PDSCH transmission, the number of TCI states may be configured as 4, 8, 16, 32, 64, and 128 in FR1 and as 64 and 128 in FR2, and a maximum of 8 states which can be indicated by 3 bits of a TCI field of the DCI may be configured through a MAC CE message among the configured numbers. A maximum value 128 refers to a value indicated by maxNumberConfiguredTCI statesPerCC within the parameter tci-StatePDSCH which is included in capability signaling of the UE. In this way, a series of configuration procedures from the higher-layer configuration to the MAC CE configuration may be applied to a beamforming change command or a beamforming indication for at least one PDSCH in one TRP.

[Multi-DCI-based Multi-TRP]

According to an embodiment of the disclosure, a downlink control channel for NC-JT transmission may be configured based on multiple PDCCHs.

In NC-JT based on multiple PDCCHs, there may be a CORESET or a search space separated for each TRP when the DCI for scheduling the PDSCH of each TRP is transmitted. The CORESET or the search space for each TRP can be configured according to at least one of the following configuration cases.

* A configuration of a higher-layer index for each CORESET: CORESET configuration information configured by a higher layer may include an index value, and a TRP for transmitting a PDCCH in the corresponding CORESET may be distinguished by the configured index value for each CORESET. That is, in a set of CORESETs having the same higher-layer index value, it may be considered that the same TRP transmits the PDCCH or that the PDCCH for scheduling the PDSCH of the same TRP is transmitted. The index for each CORESET may be named CORESETPoolIndex, and it may be considered that the PDCCH is transmitted from the same TRP in CORESETs in which the same CORESETPoolIndex value is configured. For a CORESET for which no CORESETPoolIndex value has been configured, it may be considered that a default value has been configured for CORESETPoolIndex, and the default value may be 0.

* A configuration of multiple PDCCH-Config: a plurality of PDCCH-Config are configured in one BWP, and each PDCCH-Config may include a PDCCH configuration for each TRP. That is, a list of CORESETs for each TRP and/or a list of search spaces for each TRP may be included in one PDCCH-Config, and it may be considered that one or more CORESETs and one or more search spaces included in one PDCCH-Config correspond to a specific TRP.

* CORESET beam/beam group configuration: A TRP corresponding to a corresponding CORESET may be distinguished via a beam or beam group configured for each CORESET. For example, if the same TCI state is configured for multiple CORESETs, it may be considered or determined that the CORESETs are transmitted via the same TRP, or that a PDCCH for scheduling of a PDSCH of the same TRP is transmitted in the corresponding CORESET.

* Search space beam/beam group configuration: A beam or beam group may be configured for each search space, and a TRP for each search space may be distinguished based on the configured beam or beam group. For example, if the same beam/beam group or TCI state is configured in a plurality of search spaces, the same TRP may transmit the PDCCH in the corresponding search space or a PDCCH for scheduling a PDSCH of the same TRP may be transmitted in the corresponding search space.

As described above, by distinguishing the CORESETs or search spaces according to TRPs, it may be possible to classify PDSCH and HARQ-ACK information for each TRP, and based on this, it may be possible to independently generate an HARQ-ACK codebook and independently use a PUCCH resource for each TRP.

The configuration may be independent for each cell or each BWP. For example, while two different CORESETPoolIndex values are configured for a PCell, a CORESETPoolIndex value may not be configured for a specific SCell. In this case, NC-JT may be configured in the PCell, but NC-JT may not be configured in the SCell in which no CORESETPoolIndex value is configured.

[Single-DCI-based multi-TRP]

According to another embodiment of the disclosure, a downlink beam for NC-JT transmission may be configured based on a single PDCCH.

In single-PDCCH-based NC-JT, PDSCHs transmitted by multiple TRPs may be scheduled via one piece of DCI. Here, as a method of indicating the number of TRPs transmitting the corresponding PDSCHs, the number of TCI states may be used. That is, if the number of TCI states indicated in DCI for scheduling of a PDSCH is two, single-PDCCH-based NC-JT transmission may be considered, and if the number of TCI states is one, single-TRP transmission may be considered. The TCI states indicated by the DCI may correspond to one or two TCI states among TCI states activated by the MAC CE. If the TCI states of the DCI correspond to two TCI states activated by the MAC CE, a TCI codepoint indicated by the DCI is associated with the TCI states activated by the MAC CE, and this may correspond to a case in which the number of TCI states activated by the MAC CE, corresponding to the TCI codepoint, is 2.

The configuration may be independent for each cell or each BWP. For example, while a maximum number of activated TCI states corresponding to one TCI codepoint is 2 in the PCell, a maximum number of activated TCI states corresponding to one TCI codepoint may be 1 in a specific SCell. In this case, it may be considered that NC-JT may be configured in the PCell but NC-JT may not be configured in the SCell.

[PHR]

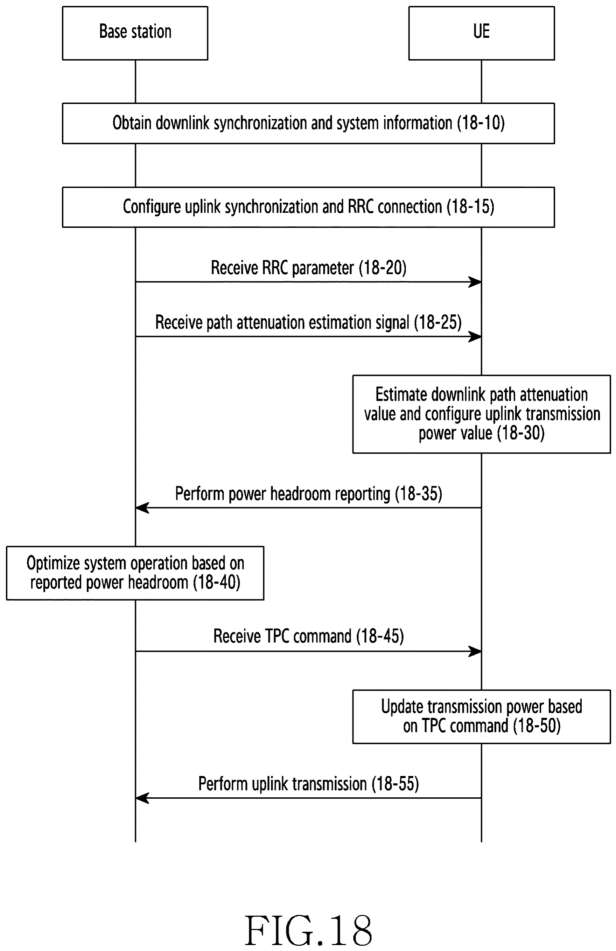

FIG. 18 illustrates a procedure in which a base station controls transmission power of a UE in a cellular system. In operation 18-10 of FIG. 18, a UE in coverage of a base station may perform downlink synchronization with the base station, and acquire system information. According to some embodiments, downlink synchronization may be performed using a synchronization signal of a primary synchronization signal/secondary synchronization signal (PSS/SSS) received from the base station. UEs having performed downlink synchronization may receive a master information block (MIB) and a system information block (SIB) from the base station, and acquire system information. In operation 18-15, via a random-access procedure, the UE may perform uplink synchronization with the base station and establish a radio resource control (RRC) connection. In the random-access procedure, the UE may transmit a random-access preamble and message3 (msg3) to the base station via an uplink. In this case, when the random-access preamble and message3 are transmitted, uplink transmission power control may be performed. Specifically, the UE may receive parameters for the uplink transmission power control from the base station via the acquired system information (e.g., the SIB) or may perform the uplink transmission power control using a predetermined parameter. In another embodiment of the disclosure, the UE may measure reference signal received power (RSRP) from a path attenuation estimation signal transmitted by the base station, and may estimate a downlink path attenuation value as shown in Equation 7. In addition, based on the estimated path attenuation value, the UE may configure an uplink transmission power value for transmitting the random-access preamble and message3.

Downlink path attenuation = transmission power of a base station signal - RSRP measured by the UE      [Equation 7]

In Equation 7, the transmission power of the base station signal refers to transmission power of a downlink path attenuation estimation signal transmitted by the base station. The downlink path attenuation estimation signal transmitted by the base station may be a cell-specific reference signal (CRS) or a synchronization signal block (SSB). If the path attenuation estimation signal is a cell-specific reference signal (CRS), the transmission power of the base station signal may indicate transmission power of the CRS, and may be transmitted to the UE via a referenceSignalPower parameter of the system information. If the path attenuation estimation signal is a synchronization signal block (SSB), the transmission power of the base station signal may indicate transmission power of a secondary synchronization signal (SSS) and of a demodulation reference signal (DMRS) that is transmitted via a PBCH, and may be transmitted to the UE via an ss-PBCH-BlockPower parameter of the system information. In operation 18-20, the UE may receive, from the base station, RRC parameters for the uplink transmission power control via UE-specific RRC or common RRC. In this case, the received transmission power control parameters may be different from each other according to an uplink channel type and a signal type. That is, transmission power control parameters to be applied to transmission of a physical uplink control channel (PUCCH), a physical uplink shared channel (PUSCH), and a sounding reference signal (SRS) may be different from each other. In addition, as described above, a transmission power control parameter received by the UE from the base station via the SIB before RRC connection establishment or transmission power control parameters that the UE has used as predetermined values before the RRC connection establishment may be included in the RRC parameters transmitted from the base station after the RRC connection establishment. The UE may use an RRC parameter value, which is received from the base station after the RRC connection establishment, to control uplink transmission power. In operation 18-25, the UE may receive a path attenuation estimation signal from the base station. More specifically, after the RRC connection establishment of the UE, the base station may configure a channel state information-reference signal (CSI-RS) as the path attenuation estimation signal for the UE. In this case, the base station may transmit information on transmission power of the CSI-RS to the UE via a powerControlOffsetSS parameter of UE-dedicated RRC information. Here, powerControlOffsetSS may indicate a transmission power difference (offset) between the SSB and the CSI-RS. In operation 18-30, the UE may estimate the downlink path attenuation value and configure the uplink transmission power value. More specifically, the UE may measure a downlink RSRP by using the CSI-RS, and may estimate the downlink path attenuation value via Equation 7 by using the information on transmission power of the CSI-RS received from the base station. In addition, based on the estimated downlink path attenuation value, the UE may configure the uplink transmission power value for PUCCH, PUSCH, and SRS transmission. In operation 18-35, the UE may perform power headroom reporting (PHR) to the base station. A power headroom may indicate a difference between current transmission power of the UE and maximum output power of the UE. In operation 18-40, the UE may optimize system operation, based on the reported power headroom. For example, if a power headroom value reported to the base station by a specific UE is a positive value, the base station may allocate more resource blocks (RBs) to the UE, thereby increasing a system yield. In operation 18-45, the UE may receive, from the base station, a transmission power control command (TPC). If a power headroom value reported to the base station by a specific UE is a negative value, the base station may allocate fewer resources to the UE or may decrease transmission power of the UE via the TPC. Accordingly, the system throughput may be increased, or unnecessary power consumption of the UE may be decreased. In operation 18-50, the UE may update transmission power, based on the TPC command. In this case, the TPC command may be transmitted to the UE via UE-specific DCI or group common DCI. Therefore, the base station may dynamically control transmission power of the UE via the TPC command. In operation 18-55, the UE may perform uplink transmission based on the updated transmission power.

[PUSCH power control]

PUSCH transmission power may be determined by means of Equation 8 below.

[Equation 8]

$$P_{PUSCH}(i, j, q_d, l)$$

$$= \min \left\{ \begin{array}{c} P_{CMAX,f,c}(i), \\ P_{0_{PUSCH},b,f,c}(j) + 10 \log_{10}\left(2^{\mu} \cdot M_{RB,b,f,c}^{PUSCH}(i)\right) + \alpha_{b,f,c}(j) \cdot PL_{b,f,c}(q_d) + \Delta_{TF,b,f,c}(i) + f_{b,f,c}(i,l) \end{array} \right\} \text{ [dBm]}$$

In Equation 8, $P_{CMAX,f,c}(i)$ denotes maximum transmission power configured for the UE with respect to carrier f of serving cell c at PUSCH transmission occasion i. $P_{0_{PUSCH},b,f,c}(j)$ denotes a reference transmission power configuration value according to activated uplink bandwidth part (BWP) b of the carrier f of the serving cell c, and has different values according to various transmission types j. $P_{0_{PUSCH},b,f,c}(j)$ may has various values according to a case where PUSCH transmission corresponds to a message3 PUSCH for random access or a case where the PUSCH is a configured grant PUSCH, or according to a scheduled PUSCH. $M_{RB,b,f,c}^{PUSCH}(i)$ denotes the magnitude of a frequency to which a PUSCH is allocated. $\alpha_{b,f,c}(j)$ denotes a compensation ratio value for path loss of UL BWP b of the carrier f of the serving cell c, and may be configured by a higher signal and may have different values according to j. $PL_{b,f,c}(q_d)$ denotes a downlink path loss estimation value of the UL BWP b of the carrier f of the serving cell c, and uses a value measured through a reference signal in an activated downlink bandwidth part. The reference signal may be an SS/PBCH block or a CSI-RS. The downlink path loss may be calculated as described above in Equation 7. In another embodiment of the disclosure, $PL_{b,f,c}(q_d)$ denotes a downlink path attenuation value and corresponds to path attenuation calculated by the UE as given in Equation 7. Depending on a higher signal configuration, the UE calculates the path attenuation, based on a reference signal resource associated with the SS/PBCH block or the CSI-RS. As the reference signal resource, one of various reference signal resource sets may be selected by a higher signal or an L1 signal, and the UE may calculate the path attenuation, based on the reference signal resource. $\Delta_{TF,b,f,c}(i)$ is a value determined by a modulation and coding scheme (MCS) value of a PUSCH at the PUSCH transmission occasion i of the UL BWP b of the carrier f of the serving cell *c*. $f_{b,f,c}(i, l)$ denotes a power control adaptation value and may dynamically control a power value by a TPC command.

The TPC command is divided into an accumulated mode and an absolute mode, and one of the two modes may be determined by a higher signal. The accumulated mode is a mode in which a currently determined power control adaptation value is accumulated to a value indicated by the TPC command, and the power control adaptation value may be increased or decreased according to the TPC command and has a relationship of $f_{b,f,c}(i, l) = f_{b,f,c}(i - i_0, l) + \sum \delta_{PUSCH,b,f,c}$. $\delta_{PUSCH,b,f,c}$ is a value indicated by the TPC command. The absolute mode has a value determined by the TPC command regardless of the currently determined power control adaptation value and has a relationship of $f_{b,f,c}(i, l) = \delta_{PUSCH,b,f,c}$. Table 44 below shows values which may be indicated by the TPC command.

[Table 44] TPC command

| [Table 44] | | |
|---|---|---|
| TPC Command Field | Accumulated $\delta_{PUSCH,b,f,c}$ or $\delta_{SRS,b,f,c}$ [dB] | Absolute $\delta_{PUSCH,b,f,c}$ or $\delta_{SRS,b,f,c}$ [dB] |
| 0 | -1 | -4 |
| 1 | 0 | -1 |

(continued)

[Table 44]

| TPC Command Field | Accumulated $\delta_{\text{PUSCH},b,f,c}$ or $\delta_{\text{SRS},b,f,c}$ [dB] | Absolute $\delta_{\text{PUSCH},b,f,c}$ or $\delta_{\text{SRS},b,f,c}$ [dB] |
|---|---|---|
| 2 | 1 | 1 |
| 3 | 3 | 4 |

[PUCCH power control]

Equation 9 below is an equation for determining PUCCH transmission power.

[Equation 9]

$$P_{PUCCH,b,f,c}(i, q_u, q_d, l)$$

$$= \min\left\{ \begin{array}{c} P_{\text{CMAX},f,c}(i), \\ P_{0_{\text{PUCCH}},b,f,c}(q_u) + 10\log_{10}\left(2^\mu \cdot M_{RB,b,f,c}^{PUCCH}(i)\right) + \text{PL}_{b,f,c}(q_d) + \Delta_{\text{F}_{\text{PUCCH}}}(i) + \Delta_{\text{TF},b,f,c}(i) + f_{b,f,c}(i,l) \end{array} \right\}$$

[dBm]

In Equation 9, $P_{0_{\text{PUCCH}},b,f,c}(q_u)$ denotes a reference transmission power configuration value, and may have different values according to various transmission types $q_u$ and may be changed by a higher signal such as an RRC or MAC CE. If the value is changed via an MAC CE, and HARQ-ACK for a PDSCH on which the MAC CE has been received is transmitted in slot k, the UE determines that the value is applied starting from slot k + $k_{\text{offset}}$. $k_{\text{offset}}$ has different values according to respective subcarrier spacings, and may have, for example, 3ms. $M_{RB,b,f,c}^{PUCCH}(i)$ denotes the size of a frequency resource domain to which the PUCCH is allocated. $\text{PL}_{b,f,c}(q_d)$ denotes a path attenuation estimation value of the UE, and as described above in Equation 7, is calculated by the UE, based on a specific reference signal among various CSI-RSs or SS/PBCHs according to the higher signal configuration and according to the type. The same $q_d$ is applied to repetition transmission PUCCHs. The same $q_u$ is applied to repetition transmission PUCCHs.

[NES Time domain]

There may be various methods to reduce power consumption of a base station. A representative example could be a method of transmitting and receiving signals in limited time resources. The base station may not use the power required for transmission and reception by not transmitting or receiving signals for a predetermined period of time.
Cell DTX may be divided into a first duration in which a signal is transmitted periodically from the perspective of the base station, and a second duration in which no signals are transmitted. The first duration may be referred to as an active duration, and the second duration may be referred to as a non-active duration. In the second duration, the UE may be able to receive no signals or may be able to receive only some important signals. For example, 1) it may be possible that the UE receives no signals in the second duration. Alternatively, 2) it may be possible that the UE receives only a synchronization signal (SSB) in the second duration. Alternatively, 3) it may be possible that the UE receives a synchronization signal (SSB) and data that does not require HARQ feedback and control information indicating corresponding data information in the second duration. Alternatively, 4) it may be possible that the UE receives a synchronization signal (SSB) and data that does not require HARQ feedback, control information indicating corresponding data information in the second duration, and a reference signal. Here, the reference signal (RS) may correspond to at least one of a DMRS, a CSI-RS, and a PRS. Alternatively, other reference signals for the purpose of channel estimation may correspond to the RS. Alternatively, 5) it may be possible that the UE receives a synchronization signal (SSB) and data that does not require HARQ feedback, control information indicating corresponding data information in the second duration, a reference signal, a PDCCH existing in a UE common search space (CSS), and related data information. Here, the reference signal (RS) may correspond to at least one of a DMRS, a CSI-RS, and a PRS. Alternatively, other reference signals for the purpose of channel estimation may correspond to the RS.
Cell DRX may be divided into a first duration in which a signal is received periodically from the base station's perspective, and a second duration in which no signals are received. The first duration may be referred to as an active duration, and the second duration may be referred to as a non-active duration. In the second duration, the UE may be able to transmit no signals or may be able to transmit only some important signals. For example, 1) it may be possible that the UE transmits no signals in the second duration. Alternatively, 2) it may be possible that the UE transmits only a PRACH and a Msg. 3 PUSCH in the second duration. Alternatively, 3) it may be possible that the UE transmits only a PRACH, a PUSCH including Message 3 information, and a reference signal in the second duration. Here, the reference signal may correspond to a SRS or another reference signal for uplink channel estimation. Alternatively, 4) it may be possible that the UE transmits only a PRACH, a PUSCH including Message 3 information, a reference signal, and a periodically transmitted signal in the second duration. Here, the reference signal may correspond to a SRS or another reference signal for uplink channel estimation. Here, the periodically transmitted signal may correspond to a SR, a CSI, or a configured grant PUSCH.

It may be possible to apply the base station described above as a transmitter and the UE as a receiver. That is, it may be possible for the UE to become a transmitter or for the base station to become a receiver.

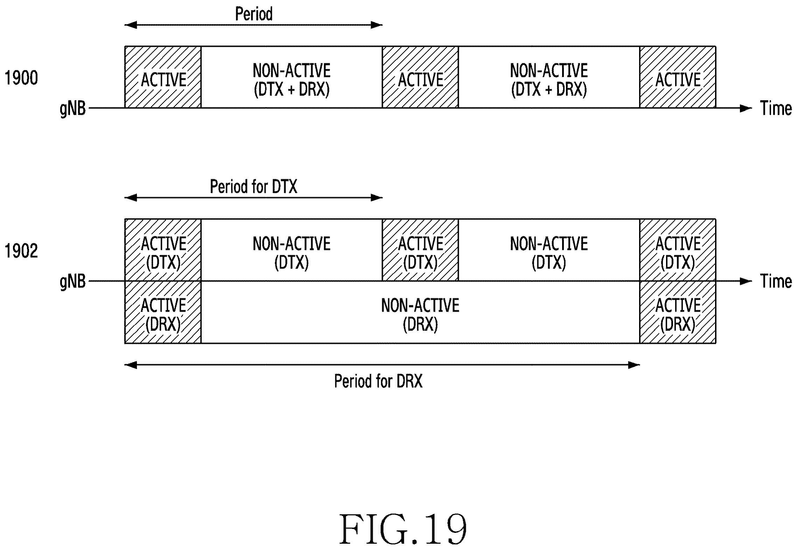

FIG. 19 is a view illustrating cell DTX and a period and duration of the cell DRX in a wireless communication system according to an embodiment of the disclosure.

It may be possible that Cell DTX and Cell DRX have a common period (PERIOD) and a common first duration (ACTIVE) and second duration (NON-ACTIVE) as illustrated in 1900 of FIG. 19. Alternatively, it may be possible that Cell DTX and Cell DRX have different periods (PERIOD) and different first durations (ACTIVE) and second durations (NON-ACTIVE) as illustrated in 1902 of FIG. 19. Alternatively, it may be possible that Cell DTX and Cell DRX have a common period (PERIOD) but different first durations (ACTIVE) and second durations (NON-ACTIVE). Since Cell DTX corresponds to a case in which the base station does not periodically transmit a signal in the second duration (NON-ACTIVE), it may be possible for the UE to define the duration as not receiving a signal like UE DRX. Since Cell DRX corresponds to a case in which the base station does not periodically receive a signal in the second duration (NON-ACTIVE), it may be possible for the UE to define the duration as not transmitting a signal like UE DTX.

Since Cell DTX correspond to a case in which the base station does not perform transmission in the second duration (NON-ACTIVE), there may be cases where other signals overlap with the second duration from the perspective of the UE. In case that the corresponding signal is a downlink signal and the second duration is preconfigured by an L2 signal such as RRC, the UE may consider that the semi-static UL and the corresponding signal overlap and may be able to cancel reception of the signal. In case that the corresponding signal is a downlink signal and the second duration is indicated by an L1 signal such as a DCI, the UE may consider that the semi-static flexible symbol is indicated as UL by a dynamic SFI. Thereafter, the UE may consider same as overlapping with the corresponding signal and may be able to cancel reception of the signal. Here, a processing timeline for canceling reception may be defined. For example, immediately after receiving the L1 signal, the UE may or may not cancel reception of the signal for a predetermined duration (T1), and may be able to cancel reception of the signal after the T1 duration. In case that the corresponding signal is an uplink signal and the second duration is preconfigured by an L2 signal such as RRC, the UE may consider that the semi-static DL and the corresponding signal overlap and may be able to cancel transmission of the signal. In case that the corresponding signal is an uplink signal and the second duration is indicated by an L1 signal such as a DCI, the UE may consider that the semi-static flexible symbol is indicated as DL by a dynamic SFI. Thereafter, the UE may consider same as overlapping with the corresponding signal and may be able to cancel transmission of the signal. Here, a processing timeline for canceling transmission may be defined. For example, immediately after receiving the L1 signal, the UE may or may not cancel transmission of the signal for a predetermined duration (T2), and may be able to cancel transmission of the signal after the T2 duration.

Since Cell DRX correspond to a case in which the base station does not perform reception in the second duration (NON-ACTIVE), there may be cases where other signals overlap with the second duration from the perspective of the UE. In case that the corresponding signal is a downlink signal and the second duration is preconfigured by an L2 signal such as RRC, the UE may consider that the semi-static UL and the corresponding signal overlap and may be able to cancel reception of the signal. In case that the corresponding signal is a downlink signal and the second duration is indicated by an L1 signal such as a DCI, the UE may consider that the semi-static flexible symbol is indicated as UL by a dynamic SFI. Thereafter, the UE may consider same as overlapping with the corresponding signal and may be able to cancel reception of the signal. Here, a processing timeline for canceling reception may be defined. For example, immediately after receiving the L1 signal, the UE may or may not cancel reception of the signal for a predetermined duration (T1), and may be able to cancel reception of the signal after the T1 duration. In case that the corresponding signal is an uplink signal and the second duration is preconfigured by an L2 signal such as RRC, the UE may consider that the semi-static DL and the corresponding signal overlap and may be able to cancel transmission of the signal. In case that the corresponding signal is an uplink signal and the second duration is indicated by an L1 signal such as a DCI, the UE may consider that the semi-static flexible symbol is indicated as DL by a dynamic SFI. Thereafter, the UE may consider same as overlapping with the corresponding signal and may be able to cancel transmission of the signal. Here, a processing timeline for canceling transmission may be defined. For example, immediately after receiving the L1 signal, the UE may or may not cancel transmission of the signal for a predetermined duration (T2), and may be able to cancel transmission of the signal after the T2 duration.

[NES Spatial domain]

A method for limiting the number of transmission/reception antennas installed on the base station may be used to reduce power consumption of the base station. For example, in case that a base station having 64 transmission/reception antennas transmits/receives signals using only 32 transmission/reception antennas under a specific condition, it may be theoretically possible to reduce the power consumption required for antenna operation by at least half. The base station may be able to inform UEs of whether the adjustment of the number of transmission/reception antennas has been applied, through a separate L1 or L2 signal.

[Introduction part of embodiment]

Hereinafter, an operation method of a UE in a situation where multiple DL semi-persistent scheduling (SPS) resources may overlap and exist in a situation where DTX/DRX is applied among the above-described method for reducing power consumption of a base station, an operation method of a UE in a situation where HARQ-ACK information for a DL SPS is processed, and an operation method of a UE in a situation where HARQ-ACK information is retransmitted will be described below. Here, the DL SPS refers to as a method in which a UE periodically receives a PDSCH without a separate DCI.

<First embodiment: Method for resolving overlapping of multiple DL SPSs in Cell DTX>

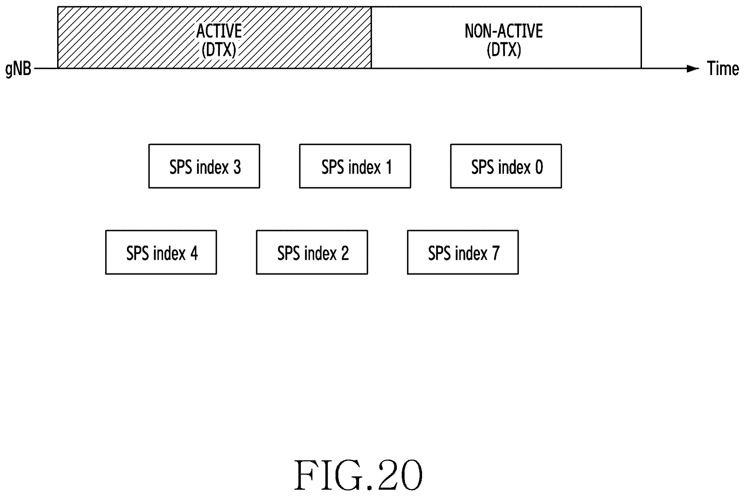

FIG. 20 is a view illustrating a method for selecting a DL SPS to be received by a UE according to an embodiment of the disclosure.
In the first embodiment of the disclosure, in a situation where multiple DL SPSs exist, since it is impossible for a UE to receive two or more DL SPSs simultaneously within one cell and one BWP, a method for selecting a DL SPS is required. Here, it may be necessary to additionally consider a case of overlapping with Cell DTX. FIG. 20 shows a method for a UE to select a DL SPS to be received according to the first embodiment of the disclosure. Basically, in a situation where multiple DL SPSs exist, a method for a UE to select a DL SPS to be received, excluding overlapped DL SPSs, is as follows [Table 45].

[Table 45]

| |
|---|
| Step 1: Exclude a resource overlapping with an UL symbol configured as an upper signal among candidate DL SPS resources in a predetermined slot j=0 |
| Step 2: Select an SPS (SPS i) having a lowest index from a set (DL SPS set) of remaining candidate DL SPS resources excluding the DL SPS resource excluded in Step 1 and j = j+1. |
| Step 3: Exclude, from the DL SPS set, other candidate DL SPSs that have at least one symbol overlapping with SPS i in terms of time resources |
| Step 4: Repeat Step 2 and Step 3 until the DL SPS set becomes an empty set or the value of j is equal to the maximum number of PDSCHs that the UE is capable of receiving in one slot. |

To describe the case above with reference to FIG. 20, in a situation where the maximum possible number of PDSCHs is 3, the UE will finally select and receive SPS index 0, SPS index 1, and SPS index 3 according to [Table 45]. This is a method that does not consider the first and second durations of Cell DTX, and the following describes a method for selecting a DL SPS to be received by the UE in a situation where Cell DTX is applied. <Embodiment 1-1: Case 1 where DTX is configured through RRC>
According to an embodiment of the disclosure, in a situation where the first duration (ACTIVE) and the second duration (NON-ACTIVE) of Cell DTX are configured through RRC, it may be possible for the UE to first resolve overlapping of DL SPS resources for the remaining candidate DL SPSs, excluding those that overlap in terms of time resources with the second duration, before selecting a DL SPS to receive. As such, the UE may exclude DL SPSs that may not be received according to Cell DTX in advance from the set of candidate DL SPSs. For example, the UE may be able to select a DL SPS to receive in a situation where Cell DTX is applied in a manner as in the following [Table 46].

[Table 46]

| |
|---|
| Step 1: Exclude a resource overlapping with an UL symbol configured as an upper signal among candidate DL SPS resources in a predetermined slot j=0. Exclude a resource overlapping the second duration of Cell DTX among candidate DL SPS resources. |

(continued)

Step 2: Select an SPS (SPS i) having a lowest index from a set (DL SPS set) of remaining candidate DL SPS resources excluding the DL SPS resource excluded in Step 1 and j = j+1.

Step 3: Exclude, from the DL SPS set, other candidate DL SPSs that have at least one symbol overlapping with SPS i in terms of time resources

Step 4: Repeat Step 2 and Step 3 until the DL SPS set becomes an empty set or the value of j is equal to the maximum number of PDSCHs that the UE is capable of receiving in one slot.

To describe the case above with reference to FIG. 20, in a situation where the maximum possible number of PDSCHs is 3, the UE will finally select and receive SPS index 2 and SPS index 4 according to [Table 46]. <Embodiment 1-2: Case 2 where DTX is configured through RRC>

According to an embodiment of the disclosure, in a situation where the first duration (ACTIVE) and the second duration (NON-ACTIVE) of Cell DTX are configured through RRC, a method is possible for a UE to exclude DL SPS resources that overlap with the second duration in terms of time resources after selecting a DL SPS to receive. For example, the UE may be able to select a DL SPS to receive in a situation where Cell DTX is applied in a manner as in the following [Table 47].

[Table 47]

Step 1: Exclude a resource overlapping with an UL symbol configured as an upper signal among candidate DL SPS resources in a predetermined slot j=0.

Step 2: Select an SPS (SPS i) having a lowest index from a set (DL SPS set) of remaining candidate DL SPS resources excluding the DL SPS resource excluded in Step 1 and j = j+1.

Step 3: Exclude, from the DL SPS set, other candidate DL SPSs that have at least one symbol overlapping with SPS i in terms of time resources

Step 4: Repeat Step 2 and Step 3 until the DL SPS set becomes an empty set or the value of j is equal to the maximum number of PDSCHs that the UE is capable of receiving in one slot.

Step 5: Perform reception of remaining DL SPS resources excluding a resource overlapping the second duration of Cell DTX among the selected DL SPS resources.

To describe the case above with reference to FIG. 20, in a situation where the maximum possible number of PDSCHs is 3, the UE will finally select and receive only SPS index 3 according to [Table 47]. <Embodiment 1-3: Case 1 where DTX is indicated through DCI>

According to an embodiment of the disclosure, in a situation where the first duration (ACTIVE) and the second duration (NON-ACTIVE) of Cell DTX may be indicated through DCI, the UE may determine whether the first duration or the second duration occurs through DCI search. Here, in case that the second duration information is determined through DCI search and overlaps with one or more DL SPS resources, the UE may first exclude candidate DL SPS resources that overlap with the second duration in terms of time resources from the DL SPS set as described above in the embodiment 1-1.

<Embodiment 1-4: Case 2 where DTX is indicated through DCI>

According to an embodiment of the disclosure, in a situation where the first duration (ACTIVE) and the second duration (NON-ACTIVE) of Cell DTX may be indicated through DCI, the UE may determine whether the first duration or the second duration occurs through DCI search. Here, in case that the second duration information is determined through DCI search and overlaps with one or more DL SPS resources, the UE may first exclude candidate DL SPS resources that overlap with the second duration in terms of time resources from the DL SPS candidates by considering a last DL SPS as described above in the embodiment 1-2.

<Embodiment 1-5: Case 3 where DTX is indicated through DCI>

According to an embodiment of the disclosure, in a situation where the first duration (ACTIVE) and the second duration (NON-ACTIVE) of Cell DTX may be indicated through DCI, the UE may determine whether the first duration or the second duration occurs through DCI search. If the UE misses the DCI indicating the first and second durations, a problem may occur in selecting a candidate DL SPS resource because the UE does not know accurate information about the second duration. Therefore, it may be possible for the UE to support at least one of following various methods to address this problem.

- Method A-1: corresponds to a method in which candidate DL SPS resources located before X symbols after the last symbol of the PDCCH including the corresponding DCI information are included in the DL SPS set, and candidate DL SPS resources located in the symbols thereafter are not included in the DL SPS set. It may be possible to consider a time point of applying the method in Step 1 or after Step 4, as explained with the example in [Table 45].
- Method A-2: corresponds to a method of assuming that all the durations that may be indicated through corresponding DCI are the first duration. That is, it is determined that the second duration is not applied. This method is identical to [Table 45].
- Method A-3: corresponds to a method of assuming that all the durations that may be indicated through all DCI are the second duration. Therefore, the UE does not perform reception for all DL SPS resources existing in the corresponding duration. In addition, since the UE does not receive DL SPS resources, it may be possible that the UE does not report HARQ-ACK information related thereto.

<Embodiment 1-6: SPS resource configuration for Cell DTX>

According to an embodiment of the disclosure, it may be possible for a base station to provide a different set of DL SPS resources to a UE when Cell DTX is applied and when Cell DTX is not applied. For example, considering FIG. 20, when Cell DTX is not applied, it may be possible to consider SPS indexes 0, 1, 2, 3, 4, and 7 as candidate DL SPS resource domains. On the other hand, when Cell DTX is applied, it may be possible to determine that only SPS index 3 is valid, or that a separate SPS resource is determined. It is possible that there is only one corresponding SPS resource per slot, or there may be multiple SPS resources. Applying of Cell DTX applied means that the UE has Cell DTX duration information configured periodically in advance by an L1 signal or an L2 signal. Not applying of of Cell DTX may mean only the first duration (ACTIVE) or that there is no L1 signal or L2 signal indicating Cell DTX.

Additionally, the embodiments described above are only examples, and combinations of all or some of the embodiments may be possible.

<Embodiment 2: HARQ-ACK deferring operation method in Cell DRX>

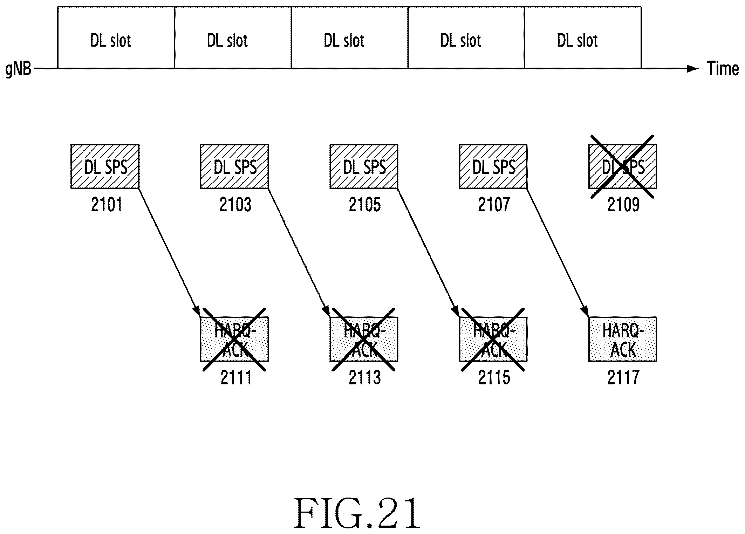

FIG. 21 is a view illustrating an example of transmitting HARQ-ACK feedback in a situation where DL SPS resources are periodically allocated for each slot in a wireless communication system according to one embodiment of the present disclosure.

A method for a UE to apply HARQ-ACK deferring in a situation where Cell DRX is configured according to an embodiment of the disclosure will be described. Before explaining HARQ-ACK deferring, the operation for DL SPS is further explained as follows.

DL SPS means periodically receiving a DL SPS (PDSCH) resource without separate DCI scheduling. Therefore, the UE may be able to transmit HARQ-ACK feedback for the DL SPS received periodically on the periodically allocated PUCCH resources. However, in a TDD environment, since the UE may only perform downlink reception or uplink transmission in a specific slot, there may be cases where HARQ-ACK feedback for the DL SPS received in a specific slot may not be transmitted. Assuming, as an example in FIG. 21, that a DL SPS resource is allocated periodically in every slot and HARQ-ACK feedback for each DL SPS resource is transmitted in a next slot, the UE receives DL SPSs 2101, 2103, 2105, and 2107 during the first to fourth DL slots, but the HARQ-ACK feedback therefor may be transmitted only on the PUCCH resource 2117 present in the first UL slot. That is, it is impossible to transmit HARQ-ACK feedback on PUCCH resources 2111, 2113, and 2115 because the PUCCH resources 2111, 2113, and 2115 overlap with DL slots. Therefore, a HARQ-ACK deferring method may be considered to address this problem.

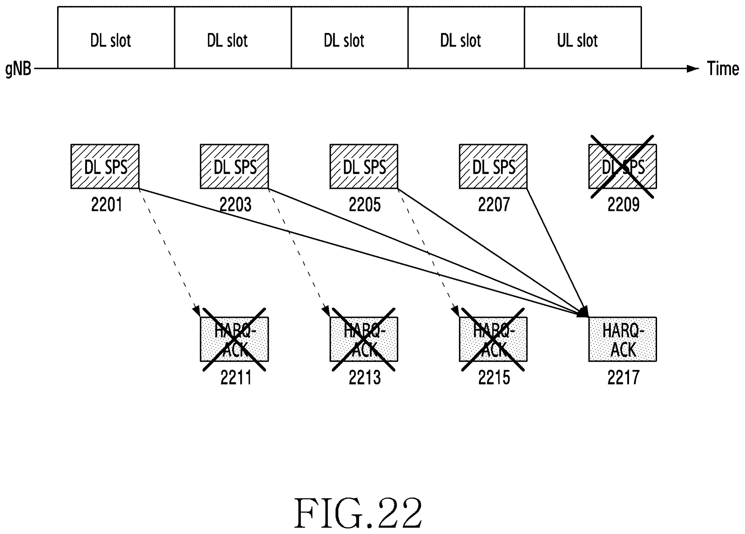

FIG. 22 is a view illustrating another example of transmitting HARQ-ACK feedback in a situation where DL SPS resources are periodically allocated for each slot in a wireless communication system according to one embodiment of the present disclosure.

Referring to FIG. 22 as an example, since the existing HARQ-ACK feedback for DL SPS 2201 may not use the PUCCH resource 2211, it may be possible to transmit the feedback for DL SPS 2201 on a next resource 2217 available for HARQ-ACK PUCCH transmission, which is an earliest available resource for HARQ-ACK PUCCH transmission thereafter. Similarly, since the existing HARQ-ACK feedback for DL SPS 2203 may not use the PUCCH resource 2213, it may be possible to transmit the feedback for DL SPS 2203 on a next resource 2217 available for HARQ-ACK PUCCH transmission, which is an earliest available resource for HARQ-ACK PUCCH transmission thereafter. Similarly, since the existing HARQ-ACK feedback for DL SPS 2205 may not use the PUCCH resource 2215, it may be possible to transmit the feedback for DL SPS 2205 on a next resource 2217 available for HARQ-ACK PUCCH transmission, which is an earliest available resource for HARQ-ACK PUCCH transmission thereafter. Since the resource on which the actual HARQ-ACK feedback is transmitted is postponed, this may be called HARQ-ACK deferring. HARQ-ACK deferring may be determined basically according to whether the PUCCH resource that will include the HARQ-ACK feedback corresponding to the DL SPS overlaps with a semi-statically configured DL or SSB or CORESET 0 and the PDSCH scheduled therethrough. In FIG. 22, deferring is performed due to the overlapping with the DL slot that is configured semi-statically, and since an earliest available HARQ-ACK PUCCH resource is 2217, HARQ-ACK feedback information for DL SPSs 2201, 2203, 2205, and 2207 is transmitted on the resource 2217. The HARQ-ACK deferring method may be determined by the base station based on the UE capability report, and it may be possible for the base station to configure whether to perform HARQ-ACK deferring among UEs supporting the method through an upper signal configuration.

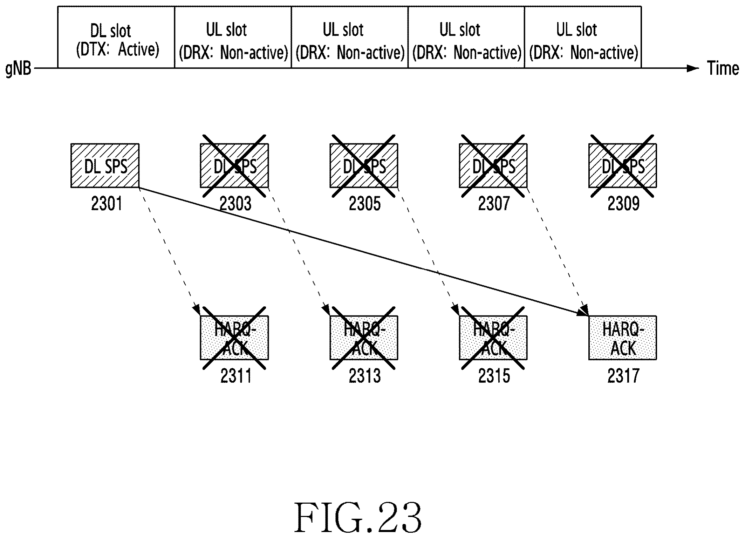

FIG. 23 is a view illustrating still another example of transmitting HARQ-ACK feedback in a situation where DL SPS resources are periodically allocated for each slot in a wireless communication system according to one embodiment of the present disclosure.

Considering the HARQ-ACK deferring method, a manner in which the method is applied when Cell DRX is configured will is explained with reference to FIG. 23 as an example. A case where 5 slots are configured, and each slot is sequentially configured with one DL slot and 4 UL slots is shown. A first DL slot is ACTIVE, first UL slot to the third UL slots are NON-ACTIVE, and a last UL slot is ACTIVE. Considering the DL SPS configuration having been considered in FIGS. 21 and 22, the UE receives the DL SPS 2301 only on the first DL slot, and does not receive the DL SPSs 2303, 2305, 2307, and 2309 on the remaining slots because the DL SPSs 2303, 2305, 2307, and 2309 overlap with the UL slot. In addition, since the UE receives only the DL SPS 2301, the HARQ-ACK feedback therefor needs to be transmitted on the PUCCH 2311 according to the existing DL SPS configuration. However, since the PUCCH 2311 is a UL slot and overlaps with the NON-ACTIVE duration, it may be difficult for the UE to transmit the HARQ-ACK feedback. Therefore, it may be possible to support same by utilizing HARQ-ACK deferring.

By way of example, the UE may be able to consider whether the HARQ-ACK PUCCH resource corresponding to the received DL SPS 1) overlaps with a semi-statically configured DL or SSB or CORESET 0 and a PDSCH scheduled therethrough, or 2) overlaps with a UL slot but the second duration (NON-ACTIVE) indicated by the Cell DRX configuration. In FIG. 23, since the HARQ-ACK PUCCH 2311 resource overlaps with the second duration (NON-ACTIVE) of the UL slot, HARQ-ACK feedback transmission is impossible from the perspective of the UE, and the UE may be able to transmit HARQ feedback for the DL SPS 2301 using the PUCCH resource in the first duration (ACTIVE) of the first existing UL slot thereafter. As another example, under a condition for determining HARQ-ACK deferring, the second duration (NON-ACTIVE) may be possible only when indicated by a higher layer signal. As another example, under the condition for determining HARQ-ACK deferring, the second duration (NON-ACTIVE) may be possible only when indicated by the L1 signal. As another example, under the condition for determining HARQ-ACK deferring, the second duration (NON-ACTIVE) may be possible when indicated by the upper signal, or when indicated by the L1 signal, or when indicated by considering both signals, which may be possible to be selected by a separate upper signal.

For another example, it may be possible for the UE not to perform HARQ-ACK deferring and not to transmit the HARQ-ACK feedback included in the PUCCH 2311. In other words, if the second duration indicated by the upper signal and the HARQ-ACK PUCCH 2311 for the DL SPS 2301 overlap, the UE does not transmit the corresponding PUCCH and does not perform separate HARQ-ACK deferring. Alternatively, if the second duration indicated by the L1 signal and the HARQ-ACK PUCCH 2311 for the DL SPS 2301 overlap, the UE does not transmit the corresponding PUCCH and does not perform separate HARQ-ACK deferring. Alternatively, if the second duration indicated by the upper signal and the L1 signal and the HARQ-ACK PUCCH 2311 for the DL SPS 2301 overlap, the UE does not transmit the corresponding PUCCH and does not perform separate HARQ-ACK deferring.

As another example, the UE may be able to determine whether to perform HARQ-ACK deferring based on the length of the second duration of the UL slot. Specifically, in case that a difference between a slot n to which the existing PUCCH including the HARQ feedback for the DL SPS is allocated and a slot m to which the PUCCH for transmitting the actual HARQ feedback due to the HARQ-ACK deferring is greater than a predetermined threshold, the UE may be able to discard the HARQ feedback. For example, in case that the threshold is 2, since m-n is 3 in FIG. 23, the UE does not transmit the HARQ feedback for the DL SPS 2301. For another example, in case that the threshold is 4, since m-n is 3 in FIG. 23, the UE may transmit the HARQ feedback for the DL SPS 2301 through the PUCCH 2317. The threshold may be configured through a separate upper signal. In case that HARQ-ACK deferring is excessively delayed, a transmission delay time for the corresponding data may be increased from the perspective of the UE, which may result in reduced utilization for retransmission. Therefore, dropping the HARQ-ACK PUCCH may reduce power consumption from the perspective of the UE, and the base station may be able to utilize the corresponding uplink resources for other purposes.

Additionally, the embodiments described above are only examples, and combinations of all or some of the embodiments may be possible.

<Embodiment 3: HARQ retransmission method in Cell DRX situation>

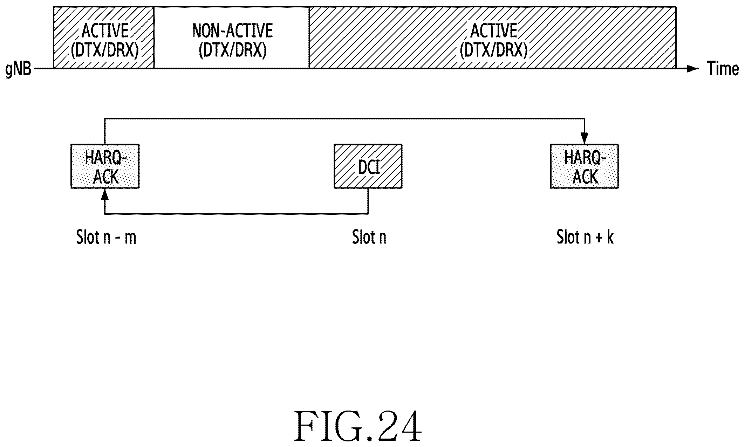

FIG. 24 is a view illustrating an indication that a UE receives DCI information in a PDCCH resource in one slot, the DCI indicates HARQ-ACK information, and the DCI indicates that a PUCCH resource in which the HARQ-ACK information is to be retransmitted is in another slot in a wireless communication system according to one embodiment of the disclosure.

The UE receives the PDSCH and adds and transmits information on whether data (or TB) reception was successful in the form of HARQ-ACK feedback included in the PUCCH. There is a case where the UE fails to transmit the PUCCH including the corresponding HARQ-ACK information. As described above, there may be cases where the PUCCH resource is overlapped with a semi-static UL symbol, or with other higher priority uplink resources, or where a portion of the PUCCH resource is overlapped by a UL cancellation indication. Alternatively, there is also a case where the UE actually transmits the PUCCH but the base station does not receive the PUCCH properly. For the reasons described above, in case that the base station fails to properly receive the HARQ-ACK information, it is impossible to determine whether the UE has properly received the TB included in the PDSCH corresponding to the HARQ-ACK information or not. Therefore, it is common for the base station to conservatively assume that the PDSCH was not received and perform retransmission. If the UE has previously properly received the TB included in the corresponding PDSCH, the UE will transmit ACK, but the resources for the PDSCH retransmitted by the base station may be unnecessarily used, which may be a waste from the perspective of system radio resources. Therefore, as a possible method, it may be possible for the base station to instruct the UE to retransmit the HARQ-ACK feedback transmitted by the UE through a DCI without separate PDSCH scheduling. Referring to FIG. 24 as an example, it may be possible that the UE receives DCI information in the PDCCH resource in slot n, and 1) the DCI indicates HARQ-ACK information in the PUCCH resource which the UE has previously transmitted or was about to be transmitted in slot n - m, and 2) the DCI indicates that the PUCCH resource through which this HARQ-ACK information is to be retransmitted is in slot n + k. Accordingly, the UE may be able to transmit, in slot n + k, the HARQ-ACK information which the UE had previously transmitted or was about to transmit in slot n - m. For example, a possible value of m may be from -7 to 24, and the values of k may be from 0 to 32. In addition, slot n + k needs to exist after slot n - m.

If the Cell DTX/DRX configurations are common and the first duration (ACTIVE) and the second duration (NON-ACTIVE) are periodically configured through the upper signal or the L1 signal, the second duration may exist between slot n-m and slot n as illustrated in FIG. 24. In this case, if a length of the second duration is greater than 24 slots, the length is greater than 24 which a maximum value of M, and thus it may be difficult for the base station to receive only HARQ-ACK feedback information from the UE using only DCI because. Therefore, various methods may be considered to solve the issue described above. For example, when the UE calculates the value of m, it may be possible to exclude slots corresponding to the second duration from the count. For example, in case of considering the second duration, if the value of m is 26 and the number of slots included in the second duration is 22, the base station configures the value of m to 4 in the DCI transmitted in slot n. As such, the base station may be able to receive only HARQ-ACK feedback from the UE again in a wider range. Furthermore, it may be possible to apply the second duration only to a duration configured through only the upper signal. Alternatively, it may be possible to apply the second duration only to a duration configured through only the L1 signal. Alternatively, it may be possible to apply the second duration only to a duration configured through only a combination of the upper signal and the L1 signal. Similar issues may be equally applied to n + k.

In summary, when the information of the DCI indicated in slot n indicates m and k offset information, it may be possible for the UE to determine that the number of slots included in the second duration is not reflected in the information of the corresponding m and k, respectively. Alternatively, when the information of the DCI indicated in slot n indicates m and k offset information, it may be possible for the UE to determine that the number of slots included in the second duration is reflected in the information of the corresponding m and k, respectively. Alternatively, when the information of the DCI indicated in slot n indicates m and k offset information, it may be possible for the UE to determine that the number of slots included in the second duration is reflected or not reflected in the information of the corresponding m and k, respectively, and this may be determined according to the length of the second duration. For example, in case that the length of the second duration is greater than a predetermined threshold, when the information of the DCI indicated in slot n indicates m and k offset information, it may be possible for the UE to determine that the number of slots included in the second duration is not reflected in the information of the corresponding m and k, respectively. For example, in case that the length of the second duration is less than a predetermined threshold, when the information of the DCI indicated in slot n indicates m and k offset information, it may be possible for the UE to determine that the number of slots included in the second duration is reflected in the information of the corresponding m and k, respectively. The threshold may be a fixed value or may be configured by a separate upper signal.

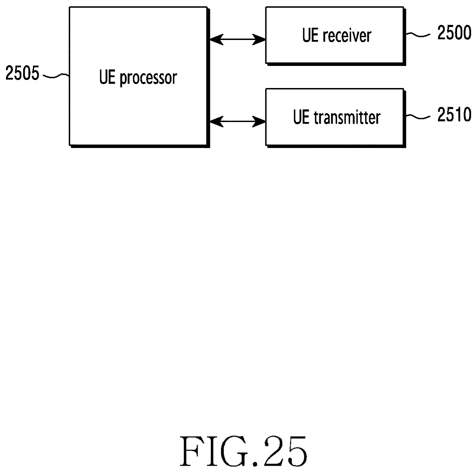

FIG. 25 illustrates a structure of a UE in a wireless communication system according to an embodiment of the disclosure; and

Referring to FIG. 25, the UE may include a transceiver, which refers to a UE receiver 2500 and a UE transmitter 2510 as a whole, a memory (not illustrated), and a UE processor 2505 (or UE controller or processor). The UE transceiver 2500 and 2510, the memory, and the UE processor 2505 may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes such that the UE can operate according to the above-described embodiments. For example, the processor may control components of the UE to receive DCI configured in two layers so as to simultaneously receive multiple PDSCHs. The processor may include multiple processors, and the processor may perform operations of controlling the components of the UE by executing programs stored in the memory.

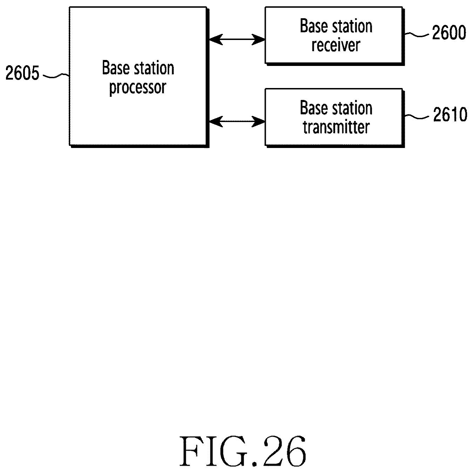

FIG. 26 illustrates a structure of a base station in a wireless communication system according to an embodiment of the disclosure.

Referring to FIG. 26, the base station may include a transceiver, which refers to a base station receiver 2600 and a base station transmitter 2610 as a whole, a memory (not illustrated), and a base station processor 2605 (or base station controller or processor). The base station transceiver 2600 and 2610, the memory, and the base station processor 2605 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes such that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a user equipment (UE) in a wireless communication system, the method comprising:

   receiving, from a base station, first configuration information associated with a semi-persistent scheduling(SPS) physical downlink shared channel (PDSCH) and second configuration information associated with a cell discontinuous transmission (DTX), wherein the second configuration information includes information on an active duration in which the UE receives the SPS PDSCH; and
   receiving, from the base station, at least one SPS PDSCH excluding an SPS PDSCH overlapping a non-active duration based on the second configuration information among one or more SPS PDSCHs based on the first configuration information.

2. The method of claim 1, further comprising:
   transmitting, to the base station, hybrid automatic repeat request acknowledgment (HARQ-ACK) information for the at least one SPS PDSCH.

3. The method of claim 1, further comprising determining the at least one SPS PDSCH,
   wherein the determining of the at least one SPS PDSCH comprises:

   determining a first SPS PDSCH by excluding an SPS PDSCH overlapping a symbol for uplink among multiple SPS PDSCHs, and configuring j=0;
   determining a second SPS PDSCH, which is an SPS PDSCH assigned a lowest index among the first SPS PDSCH, and increasing a value of j by 1; and
   determining a third SPS PDSCH by excluding the second SPS PDSCH and an SPS PDSCH overlapping the second SPS PDSCH from the first SPS PDSCH.

4. The method of claim 3, wherein the increasing of the value of j by 1 and the determining of the third SPS PDSCH are repeatedly performed until there are no more SPS PDSCHs included in the third SPS PDSCH or the value of j becomes equal to a maximum value of PDSCHs receivable by the UE within a slot.

5. A method performed by a base station in a wireless communication system, the method comprising:

transmitting, to a user equipment (UE), first configuration information associated with a semi-persistent scheduling (SPS) physical downlink shared channel (PDSCH) and second configuration information associated with cell discontinuous transmission (DTX), wherein the second configuration information includes information on an active duration in which the base station transmits the SPS PDSCH; and

transmitting, to the UE, at least one SPS PDSCH excluding an SPS PDSCH overlapping a non-active duration based on the second configuration information among one or more SPS PDSCHs based on the first configuration information.

6. The method of claim 5, further comprising:

receiving, from the UE, hybrid automatic repeat request acknowledgment (HARQ-ACK) information for the at least one SPS PDSCH.

7. The method of claim 1,

wherein a first SPS PDSCH is determined by excluding an SPS PDSCH overlapping a symbol for uplink among multiple SPS PDSCHs, and j=0 is configured,

wherein a second SPS PDSCH, which is an SPS PDSCH assigned a lowest index is determined among the first SPS PDSCH, and a value of j is increased by 1, and

wherein a third SPS PDSCH is determined by excluding the second SPS PDSCH and an SPS PDSCH overlapping the second SPS PDSCH from the first SPS PDSCH.

8. The method of claim 7, wherein the at least one SPS PDSCH is determined as a result of repeatedly performing the increasing of the value of j by 1 and determining of the third SPS PDSCH until there are no more SPS PDSCHs included in the third SPS PDSCH or the value of j becomes equal to a maximum value of PDSCHs receivable by the UE within a slot.

9. A user equipment (UE) in a wireless communication system, the UE comprising:

a transceiver; and
a controller coupled to the transceiver,
wherein the controller is configured to:

receive, from a base station, first configuration information associated with a semi-persistent scheduling (SPS) physical downlink shared channel (PDSCH) and second configuration information associated with cell discontinuous transmission (DTX), wherein the second configuration information includes information on an active duration in which the UE receives the SPS PDSCH; and

receive, from the base station, at least one SPS PDSCH excluding an SPS PDSCH overlapping a non-active duration based on the second configuration information among one or more SPS PDSCHs based on the first configuration information.

10. The UE of claim 9, wherein the controller is further configured to transmit, to the base station, hybrid automatic repeat request acknowledgment (HARQ-ACK) information for the at least one SPS PDSCH.

11. The UE of claim 9, wherein the controller is further configured to, in order to determine the at least one SPS PDSCH:

determine a first SPS PDSCH by excluding an SPS SPS PDSCH overlapping a symbol for uplink among multiple SPS PDSCHs, and configure j=0;

determine a second SPS PDSCH, which is an SPS PDSCH assigned a lowest index among the first SPS PDSCH, and increase a value of j by 1; and

determine a third SPS PDSCH by excluding the second SPS PDSCH and an SPS PDSCH overlapping the second SPS PDSCH from the first SPS PDSCHs.

12. The UE of claim 9, wherein the controller is configured to repeatedly increase the value of j by 1 and determine the third SPS PDSCH until there are no more SPS PDSCHs included in the third SPS PDSCH or the value of j becomes equal to a maximum value of PDSCHs receivable by the UE within a slot.

13. A base station in a wireless communication system, the base station comprising:

a transceiver; and
a controller coupled to the transceiver,
wherein the controller is configured to:

transmit, to a user equipment (UE), first configuration information associated with a semi-persistent scheduling (SPS) physical downlink shared channel (PDSCH) and second configuration information associated with cell discontinuous transmission (DTX), wherein the second configuration information includes information on an active duration in which the base station transmits the SPS PDSCH; and transmit, to the UE, at least one SPS PDSCH excluding an SPS PDSCH overlapping a non-active duration based on the second configuration information among one or more SPS PDSCHs based on the first configuration information.

14. The base station of claim 13, wherein the controller is further configured to receive, from the UE, hybrid automatic repeat request acknowledgment (HARQ-ACK) information for the at least one SPS PDSCH.

15. The base station of claim 13,

wherein a first SPS PDSCH is determined by excluding an SPS PDSCH overlapping a symbol for uplink among multiple SPS PDSCHs, and j=0 is configured;
wherein a second SPS PDSCH, which is an SPS PDSCH assigned a lowest index is determined among the first SPS PDSCHs, and a value of j is increased by 1, and
wherein a third SPS PDSCH is determined by excluding the second SPS PDSCH and an SPS PDSCH overlapping the second SPS PDSCH from the first SPS PDSCH.

One subframe(110)

1 OFDM symbols (102)

$N_{symb}^{subframe,\mu}$ OFDM symbols

1 subcarrier (103)

$k=N_{RB,x}^{max,\mu} N_{SC}^{RB}-1$

Resource element (k, l) (101)

$N_{RB}N_{SC}^{RB \ u}$ subcarriers

Resource block $N_{SC}^{RB}$ subcarriers (104)

$\overline{l}= 0$

$\overline{l}= 14 \cdot 2^{\mu}-1$

k = 0

Frequency

Time

FIG.1

FIG.2

BWP#1
(301)

BWP#2
(302)

UE bandwidth
(300)

Frequency

FIG.3

FIG.4

1 symbol
(501)

1 PRB (502)

DMRS
(505)

CCE
(504)

REG
(503)

FIG.5

FIG.6

**RRC configured TCI states (800)**

| TCI #0 (805) | TCI #1 (810) | TCI #2 (815) | · · · | TCI #N (820) |

**A list of TCI states for a CORESET (825)**

| TCI #a (830) | TCI #b (835) | · · · | TCI #n (840) |

TCI indication via MAC CE
(845)

# FIG.8

| Serving Cell ID (915) | CORESET ID (920) | Oct 1 (900) |
|---|---|---|
| CORE SET ID | TCI state ID (925) | OCt 2 (905) |

# FIG.9

FIG.10

EP 4 651 579 A1

FIG.11

FIG.12

FIG.13

EP 4 651 579 A1

FIG.14

Single cell LTE/NR (S00)     Carrier aggregation (S10)     Dual connectivity (S20)

**gNB**
SDAP (S25)
PDCP (S30)
RLC (S35)
MAC (S40)
PHY (S45)

**UE**
PHY (S50)
MAC (S55)
RLC (S60)
PDCP (S65)
SDAP (S70)

**gNB**
SDAP
PDCP
RLC
MAC
PHY · · · PHY

**UE**
PHY · · · PHY
MAC
RLC
PDCP
SDAP

**gNB**
SDAP
PDCP
RLC
MAC
PHY

**MgNB**
RLC
MAC
PHY

**UE**
PHY
MAC
RLC
PDCP
SDAP

PHY
MAC
RLC

FIG.15

EP 4 651 579 A1

EP 4 651 579 A1

FIG.16

FIG.17

FIG.18

FIG.19

FIG.20

FIG.21

| DL slot | DL slot | DL slot | DL slot | UL slot |

gNB ——————————————————————————————————————→ Time

FIG.22

FIG.23

EP 4 651 579 A1

FIG.24

2505 — | UE processor | ⟷ | UE receiver | — 2500

| UE processor | ⟷ | UE transmitter | — 2510

FIG.25

FIG.26

## INTERNATIONAL SEARCH REPORT

| International application No. |
| --- |
| **PCT/KR2024/002951** |

| A. | CLASSIFICATION OF SUBJECT MATTER |
| --- | --- |

**H04W 52/02**(2009.01)i; **H04W 72/11**(2023.01)i; **H04W 72/12**(2009.01)i; **H04W 72/232**(2023.01)i; **H04W 76/28**(2018.01)i; **H04B 7/06**(2006.01)i; **H04B 7/08**(2006.01)i

According to International Patent Classification (IPC) or to both national classification and IPC

| B. | FIELDS SEARCHED |
| --- | --- |

Minimum documentation searched (classification system followed by classification symbols)

H04W 52/02(2009.01); H04L 1/16(2006.01); H04L 1/18(2006.01); H04L 27/26(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SPS PDSCH, DTX, 활성화 구간(active duration), 비활성화 구간(inactive duration), 중첩(overlap)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X<br>A | CATT. Discussion on cell DTX and DRX. R2-2300819, 3GPP TSG RAN WG2 Meeting #121. Athens, Greece. 17 February 2023.<br>See pages 3-4. | 1-2,5-6,9-10,13-14<br>3-4,7-8,11-12,15 |
| A | CN 110149173 A (TELECOMMUNICATIONS SCIENCE AND TECHNOLOGY RESEARCH INSTITUTE CO., LTD.) 20 August 2019 (2019-08-20)<br>See claims 1-4. | 1-15 |
| A | KR 10-2021-0003060 A (RELIANCE JIO INFOCOMM LIMITED) 11 January 2021 (2021-01-11)<br>See paragraphs [0093]-[0112]; and figure 5. | 1-15 |
| A | KR 10-2013-0058749 A (RESEARCH IN MOTION LIMITED) 04 June 2013 (2013-06-04)<br>See paragraph [0074]; and figure 10. | 1-15 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **10 June 2024** | **10 June 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/002951** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2016-0278075 A1 (LG ELECTRONICS INC.) 22 September 2016 (2016-09-22)<br>See paragraphs [0122]-[0133]; and figures 9-10. | 1-15 |

Form PCT/ISA/210 (second sheet) (July 2022)

**INTERNATIONAL SEARCH REPORT**
Information on patent family members

International application No.

**PCT/KR2024/002951**

| Patent document cited in search report | | | Publication date (day/month/year) | Patent family member(s) | | | Publication date (day/month/year) |
|---|---|---|---|---|---|---|---|
| CN | 110149173 | A | 20 August 2019 | CN | 110149173 | B | 05 March 2021 |
| | | | | WO | 2019-157950 | A1 | 22 August 2019 |
| KR | 10-2021-0003060 | A | 11 January 2021 | US | 11438757 | B2 | 06 September 2022 |
| | | | | US | 2021-0006963 | A1 | 07 January 2021 |
| KR | 10-2013-0058749 | A | 04 June 2013 | CA | 2809039 | A1 | 19 April 2012 |
| | | | | CA | 2809039 | C | 25 October 2016 |
| | | | | CN | 103125094 | A | 29 May 2013 |
| | | | | CN | 103125094 | B | 16 December 2015 |
| | | | | EP | 2591569 | A1 | 15 May 2013 |
| | | | | EP | 2591569 | B1 | 19 April 2017 |
| | | | | JP | 2013-539291 | A | 17 October 2013 |
| | | | | JP | 5572265 | B2 | 13 August 2014 |
| | | | | TW | 201230713 | A | 16 July 2012 |
| | | | | TW | I465065 | B | 11 December 2014 |
| | | | | US | 2012-0076077 | A1 | 29 March 2012 |
| | | | | US | 8797954 | B2 | 05 August 2014 |
| | | | | WO | 2012-050834 | A1 | 19 April 2012 |
| US | 2016-0278075 | A1 | 22 September 2016 | CA | 2818115 | A1 | 24 May 2012 |
| | | | | CA | 2818115 | C | 04 October 2016 |
| | | | | CN | 103221838 | A | 24 July 2013 |
| | | | | CN | 103222223 | A | 24 July 2013 |
| | | | | CN | 103222223 | B | 30 January 2018 |
| | | | | EP | 2641103 | A1 | 25 September 2013 |
| | | | | EP | 2641103 | B1 | 11 March 2020 |
| | | | | EP | 2642682 | A2 | 25 September 2013 |
| | | | | EP | 2642682 | B1 | 28 July 2021 |
| | | | | JP | 2014-503799 | A | 13 February 2014 |
| | | | | JP | 2014-504061 | A | 13 February 2014 |
| | | | | JP | 2016-178654 | A | 06 October 2016 |
| | | | | JP | 5926276 | B2 | 25 May 2016 |
| | | | | JP | 6208806 | B2 | 04 October 2017 |
| | | | | KR | 10-1882278 | B1 | 26 July 2018 |
| | | | | KR | 10-2012-0053941 | A | 29 May 2012 |
| | | | | US | 2013-0237247 | A1 | 12 September 2013 |
| | | | | US | 2013-0242923 | A1 | 19 September 2013 |
| | | | | US | 2015-0230239 | A1 | 13 August 2015 |
| | | | | US | 2015-0323644 | A9 | 12 November 2015 |
| | | | | US | 2016-0087772 | A1 | 24 March 2016 |
| | | | | US | 9042327 | B2 | 26 May 2015 |
| | | | | US | 9201134 | B2 | 01 December 2015 |
| | | | | US | 9247536 | B2 | 26 January 2016 |
| | | | | US | 9736826 | B2 | 15 August 2017 |
| | | | | US | 9936489 | B2 | 03 April 2018 |
| | | | | WO | 2012-067328 | A1 | 24 May 2012 |
| | | | | WO | 2012-067459 | A2 | 24 May 2012 |
| | | | | WO | 2012-067459 | A3 | 13 September 2012 |

Form PCT/ISA/210 (patent family annex) (July 2022)